# EUROPEAN PATENT SPECIFICATION

(11) **EP 0 469 785 B1**
(45) Date of publication and mention of the grant of the patent: **11.01.1995**
(21) Application number: 91306785.6
(22) Date of filing: 25.07.1991
(51) Int. Cl.: C08L 61/10, C08K 3/00, C08K 13/02

(54) **Retarders for curing/hardening resole resins**
Verzögerungsmittel für die Härtung von Resolharzen
Agent retardateur pour le durcissement des résines résols

(30) Priority: 02.08.1990 US 562206; 13.05.1991 US 698945
(43) Date of publication of application: 05.02.1992
(73) Proprietor: Borden, Inc., Columbus Ohio 43215 (US)
(72) Inventor: Gerber, Arthur Harry, Luisville, Kentucky 40245 (US)
(74) Representative: Wilkinson, Stephen John

(56) References cited:
- GB-A- 755 453
- US-A- 3 005 798
- US-A- 4 052 359

## Description

### Background of the Invention

This invention relates to methods and compositions for retarding the hardening of phenolic resole resin binder compositions which are hardened with lightburned magnesium oxide or magnesium hydroxide alone or together with an ester functional hardening agent. Such hardening can take place at about room temperature.

It is desirable to be able to easily control the rate of phenolic resole resin hardening, such as by being able to retard the hardening and maintain flowability, trowelability, and other working properties of the phenolic resin composition. This is particularly the case in warm climates and at higher temperatures.

Applicant has found that hardening of phenolic resole resins admixed with hardening quantities of light-burned magnesium oxide or magnesium hydroxide, either alone or together with an ester functional hardening agent can be retarded by use of materials which decrease the solubility of magnesium ions in the mixture.

Phenolic resole resins can be room temperature hardened by several means, such as: (1) contact with a strong acid; (2) contact with an ester functional hardening agent, particularly when the phenolic resole resin is highly alkaline; (3) contact with alkaline earth oxides or hydroxides such as calcium or magnesium oxides or hydroxides; (4) gassing of certain phenolics with chemicals such as amines; and (5) hardening with both a lightburned magnesium oxide or hydroxide hardening agent and an ester functional hardening agent. Use of strong acids is unsatisfactory because a basic filler is generally used in binder compositions and this causes the acid to be neutralized and become ineffective. Furthermore, strong acids can be corrosive. The amine and other gassing agents are generally toxic. Use of ester functional curing agents at a high pH (greater than about 12), which often serve as binders for foundry applications such as shaped foundry cores and molds, present problems because of the high alkalinity and alkali metal content such as that of sodium or potassium. The high pH causes concern for handling and final disposal to the environment. The high potassium or sodium concentrations are undesirable for certain uses such as that in polymer concrete or thermal bonding of glass or polyester fibers since high concentrations of alkali metals at a high pH lead to attack of such materials.

Lightburned magnesium oxide and magnesium hydroxide are well known room temperature (R.T.) hardening agents for phenolic resole resins. Furthermore, magnesium oxide and magnesium hydroxide are often used as the condensation catalysts for the manufacture of phenol formaldehyde resole resins from phenol and formaldehyde. Illustrative of references which disclose the use of magnesium oxide or magnesium hydroxide to harden phenolic resole resins in various types of compositions, there can be mentioned U.S. Patents: 2,869,191, 2,869,194 and 2,869,196, all of Jan. 20, 1959 to R.H. Cooper; 2,913,787 of Nov. 24, 1959 to R.H. Cooper; 3,666,703 of May 30, 1972 to T. Murata et al; 2,712,533 of July 5, 1955 to J.S. Mitchell; 2,424,787 of July 29, 1947 to W.H. Adams, Jr; and 4,794,051 of December 27, 1988 to M.K. Gupta. The 4,794,051 Gupta patent also mentions the use of a class of ester functional hardening agents namely, lactones, which are used together with the magnesium hardeners, but preferably in admixture with calcium hardener. The 2,869,194 Cooper patent also mentions that magnesium oxychloride and magnesium oxysulfate, which can be prepared by mixing magnesium oxide powder with an aqueous solution of magnesium chloride or its equivalent or magnesium sulfate or its equivalent, frequently provide shorter hardening times as compared to the magnesium oxide alone.

U.S. Patent 4,964,917 of Oct. 23, 1990; to G.S. Bobrowski et al. relates to a method for retarding the hydration of concrete by adding to the concrete a chelation agent for calcium. Such agents include certain phosphonic acids, citric or other hydroxycarboxylic acids. At the end of the retardation period, the retarded concrete is diluted with fresh concrete and then a hydration accelerating agent for the composition is added thereto. Accelerator hydration agents include various calcium salts, sodium thiocyanate, triethanolamine and glycolurils.

U.S. Patent 4,539,343 of Sept. 3, 1985 to T. Nishimura recites the use of compounds having a pKa of less than 9.5 at 25°C such as: salicylic acid, oxalic acid, malonic acid, and phosphoric acid together with a phenolic resin and magnesia clinker in order to eliminate reddish color and improve flexural strength of refractory materials.

Japanese Kokkai Tokyo Koho JP 60/90251 of 5/21/85 to Kyushu Refractories Co. Ltd. discloses the room temperature hardening of resole resins with magnesium oxide and ethylene carbonate.

EP-A-0377308 discloses the preparation of phenolic resole resins with alkali or alkaline earth metal compounds as the basic catalyst and the subsequent room temperature hardening of such resins with an esterified phenolic resole as the ester functional hardening agent together with various bases, including oxides and hydroxides of magnesium and calcium.

EP-A-0094165 has broad recitations which mention the use of various alkaline materials including magnesium oxide (magnesia) for condensing phenol and formaldehyde to form phenol-formaldehyde resins and for further increasing the alkalinity of such resins which use ester functional agents for hardening the phenolic resin. EP-A-0243172 has recitations similar to those of the above-mentioned 0094165 publication.

U.S. Patent Application Ser. No. 288,090, which was filed on December 22, 1988 with A.H. Gerber as inventor, discloses the use of lithium ion generating alkalizing agents in resole resin binder compositions which, when hardened by an ester functional hardening agent, exhibit tensile and compressive strengths superior to that obtained from compositions using sodium or potassium ion generating alkalizing agents.

U.S. Patent 4,011,186 of March 8, 1977 to Higgenbottom as well as 4,216,295 of August 5, 1980 to Dahms relate to phenolic resoles catalyzed with alkaline earth metal hydroxides and neutralized with oxalic acid or its acid salts which provide stable, inert, insoluble oxalate salts dispersed in said resole and, additionally increases the viscosity of the resole resin.

U.S. Patent 3,624,247 of Nov. 30, 1971 to Gladney et al relates to the removal of residual calcium catalyst used in the production of phenolic resins. The residual calcium catalyst is removed by treatment with an alkaline solution of an ammonium salt which forms an insoluble salt with calcium upon pH adjustment. Soluble ammonium compounds used in the process of the 247 patent are listed as sulfate, phosphate, and carbonate.

U.S. Patents Re 32,720 of July 26, 1988 and Re 32,812 of Dec. 27, 1988 (P.H.R.B. Lemon et al) are further illustrative of the literature which discloses room temperature hardening of highly alkaline phenolformaldehyde resole resins with an ester curing agent. U.S. Patent 4,961,795 (Detlefsen et al) shows the use of aliphatic alcohols to moderate or retard the hardening of phenolic resole resins with ester functional hardening (curing) agents.

### SUMMARY OF THE INVENTION

It has now been found that the room temperature hardening of a phenolic resole resin admixed with lightburned magnesium oxide or magnesium hydroxide, either alone or together, with an ester functional hardening agent, can be retarded with materials which retard the hardening activity of the lightburned magnesium oxide or magnesium hydroxide in the mixture. Lightburned magnesium oxide and magnesium hydroxide are also referred to herein as magnesium hardening agents.

In one aspect of the invention, binder compositions and methods for preparing binder compositions having an extended work life are provided by mixing the hardenable phenolic resole resin with a magnesium hardening agent alone or together with an ester functional hardening agent and a retarder and optionally a calcium containing hardening agent such as calcium oxide, calcium hydroxide, and calcined dolomite. The binder compositions are liquids or at least flowable at room temperature. Further, such methods and compositions can involve both a room temperature and a thermal cure. Mixing the flowable binder composition with an aggregate produces a raw batch composition.

In another aspect of the invention, the retarder used in compositions and methods of this invention is a material which further cross-links the phenolic resin upon thermal curing. Such materials include melamine or amino acids.

In another aspect of this invention, methods and compositions are provided wherein a retarder is mixed with a phenolic resole resin, a magnesium hardening agent, with or without an ester functional hardening agent, in order to increase the working time before substantial viscosity increase of resin occurs and the mixture is then thermally cured.

Other aspects of this invention involve a hardenable phenolic resole resin, a magensium hardening agent, alone or together with an ester functional hardening agent and a retarder and optionally aggregate, fillers, and other additives or modifiers wherein the magnesium hardening agent is a mixture of lightburned magnesium oxides having a high and a low surface area.

Other aspects of the invention include compositions and methods of this invention involving various fillers, aggregates, shaped articles as well as binders having low sodium and potassium contents.

Other aspects of this invention include the preparation of shaped refractory articles. In the case of monolithic refractories, a liquid slurry of a binder-aggregate composition of this invention with extended work life is placed in a vibrating mold and the composition is permitted to harden in the mold. Such ambient temperature hardening can optionally be followed with thermal cure.

Additional aspects of the invention provide for polymeric concrete compositions which have extended trowelability and the use of compositions and methods of this invention for making coated abrasives as well as coated abrasives made by such methods.

### Advantages

The processes and compositions of this invention provide a means for retarding the rate of hardening of phenolic resole resins over a wide temperature range such as about 60°F to 120°F by use of small amounts of various chemicals which retard the hardening activity of lightburned magnesium oxide or magnesium hydroxide, used as a magnesium hardening agent, such as by decreasing the solubility of magnesium in the binder. One of the variables affecting the rate of hardening of phenolic resole resins is temperature. Higher temperatures increase the rate of hardening. Therefore, by use of the retarders of this invention, the hardening rate can be retarded over a wide range of temperatures such as room or ambient temperatures, particularly in warmer climates or work places which attain higher temperatures. Such retardation provides for decreased viscosity build up over time and an increased working life for the resin.

The methods and compositions of this invention can also affect reaction rate of the phenolic resole resin by selection of surface area of the lightburned magnesia to be used, by choice of the specific retarder, and, optionally, by choice of the specific ester as well as the quantities of the hardeners and retarder.

Several applications where increased flow, i.e., decreased viscosity over time, and increased working life of phenolic resole resins are particularly advantageous include:
(a) formulations for coated abrasive applications where room temperature stability of formulated resin is desirable for decreasing scrap of formulated resin and development of a good bond between the resin, abrasive, and backing prior to a thermal cure;
(b) polymer concrete where increased flow leads to improved compaction and the filling of molds, etc. and surface finishing such as troweling;
(c) manufacture of refractory bricks where significant extension of mix life, e.g., at least 48 hours, is obtained for pressing of the refractory bricks prior to thermal or oven curing; and
(d) increased flow for castable refractory applications. This increased flow provides higher density and higher strength for the room temperature hardening in preparation for thermal curing and optionally carbonization after the thermal cure. This is particularly the case for larger shapes which require more time for preparation.

Preferred methods and compositions of this invention utilize an ester functional hardening agent together with the magnesium hardening agent since the reaction rate of phenolic compositions are strongly affected when an ester is used with the lightburned magnesia or magnesium hydroxide hardener together with a retarder. Furthermore, the hardened phenolic resoles, which use both a magnesium hardening agent and an ester functional hardening agent, have greater compressive and tensile strength as well as greater resistance to aqueous organic acids as compared to phenolic resoles which have been hardened only with the lightburned magnesium oxide or magnesium hydroxide.

Another advantage of the retarders of this invention is that although the hardening of the resin is retarded, the resin eventually hardens or cures to about the same or greater compressive and tensile strength as compared to resins which did not contain a retarder. Furthermore, other properties of the final compositions are not adversely affected.

The methods and compositions of this invention possess many advantages as compared to curing of phenolic resole resins with esters alone as shown in U.S. Re 32,720 of July 26, 1988 to Lemon et al and U.S. Re 32,812 of December 27, 1988 to Lemon et al. The processes and resins of those patents require alkali metal hydroxides and for practical applications have a pH of greater than 12. In contrast to those patents, the present invention involves substantially lower pH values, and there is no need for alkali metal hydroxides or salts. The compositions and methods of the present invention have many advantages over those which do require high alkalinity, e.g., pH of 10 or 12 or more, particularly in view of the high alkali metal concentration required for the highly alkaline compositions. Illustratively, the compositions of the present invention have: Better shelf stability; improved stability of resin color in relation to time and exposure to the atmosphere; lower viscosities at equal phenolic solids levels which, among other things, increases wettability of aggregate or substrate which, in turn, increases bond strength; safer material and waste handling properties; a higher density and less porosity on curing at the higher solids levels for resin, compositions, e.g., such as those containing aggregate which, in turn, increases strength and resistance to solvents and aqueous media; and improved stability with aggregates normally attacked by sodium or potassium at a high pH and improved stability with glass or polyester fiber. Excess alkali can result in strength loss, e.g., see Lemon et al Re 32,812, Table 4, wherein the effect of KOH/phenol molar ratio shows steady decrease in compressive strength of resoles as the mole ratio is increased from 0.68 (5032 psi) to 1.02 (4271 psi). In contrast to this, an excess of the magnesium hardener can increase strength and also insolubility of the final composite because of the divalent cross linking by magnesium in comparison with chain termination by use of sodium or potassium alkalies.

### Detailed Description of the Invention

### Lightburned Magnesium Oxide and Magnesium Hydroxide Hardening Agents

The term "retarder" as used herein refers to a material which retards the hardening activity of lightburned magnesium oxide or magnesium hydroxide in the methods and compositions of this invention such as the hardenable binders which contain the phenolic resole resin, a magnesium hardener, and optionally an ester functional hardening agent. Decreasing the solubility of the magnesium hardener slows or delays the hardening of the resin.

The hardenable binder compositions of this invention which contain a phenolic resole resin, magnesium hardener and optionally an ester functional hardening agent but without a retarder will generally be hard within about 24 hours of standing at 75°F (24°C). Although such hardening can also be referred to as "curing", the "hardening" or "curing" with hardening agents does not develop the tensile and compressive strengths of a thermal cure.

By the term "room temperature hardening" we mean the hardening of compositions of this invention at temperatures of 60°F to 90°F (16°-32°C), particularly 65°F to 80°F (18°-27°C). However, the use of retarders in the processes and compositions of this invention retard the hardening of compositions of this invention at lower and higher temperatures such as 60°F to 120°F (16°-49°C). In additional to room temperature hardening, or hardening at ambient temperatures such as those of 60°F to 120°F (16°-49°C), the compositions of this invention can be thermally cured after hardening by the hardening agents or the compositions can be thermally cured prior to such hardening. The term "thermal curing" as used herein means curing of the composition at a temperature of at least 170°F (77°C) and generally at a temperature of at least 212°F (100°C).

The term magnesium hardening agents, or simply magnesium hardeners, as used herein, are magnesium hydroxide or lightburned magnesium oxide which is also referred to herein as lightburned magnesia. Lightburned magnesium oxide is the preferred magnesium hardening agent because magnesium hydroxide gives lower strengths to the hardened compositions.

Small quantities of calcium hydroxide, calcium oxide, or calcined dolomite (doloma) can also be added as a hardening agent. However, the use of calcium oxide, calcined dolomite, or calcium hydroxide alone or in high quantities together with the magnesium hardeners have serious shortcomings. Thus, calcium based oxides, including calcined dolomite, or hydroxides are highly basic and react too quickly, thus greatly reducing the mix working time. However, minor quantities, i.e., less than 50% by weight based on the weight of the magnesium hardening agent, of these calcium containing compounds, when mixed with the magnesium hardening agents, can be used to replace an equivalent weight of the magnesium hardening agents. Preferably such minor quantities do not exceed about one-fourth of the total weight of the magnesium oxide or magnesium hydroxide hardening agent.

Reactivity and surface area of magnesium oxide (magnesia) differ greatly depending on the procedure used for manufacture of the magnesia. Lightburned grades of magnesium oxide are calcined at temperatures ranging from 1600 to 1800°F (871°-982°C). Hardburned grades are calcined at temperatures ranging from 2800 to 3000°F (1538°-1649°C). Deadburned or periclase grade of magnesium oxide is calcined at temperatures of over 4000°F (2204°C). The lightburned grades are generally available in powder or granulated form while hardburned grades are available in kiln run, milled, or screened sizes. Periclase is generally available as briquettes and as screened or milled fractions. There are large differences in surface areas for the various magnesias. Thus, lightburned magnesia has a surface area of 10 to 200 or more square meters per gram (m²/g). Hardburned magnesia has a surface area of about one square meter per gram, whereas deadburned magnesia has a surface area of less than one square meter per gram. Magnesia which is conventionally used as a refractory aggregate is the deadburned or periclase magnesia. Magnesia products having different surface areas can be obtained from the Martin Marietta Company under the designator of Mag Chem Magnesium Oxide Products. Illustratively, Mag Chem 30 has a surface area of about 25 square meters per gram. Mag Chem 50 has a surface area of about 65 square meters per gram whereas Mag Chem 200D has a surface area of about 170 square meters per gram.

One of the variables for viscosity increase, formation of gel and subsequent hardening of a phenolic resole resin is dependent on the surface areas of the magnesium hardening agent, as defined herein. Typically, the lightburned magnesium oxide will have a surface area of at least 10 square metres per gram (10 m²/g), more typically from 10 to 200 m²/g and preferably from 25 to 100 m²/g. Lightburned magnesium oxide, having a surface area of less than about 25 square meters per gram, is slow acting and generally will not be used when it is desired to have the binder composition cure in a relatively short period of time at temperatures below about 120°F (49°C). However, for some applications, such as for coated abrasives, it is desired that the lightburned magnesia be relatively slow acting and surface areas of 10 to 25 square meters per gram (10 m²/g to 25 m²/g) are preferred. On the other hand, lightburned magnesia having a higher surface area, such as about 65 square meters per gram (m²/g) and above, will harden the same binder composition in a shorter period of time. For many applications, using magnesia having a surface area of 25 to 65 square meters per gram is suitable. Surface areas of less than 25 square meters per gram will generally be used when it is desired to substantially prolong the open time or working time of the binder. Magnesium hydroxide, if used, will typically have a surface area of from 10 to 50 m²/g. The phenolic resole resins of this invention contain one or more volatile solvents, including water. Loss of solvent in the thermally cured compositions leads to increased porosity and permeability to liquids and decrease of strength. One means for obtaining the higher strength and less porosity is to use a larger quantity of lightburned magnesium oxide hardener. However, this will shorten the time of viscosity build up and gelation. It has now been found that a mixture of lightburned magnesium oxides having at least two different surface areas can provide the improved results such as increased strength without substantially accelerating the viscosity build up. To attain such improved results, the surface area of one portion of the mixture is at least 50 square meters per gram of the magnesia hardener and the other portion has a surface area of from about 10 to 25 square meters per gram. One part, by weight, of the high surface area hardener is mixed with from about 0.5 to 4 parts and preferably 1 to 3 parts of the hardener having the lower surface area for such improved magnesia hardener. By following this method of using different surface areas, the room or ambient temperature gelation can take place in about the same time as with the higher surface area hardener used alone, even though there is substantially more of the hardener present but the compressive strength of the composition on curing is substantially increased with less porosity and permeability. Furthermore, the fire retardency of compositions having the increased quantity of the magnesia is also improved. Compositions containing the lightburned magnesia of different surface areas will contain a retarder of this invention, optionally an ester functional hardening agent as well as fillers, modifiers, aggregate, and other additives at the same concentration as with lightburned magnesium oxide which does not contain a mixture of the hardener having different surface areas.

The quantity of lightburned magnesium oxide or magnesium hydroxide which is used in this invention as a hardener is an amount sufficient to increase the rate of gelation or hardening of the phenolic resole resin. This quantity can vary over a wide range. The quantity of the magnesium hardener used will vary depending on whether or not an ester hardening agent is also used in the composition, the surface area of the lightburned magnesium oxide, the specific ester hardening agent, the quantity of magnesium and ester hardening agent or agents, the temperature, and the desired result. Thus, the lightburned magnesium oxide or magnesium hydroxide hardening agent will generally vary from about 2% to 40% by weight of the resin and particularly from about 5% to 35% by weight of the resin in the various compositions and methods of this invention. However, when mixtures of lightburned magnesium oxide having different surface areas is used, the quantity of the lightburned magnesium oxide preferably varies from about 5% to 50% or more by weight of the resin. When the lightburned magnesium oxide or magnesium hydroxide hardener is used without the ester hardening agent, it is preferred that from about 10% to 40% by weight be used, based on the weight of the resin, and particularly 15% to 30% by weight based on the weight of resin. When the lightburned magnesium oxide or magnesium hydroxide is used together with an ester functional hardening agent, it is preferred that the quantity of the lightburned magnesium oxide or magnesium hydroxide hardening agent vary from about 2% to 30% by weight of the resin, and particularly, from about 5% to 20%. The preferred magnesium hardening agent is lightburned magnesium oxide since magnesium hydroxide is a slower hardening agent.

### The Ester Hardening Agent

The ester functional hardening agent, also referred to as ester functional curing agent, accelerates the hardening of the resole when used with the magnesium hardeners while at the same time use of both magnesium hardening agent and ester hardening agent mixed with the resole resin provide a hardening system which is very sensitive to small quantities of the retarders of this invention. Mixtures of phenolic resole resins and an ester functional hardening agent in the absence of lightburned magnesia, or other added alkali, will not harden at 70°F within several days or longer. The ester functionality for hardening of the phenolic resole resin can be provided by lactones, cyclic organic carbonates, carboxylic acid esters, or mixtures thereof.

Generally, low molecular weight lactones are suitable as the ester functional hardening agent, such as beta or gamma-butyrolactone, gamma-valerolactone, caprolactone, beta-propiolactone, beta-butyrolactone, beta-isobutyrolactone; beta-isopentyllactone, gamma-isopentyllactone, and delta-pentyllactone. Examples of suitable cyclic organic carbonates include, but are not limited to: propylene carbonate; ethylene glycol carbonate; 1,2-butanediol carbonate; 1,3-butanediol carbonate; 1,2-pentanediol carbonate; and 1,3-pentanediol carbonate.

The carboxylic acid esters which can be used in this invention include phenolic esters and aliphatic esters.

The aliphatic esters are preferably those of short or medium chain length, e.g., about 1 to 10 carbon mono-or polyhydric, saturated or unsaturated alcohols with short or medium chain length, e.g., about 1 to 10 carbon aliphatic, saturated or unsaturated carboxylic acids which can be mono- or polycarboxylic. The preferred aliphatic esters are those of alkyl, mono-, di-, or trihydric alcohols with alkyl, or mono-, or diunsaturated acids which can be mono-, di-, or tricarboxylic. The carboxylic acids can be substituted with hydroxy, cyano, chloro, or bromo groups.

As to aromatic esters, such esters can be obtained by esterifying the aromatic, e.g., phenolic, group or groups of a mono- or polyhydric aromatic phenol to prepare a formate or acetate ester of such aromatic compound. Additionally, the aromatic ester can be an esterified phenolic compound containing one or more phenolic hydroxyl groups and/or one or more esterified phenolic hydroxyl groups and further containing one or more esterified methylol groups positioned ortho and/or para to a phenolic hydroxyl group or esterified phenolic hydroxyl group. Such phenolic esters and their method of manufacture are disclosed in EP-A-0377308.

It will be understood that the esterified phenolic compound used may be a mono-, a di- or a polyesterified methylolated mono-, di- or polynuclear phenol wherein at least one esterified methylol group is attached to an aromatic ring carbon atom ortho or para to a phenolic hydroxyl group or esterified phenolic hydroxyl group. The acid portion of the phenolic esters can be the same as those of the aliphatic esters.

Specific carboxylic acid esters include but are not limited to: n-butyl formate; ethylene glycol diformate; methyl and ethyl lactates; hydroxyethyl acrylate; hydroxyethyl methacrylate; n-butyl acetate; ethylene glycol diacetate; triacetin (glycerol triacetate); diethyl fumarate; dimethyl maleate; dimethyl glutarate; dimethyl adipate; 2-acetyloxymethyl phenol; 2-methacryloyloxymethyl phenol; 2-salicyloyloxymethyl phenol; 2-acetyloxymethyl phenol acetate; 2,6-diacetyloxymethyl p-cresol; 2,6-diacetyloxymethyl p-cresol acetate; 2,4,6-triacetyloxymethyl phenol; 2,4,6-triacetyloxymethyl phenol acetate; 2,6-diacetyloxymethyl phenol acetate; 2,2',6,6'-tetraacetyloxymethyl Bisphenol A; and 2,2',6,6'-tetraacetyloxymethyl Bisphenol A diacetate. Also suitable are: cyanoacetates derived from 1 to 5 carbon atom aliphatic alcohols; formates and acetates of benzyl alcohol, alpha,alpha-dihydroxyxylenols, phenol, alkyl substituted phenols, dihydroxybenzenes, bisphenol A, bisphenol F, and low molecular weight resoles. At times, it is advantageous to use mixtures of the ester functional hardening agents.

Gaseous esters, such as C₁ to C₂ alkyl formates, can be used as ester functional hardening agents in low density articles or when applying the binders to fabric or paper substrates. When gaseous esters are used as hardening agents, the ester is generally not mixed with the resin binder and aggregate but rather is supplied as a gas to the shaped article as is well known in the art.

The ester functional hardening agent is present in an amount sufficient to increase the tensile and compressive strength of the hardened composition. Such quantity of the ester also increases the rate of hardening of the phenolic resole resin in the presence of the magnesium hardener. This increase in rate is evident both with and without the use of a retarder. Furthermore, for room temperature hardening, the magnesium hardens the resin through ionic bonding. In contact with a weak acid the hardened composition held together only with ionic bonding will lose strength. Whereas the use of an ester provides covalent bonds in addition to the ionic bonds of the magnesium hardener. The covalent bonds provided by the ester are not affected or at least much less affected by weak acids. The quantity of ester will vary over a broad range such as that of about 5% to 40% by weight of the phenolic resole resin and preferably from about 10% to 25% by weight of the resin. As with said magnesium hardening agent, the exact quantity will depend on the particular ester hardener used, the amount and specific magnesium hardener used, the temperature at which the composition is used or stored, and desired results.

### The Phenolic Resole Resin

A broad range of phenolic resole resins may be used in this invention. These can be phenol formaldehyde resole resins or those wherein phenol is partially or completely substituted by one or more phenolic compounds such as cresol, resorcinol, 3,5-xylenol, bisphenol-A, or other substituted phenols and the aldehyde portion can be partially or wholly replaced by acetaldehyde or furaldehyde or benzaldehyde. The preferred phenolic resole resin is the condensation product of phenol and formaldehyde. Resole resins are thermosetting, i.e., they form an infusible three-dimensional polymer upon application of heat and are produced by the reaction of a phenol and a molar excess of a phenol-reactive aldehyde typically in the presence of an alkali or alkaline earth metal compound as condensing catalyst. Preferred phenolic resole resins used in this invention have less than about 1% and preferably not more than 0.5% by weight of water soluble sodium or potassium. Typically, the resole resin will be a phenol-formaldehyde resin produced by reacting phenol and formaldehyde in a molar ratio (phenol: formaldehyde) within the range of from about 1:1 to 1:3. A preferred molar ratio for use in this invention ranges from about one mole of the phenol for each mole of the aldehyde to about 1 mole of phenol for 2.2 moles of the aldehyde and particularly a range of phenol to aldehyde of 1 to 1.2 to 1 to 2. The phenolic resole resin will usually be used in solution.

The pH of the phenolic resole resin used in this invention will generally vary from about 4.5 to 9.5 with a pH of 5 to 8.5 being preferred. Free phenol will typically be 2% to about 25% by weight of the resin with preferred levels being 5% to about 12%. The molecular weight of the resin will vary from about 200 to 5000 weight average molecular weight with 300 to 2000 being preferred. All other things being equal, higher molecular weights and lower free-phenol will provide shorter gel or hardening time and increase strength development. The weight average molecular weight (Mw) is measured using gel permeation chromatography and phenolic compounds and polystyrene standards. The sample molecular weight to be measured is prepared as follows: The resin sample is dissolved in tetrahydrofuran and slightly acidified with 1N hydrochloric or sulfuric acid and dried over anhydrous sodium sulfate. The salts which result are removed by filtration and the supernatent liquid run through a gel permeation chromatograph.

The resin solids in the resole resin can vary over a broad range, such as that of from 50% to 90% by weight of the phenolic resole resin. Preferably, the resin solids vary from 50% to 80% by weight of the phenolic resole resin. The viscosity of the phenolic resole resin, or simply the resin, can vary over a broad range such as that of from 100 to 4,000 cps (0.1-4 Pa s) at 25°C. Preferably, the viscosity varies from 200 to 3,000 cps (0.2-3 Pa s) at 25°C and particularly from 250 to 2,000 cps (0.25-2 Pa s) at 25°C. The viscosity measurements herein are given in centipoises (cps) as measured by a Brookfield RVF viscometer at 25°C or by Gardner-Holt viscosities at 25°C. The Gardner-Holt viscosities which are in centistokes are multipled by the specific gravity (generally 1.2) to give the cps at 25°C.

The quantity of resin based on aggregate, when aggregate is used for the raw batch compositions, can vary over a broad range, preferably from 3% to 20% by weight of resin based on the weight of aggregate and particularly from 5% to 15% of resin based on the weight of aggregate.

The liquid portion of the resin is water or water together with a non-reactive solvent. The resin can include a number of optional modifiers or additives such as silanes, hexamethylene tetramine or urea. Solvents in addition to water can be selected from alcohols of one to five carbon atoms, diacetone alcohol, glycols of 2 to 6 carbon atoms, mono- and dimethyl or butyl ethers of glycols, low molecular weight (200-600) polyethylene glycols and methyl ethers thereof, phenolics of 6 to 15 carbons, phenoxyethanol, aprotic solvents, e.g., N,N-dimethylformamide, N,N-dimethylacetamide, 2-pyrrolidinone, N-methyl-2-pyrrolidinone, dimethyl sulfoxide, tetramethylene sulfone, hexamethylphosphoramide, tetramethyl urea, methyl ethyl ketone, methyl isobutyl ketone, cyclic ethers such as tetrahydrofuran and m-dioxolane, and the like.

Typical water contents for the resins used in this invention will vary from about 5% to 20% by weight of the resin.

Organofunctional silane adhesion promoters are recommended for use when compositions of this invention include fibers and siliceous aggregates, such as silica sands, crushed rock and silicates, and alumina based aggregates.

The organofunctional silanes are used in a quantity sufficient to improve adhesion between the resin and aggregate. Typical usage levels of these silanes are 0.05 to 1.5%, more usually 0.1 to 1%, based on resin weight. Illustrative of silanes that are useful are those represented by the generic Formula 1:

Formula 1: (RO)₃-Si-CH₂-CH₂-CH₂-X

where
R = CH₃, or C₂H₅
x = Cl,-NHR¹, 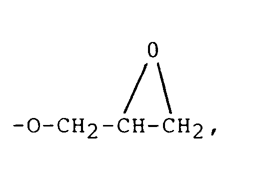
or -SH
and
R¹ = H,CH₃,C₆H₅ (phenyl),-CH₂CH₂NH₂, 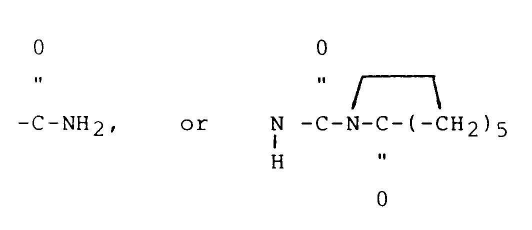
Examples include gamma-aminopropyl triethoxysilane and 3-glycidoxypropyltrimethoxy silane.
Other useful silanes not represented by Formula 1 are 2-(3,4-epoxycyclohexyl)ethyltrimethoxysilane, bis(trimethoxysilylpropyl)ethylenediamine, N-trimethoxysilylpropyl-N,N,N-trimethylammonium chloride and secondary amino silane ((RO)₃Si-CH₂CH₂CH₂)₂NH.

### The Retarders

The retarders used in this invention are materials which decrease the solubility or solubilization of magnesium in the hardenable binders which contain the phenolic resole resin, a magnesium hardener, and optionally an ester functional hardening agent. Decreasing the solubility of the magnesium hardener slows or delays hardening of the resin. As mentioned in the Background of the Invention for this application, U.S. Patent 4,961,795 shows the use of aliphatic alcohols for retarding or moderating the hardening of phenolic resole resins. However, the retarders as referred to in the instant application are materials which decrease the solubility of magnesium in the hardenable binder. The retarders of this invention decrease the amount of soluble magnesium in the binder as compared to such binder without the retarder. The aliphatic alcohols retard hardening by a different mechanism.

A wide range of materials have been found which decrease the solubility of magnesium in the compositions of this invention and retard the hardening.

In the case of ionizable compounds, it is the anion, e.g., F-, which determines whether a material is a retarder in the present invention. Thus the cation, e.g., Na⁺,H⁺,Li⁺ does not change the anion from being a retarder, although it may have some effect on the amount of retardation. Salts containing the following cations are particularly suitable in the retarder compounds of this invention: sodium, potassium, lithium, magnesium, ammonium, and lower alkyl substituted ammonium such as those having from 1 to 4 can atoms in each alkyl group. However, some compounds which do not appear to ionize are also retarders.

The retarders used in this invention have some solubility in the binder compositions. Such solubility can be different than that in water, particularly when the reaction medium contains substantial quantities of ester and less than about 15% water. For general purposes, however, the solubility in water of such retarders is at least 0.1% by weight at 25°C. The retarders can be in the acid form, e.g., citric acid, or in a salt form. When the acid form is used in the presence of the magnesium hardeners, the salt of the acid is formed in situ, e.g., the magnesium salt. When added to a phenolic resole resin and hardener composition of this invention, the acid or salt provides the appropriate anion.

Illustrative of retarder anions or retarder compounds, there can be mentioned:
(a) Fluoride and bifluoride anions such as that supplied by hydrofluoric acid, sodium bifluoride, and other fluoride or bifluoride salts;
(b) tetraalkoxy silanes having from 1 to 3 carbon atoms in each alkoxy group as well as partially prehydrolyzed tetraalkoxy silanes of 1 to 3 carbon atoms in each alkoxy group wherein the degree of hydrolysis of such compound can vary over a wide range such as up to about 60% and wherein the alkoxy groups of each molecule can be the same or different;
(c) citrate anions such as that provided by citric acid and salts thereof;
(d) tartrate and aspartate anions such as that from tartaric, and aspartic acid and salts thereof.
(e) oxalate anions such as that provided by oxalic acid and salts thereof;
(f) phosphate anions such as that provided by phosphoric acids and salts thereof;
(g) anions of mono-aminomonocarboxylic acids having from about 2 to 6 carbon atoms and salts thereof;
(h) anions of monoamino polycarboxylic acids such as those having from about 4 to 6 carbon atoms and salts thereof;
(i) anions of iminodi (lower alkyl of 2 to 5 carbon atoms) acids and salts thereof;
(j) organic phosphonic acids such as di-, and polyphosphonic acids, amine derivatives thereof, and salts thereof;
(k) ethylenediaminetetraacetic acid (EDTA);
(l) melamine; and
(m) anions of amino-benzoic acids and salts thereof.

Preferred retarders are compounds selected from the group consisting of: (a) a compound which provides an anion of fluoride, bifluoride, citrate, tartrate, aspartate, oxalate, phosphate, glutamate, malate, aminoacetate, aminopropionate, iminodiacetate, iminodipropionate, and aminobenzoate; (b) a tetraalkoxy silane having from 1 to 3 carbon atoms in each alkoxy group; and (c) a partially hydrolyzed, e.g., up to about 60%, tetraalkoxy silane having from 1 to 3 carbon atoms in each alkoxy group.

It can be seen from the above listing of retarders that many of them are cheating agents which decrease the solubility of magnesium in the binder compositions. However, not all cheating agents decrease such solubility and thus all cheating agents are not retarders.

It should be noted that the presence of calcium cations available to react with the fluoride anions can reduce or even eliminate the fluoride or bifluoride retarder activity. It is believed that this is due to the formation of insoluble fluoride salts of calcium. Therefore, water soluble calcium compounds should be avoided with fluorides or bifluorides or substantially larger quantities of these retarders should be used. Illustrative of undesirable calcium sources for these fluorides there can be mentioned the calcium present in the phenolic resin formed with a calcium catalyst, and calcium containing hardeners of phenolic resole resins.

A preferred group of cations which combine with anions to form the retarder compounds are the hydrogen cation, e.g., such as in hydrofluoric and citric acid and cations of the alkali metals, ammonium, and lower alkyl substituted ammonium having from 1 to 4 carbon atoms in each alkyl group, which form salts of retarder anions.

Illustrative of specific retarder compounds, there can be mentioned: ammonium bifluoride; ammonium fluoride; ammonium phosphate (monobasic); lithium fluoride; phosphoric acid; potassium fluoride; sodium fluoride; sodium phosphate (monobasic); sodium phosphate (tribasic); citric acid; sodium citrate; tetraethoxy silane; tetrapropoxy silane; diethoxydipropoxy silane; glutamic acid; sodium glutamate; melamine; oxalic acid; iminodiacetic acid; iminodipropionic acid; sodium iminodiacetate; potassium tartrate; hydroxy or amino succinic acids such as tartaric acid, malic acid and aspartic acids; aminoacetic acid (glycine); 2-aminopropionic acid (alpha alanine); 3-aminopropionic acid (B-alanine); phosphoric acid; phosphonic acids such as 1-hydroxyethylidene-1,1-diphosphonic acid, aminotri (methylenephosphonic acid), hexamethylenediamine tetra (methylenephosphonic acid), hexamethylenediamine tetra (methylene phosphonic acid), and diethylenetriaminopenta (methylene phosphonic acid).

Other retarders that are useful in this invention include: azelaic acid; salicylamide; glyoxal; salicylic acid; sulfanilic acid (p-aniline sulfonic acid); m-aniline sulfonic acid; o-aniline sulfonic acid; aniline; substituted aniline having up to one N- alkyl substituent and up to 2 alkyl substituents on the aromatic ring wherein each alkyl has from 1 to 3 carbon atoms, e.g., 2,6-dimethylaniline; 2,6-diethylaniline; 2,6-diisopropylaniline; 3,5-diethylaniline, N-methylaniline, N-ethyl-2-methylaniline, N-ethyl-3,5-dimethylaniline; p-methylaniline; catechol; as well as salts of the acidic or basic retarders to the extent that the salt forming agent is not one which causes the retarder to lose its retarder activity such as in the case of a compound which acts to accelerate the hardening of the resin to the extent that the salt which is formed loses its activity as a retarder. Basic addition salts of acidic retarders such as salicylic acid are preferably those of amino, ammonium, and alkylammonium compounds.

Use of a retarder provides added working time and mix life for the resin-hardener mixture while retaining adequate strength development. Due to the longer mix and working time provided by the retarder, the hardened mixture often has less voids and greater ultimate strength.

The quantity of retarder used in this invention is an amount or quantity sufficient to decrease the rate of viscosity increase, gelation and hardening of the resin and such quantity can vary over a wide range depending on the activity of the particular retarder, the amount of retardation desired, the room or ambient temperature, and the type and quantity of magnesium and ester hardening agents. Thus, the minimum quantity of retarder is generally about 0.05%, more preferably about 0.1%, by weight based on the weight of the phenolic resole resin. Generally the quantity of the retarder will not exceed 10% by weight of the resin and preferably will not be greater than 5% by weight. With fluorides and bifluorides as little as about 0.05% by weight is effective. With other retarders, a higher amount is generally needed. For tetraalkoxy silanes and hydrolyzed tetraalkoxy silanes the preferred quantity of retarder is from about 0.5 to 2% based on weight of resin. With other retarders it is preferred to use at least 0.3% and, particularly, at least 0.5% by weight of the resin.

Another preferred group of retarders are those which contribute to cross-linking of the phenolic resole resin upon thermal curing. Illustrative of such retarders there can be mentioned those having reactive amino groups, such as the amino acids, aminobenzoates, and melamine. Such crosslinking of the resin improves tensile and compressive strength of the compositions. By the term "reactive amino groups" is meant a total of at least 2 sites on one or more amino groups of a compound which will effectuate cross linking with the phenolic resole resin, e.g., at least one primary amino group or at least two secondary amino groups on a retarder compound.

### Fillers, Aggregates, and Modifiers

The compositions of this invention can include fillers, modifiers, and aggregates which are conventionally used with phenolic resole resins. The aggregate material when used in the compositions of this invention may be any material which may be bound with a phenolic resole resin binder to form a shaped article The aggregate material may be a particulate material such as that in granular, powder, flake, or fibrous form. Suitable aggregate materials include but are not limited to: alumina, zirconia, silica, zircon sand, olivine sand, silicon carbide, silicon nitride, boron nitride, bauxite, quartz, chromite, and corundum. For certain applications, low density aggregate materials such as vermiculite, perlite, and pumice are preferred. For other applications, preferable high density aggregates include: limestone, quartz:, sand, gravel, crushed rock, broken brick, and air cooled blast furnace slag. Sand, gravel, and crushed rock are preferred aggregates in polymeric concrete. Fillers such as calcium carbonate, kaolin, mica, wollastonite, and barites can be used in quantities of up to about 50% by weight of the formulated resin product. The quantity of such fillers can equal the quantity of the resin. Hollow microspheres of glass, phenolic resin, or ceramic can also be used in quantities of up to about 20% of the formulated resin product. Other optional modifiers, particularly in polymer concrete, include fibers such as steel, alkali resistant glass, polyester, polypropylene, carbon, silicon carbide, asbestos, wollastonite fibers, and aromatic polyamides such as KEVLAR aramid fiber, which is a trade mark of the DuPont company. The quantity of such fibers can vary over a wide range sufficient to improve the strength of the composition. When aggregate is used, the quantity of fiber may vary generally from about 2% to 5% by weight of the aggregate.

The raw batch compositions produced by combining the hardenable resin binder, aggregate, hardening agent or agents, and retarder may additionally comprise any of a number of optional modifiers or additives including non-reactive solvents, silanes, hexamethylenetetraamine, clays, graphite, iron oxide, carbon pitch, silicon dioxide, metal powders such as aluminium, magnesium, silicon, surfactants, dispersants, air detraining agents, and mixtures thereof. Air detraining agents such as antifoamers, e.g., dimethylpolysiloxane, can be employed in an amount sufficient to increase the strength of the composition. Such quantities can vary over a broad range such as from about 0.005% to 0.1% based on the weight of resin and preferably from about 0.01% to 0.05% based on the weight of resin. Illustrative of additional air detraining agents there can be mentioned: various acetylenic derivatives such as the Surfynols of Air Products and Chemicals, Inc., e.g., Surfynol DF-IIOL, Surfynol 104 and Surfynol GA; and various siloxanes such as dimethylpolysiloxane and dimethylsiloxane-alkylene oxide copolymers such as PS073 which is supplied by Hüls Petrarch Systems. In foundry applications and sand-binder overlays, or where silica sand is used as the aggregate, a preferred additive is a silane adhesion promoter, such as gamma-aminopropyl triethoxysilane or 3-glycidoxypropyltrimethoxy silane.

### Applications

The methods and compositions of this invention are particularly useful in: preparing shaped articles, polymer concrete, also referred to as resin-filled aggregate, for repair or protective overlay for concrete to provide resistance to acids, oils, and organic solvents; manufacture of precast shapes such as pipe, tile, wall panel, and the like, where hydrolytic, solvent, acid and heat resistance are desirable; and impregnated paper for use as auto oil and air filters. Furthermore, the binder compositions of this invention are suitable for bonding abrasive grits such as for use in coated and bonded abrasives.

Polymer concrete is formed by polymerizing a monomer, resin, or mixture thereof in the presence of an aggregate. Polymer concrete had its initial application in the repair of Portland Cement concrete. Today, they have many other uses as described herein above. The binder compositions of this invention are particularly advantageous for this use since the retarder provides extended trowelling or working time, the lack of high alkalinity and high sodium or potassium ion levels does not affect the aggregate and the composition can cure at room or ambient temperature in a reasonable time indoors or outdoors.

As mentioned hereinabove, the binder compositions of this invention are also particularly advantageous for use in the manufacture of coated abrasives. A primary reason for this is that the retarder provides extended shelf life to the completely formulated mixture. This cuts down on the number of resin formulated mixtures which need to be prepared. Working and storage time is limited in the absence of a retarder and during such working and storage time the viscosity increase of the resin impairs reproducibility of the coating thickness and strength of adhesive bond to the abrasive particles and backing material.

The abrasive materials used for coated abrasive articles are broken and pulverized glass, flint, emery, garnet, zirconia, and mainly aluminium oxide and silicon carbide. The backing for such abrasives can be Kraft paper, but in most cases special papers which have been modified with rubber, acrylic resin, and other polymers can be used. Anisotropic strength is preferred for belts. Specially woven cotton or linen fabrics can also be used. Fillers such as calcium carbonate, e.g., up to 100% by weight of the resin and generally about 50% to 90% by weight of the resin are generally added to the "size" or second resin coating of the backing material.

In the coating process for the coated abrasives, the backing material, which is generally available in rolls of up to about two meters wide, is coated with the phenolic resole resin on a roll coating machine. The quantity of the first coat, also called the make coat, is approximately 100 to 400 grams per square meter and depends mainly upon the size of the abrasive grain used. The abrasive grain is then applied to the resin coating having the retarded gelling rate due to use of retarder by either gravity coating or electrostatic coating. The grain should be fixed in the resin loaded backing vertical to the grains longitudinal axis. The loaded web is then transported to a festoon dryer where it is dried but not hardened or alternatively in this invention the loaded web is heated at a temperature of about 170°F (76°C) to 212°F (100°C) and preferably about 185°F (85°C) to 205°F (96°C) for a time sufficient to provide a coating which is not tacky to the touch but at the same time not fully cured. By use of the heating step to provide the tack free surface prior to the "size" or subsequent coating of resin, the processing time is diminished to a few, e.g., 2 or 3, hours instead of 10 or 12 hours. The web, with the hardened uncured resin, is then stretched and fed to another coater or back to the first. Here a second coating of the phenolic resole binder is applied over the abrasive and make coat. This second coat is called the size coat, and the abrasive grain is more fully imbedded and fixed in the resin after its application. The final drying and curing is generally performed in the main festoon dryer according to an exact program wherein above 80°C (176°F) the temperature is increased slowly to prevent too fast curing of the surface and formation of blisters. The maximum final drying and curing temperature should not exceed 120°C (248°F) to 130°C (266°F). The webs are finally made into rolls, blades, sheets, rondels, or endless ribbons.

In order that those skilled in the art may more fully understand the invention presented herein, the following procedures and examples are set forth. All parts and percentages in the examples, as well as elsewhere in this application, are by weight and temperatures are in degrees Fahrenheit (°F) unless otherwise stated.

### Procedure for the Preparation and Testing of Polymer Concrete for Compressive Strength

A 5-quart (about 5.71) Hobart mixer was charged with
990.0 g Industrial Grade Sand No 4 (Vulcan Materials Co.) This is also referred to herein as coarse sand.
360.0 g Industrial Grade Sand No 10 (Vulcan Materials Co.) This is also referred to herein as medium particle size sand.
150.0 g Oklahoma Mill Creek Foundry Sand (U.S. Silica) This is also referred to herein as fine sand.
and 22.5 g Magchem 50 (65 square meters per gram) a lightburned magnesia from Martin Marietta Magnesia Specialties.
180.0 g of Resin A containing 1.8 g silane, namely 3-glycidoxypropyl trimethoxysilane, was added. The resin-aggregate was mixed for a total of 2 minutes (at medium setting for 1 minute and high setting for 1 minute) then 45.0 g of γ-butyrolactone and 15.0 g water were added and mixing continued for 1 minute at medium setting and an additional 1 minute at a high setting. The mixture was then transferred to a mold containing 15 cylindrical cavities of 1.5" (3.8 cm) depth and 1.5" (3.8 cm) diameter. Each cavity was lined with thin polyester film to ease removal of hardened specimens. The charged mold was then vibrated for 2 minutes at a setting of 5.1 using a Syntron Vibrating Table. Surfaces were lightly troweled and the molds then transferred to a constant temperature (72°F ± 2°F (22°C ± 1°C)) and humidity (51% ± 2%) room. Hardened specimens were removed from the mold after 24 hours and either tested or stored for evaluation at a later date. Compressive strengths for polymer concrete were determined on a Tinius Olsen tensile test machine at a slow speed of 0.15 inches/minute (3.8 mm/minute). Pounds to failure divided by 1.77 represents compressive strength in psi.

### Procedure for the Preparation and Testing of Polymer Concrete for Tensile Strength

A 5 quart (about 5.71) Hobart mixer was charged with 891.0 g Industrial Grade Sand No 4, 324.0 g Industrial Grade Sand No 10, both from Vulcan Materials Co., 135.0 g Oklahoma Mill Creek Foundry Sand (U.S. Silica), and 13.5 g Magchem 50 (Martin Marietta Magnesia Specialties). To this mixture, was added 162.0 g of Resin A containing 1.62 g (grams) silane namely 3-glycidoxypropyltrimethoxy silane. The resin/aggregate mixture was mixed 2 minutes, one at medium speed and one at high speed. This mixture was then transferred to aluminium forms (pre-sprayed with release agent) and cast to form dogbone specimens 3 inches (7.6 cm) long, 1 inch (2.5 cm) thick and 1 inch (2.5 cm) wide at the neck. The sprayed forms had been previously placed on polyester film atop an aluminium tray. Dogbone molds were filled and vibrated for 2 minutes at a setting of 5.1 on a Syntron Vibrating Table. The surfaces were lightly troweled and then the assembly transferred to a constant temperature (72°F ± 2°F (22°C ± 1°C)) and humidity (51% ± 2%) room and allowed to harden. After 24 hours, samples were removed from molds and either tested or stored for evaluation at a later date. Tensile strengths were determined on a Tinius Olsen tensile test machine at a slow speed of 0.15 inches/minutes (3.8 mm/minute). Readings in psi are indicated on digital readout.

### Determination of Soluble Magnesium From Reaction of Resin A & Magnesia Hardener with/without Ester Hardener and with/without Additive

A glass screw cap vial (28x95mm) was charged with
6.0 g Resin A
0.5 g water
1.5 g γ-butyrolactone (or 2-methoxyethyl ether, as indicated in the Examples or Tables herein),
which was briefly mixed to homogenize the solution whereupon 0.75 g lightburned magnesia (Magchem 50; Martin Marietta Magnesia Specialties) was added. The mixture was thoroughly mixed for 1 minute using a S/P Vortex Mixer (American Scientific Products) at a setting of 9. 1.5 g of the uniform dispersion was immediately transferred to a vial containing 4.5 g N,N-dimethylformamide (DMF) and 0.5 g methanol. After mixing well for 1 minute, the contents were transferred to a centrifuge tube which was centrifuged for 5 minutes. The relatively clear liquor was filtered through a teflon microfilter. A weighed amount of clear solution was ashed in a platinum dish which was heated at 600°C in a muffle furnace. The residue was treated with aqueous hydrochloric acid, diluted appropriately, and analyzed for magnesium by atomic absorption.

The above freshly mixed solution/magnesia dispersion (1.5 g per vial) was transferred to other empty vials which were placed in a 25°C water bath. At appropriate times, 4.5 g DMF was added and, after 2 to 3 minutes of mixing, complete dispersion of resin was achieved. Then 0.5 g methanol was added, remixed, and then centrifuged and analyzed as described above. % Magnesium in original sample = % magnesium found x 4.27 factored to correct for solvent dilution.

### Procedure for Gel Determination

A screw cap glass vial ( 28 x 95 mm) is charged with: 6.0 grams Resin A or Resin B (as indicated in the Tables or Examples); additives if any, as indicated in Tables or Examples; 0.5 grams water; and 1.5 grams (g.) gamma butyrolactone. The solution is mixed well prior to addition of 0.75 g of lightburned magnesia having a surface area of 65 square meters per gram. The mixture is thoroughly mixed for one minute using a S/P Vortex Mixer of American Scientific Products at a setting of 9. Five grams (g) of this mixture is immediately transferred to a glass test tube (18 x 155 mm). A glass rod with a magnetized head fitting is introduced into the mixture and fitted to a Sunshine Gel Time Meter which is then turned on. The tube is immersed in a 25°C water bath throughout the test. The time of gelation is signified when the magnetized head stops turning and also by the sounding of an audible signal.

Determination of gel times with Resin C used 5.0 g of mixture derived from 8.0 g of Resin C, 1.2 g gamma-butyrolactone and 1.6 g of the lightburned magnesia having a surface area of 65 square meters per gram. Solvents were optional. Gel determinations were run at 25°C or at 60°C (boiling chloroform).

100°C gel times with Resin D used 5.0 g of a mixture derived from 8.4 g Resin D, 0.0081 ester equivalents of organic hardener, 2-methoxyethyl ether and 0.16 g of lightburned magnesia having a surface area of 25 square meters per g. The weight sum of ester hardener and 2-methoxyethyl ether was kept constant.

Gel times with Resin E used 3.85 g resin and 1.16 g of ethyl lactate or 4.0 g Resin E and 1.0 g Triacetin.

### Phenolic Resole Properties

Phenolic Resole Resin E is a commercial product sold as Alphaset 9,000 by Borden Chemical Company. Resin E is not a resin used in this invention except for comparison purposes. This resin has approximately 50% solids, 50% water, a viscosity of 150 cps (0.15 Pa s) at 25°C, and a pH of 13.

Phenolic Resole Resin A, or simply Resin A, is a phenol formaldehyde resole resin prepared by reacting phenol (P) with 50% formaldehyde (F) at a F/P molar ratio of 1.25 using sodium hydroxide as catalyst. This resin intermediate is formulated with acetic acid, ethanol, methanol, and N,N-dimethylformamide (DMF) to provide Resin A which has: a Gardner-Holt viscosity at 25°C, a viscosity of 2,560 Centistokes, or approximately 3,000 cps (3 Pa s) at 25°C; 68% solids; 7% free phenol; 10% lower alkyl alcohols; 12% water; 4% DMF; a pH of 5.9, and a weight average molecular weight of 4,000.

Phenolic Resole Resin B, or simply Resin B, is a more alkaline, water dilutable analog of Resin A without the acetic acid, and N,N-dimethylformamide (DMF), but instead formulated with ethanol to provide a 7.5% ethanol content and potassium hydroxide 0.75% based on Resin B to provide a pH of 8.9 to the final resin solution as well as a weight average molecular weight of 4,000 and 67% solids, 18% water, and 7% free phenol, all based on the weight of resin (B.O.R.).

Phenolic Resole Resin C, or simply Resin C, is prepared by reacting phenol (P) with 50% formaldehyde (F) at a F/P molar ratio of 1.25 using sodium hydroxide catalyst. This resin has a viscosity of 250 cps (0.25 Pa s) at 25°C; 68.6% solids B.O.R.; 15.7% free phenol B.O.R.; 11.7% water B.O.R.; a pH of 8.9 and a weight average molecular weight of 290.

Phenolic Resole Resin D, or simply Resin D, is prepared by reacting phenol (P) with 50% formaldehyde (F) at a F/P molar ratio of 2.0 using potassium hydroxide catalyst. This resulting intermediate resin has a weight average molecular weight of 390 and is formulated with phenol and Dowanol DPnB (dipropylene glycol monobutyl ether-Dow Chemical) to give the final resin having: solids of 78%; free phenol of 16%; water of 8%; Dowanol DPnB of 8%; potassium of 1.3%; a pH of 9.2; and a viscosity at 25°C of 3450 cps (3.45 Pa s).

### Example 1

In this example, various additives were tested at 2%, based on resin weight (B.O.R.), unless indicated otherwise, for their effect on the rate of hardening of the phenolic resole resin in the presence of both magnesium hardener and ester hardener at about 25°C. The rate of hardening was determined by measuring time of gelation in accordance with the hereinabove procedure entitled "Procedure For Gel Determination." The resin employed was Resin A, the ester was γ-butyrolactone, and the magnesium hardener was Magchem 50. The control for Table 1 was the composition without additive which gave a gel time of 48 minutes. Also, for a lower molecular weight analog of Resin A, which is indicated on Table 1 with the superscript "(a)", the composition without additive gave a gel time of 67 minutes. Thus, gel times of less than 48 minutes, wherein the time is not followed by the superscript "(a)," of the various additives denote accelerators whereas get times of more than 48 minutes, wherein the time is not followed by the superscript "(a)," denote retarders. The results of this example are shown in Table 1. Some of the more significant results shown in Table 1 are as follows.

Flouride and biflouride salts are the most effective retarders. The weaker effect of lithium flouride is attributable to its lower solubility. Phosphoric acid and salts thereof are effective retarders. Surprisingly, related materials such as phosphorous acid, sodium phosphite, and hypophosphorous acid are accelerators. The chlorides are the most effective accelerators. Two classes of additives, apart from the fluoride and bifluoride, are particularly effective retarders, namely, lower alkyl tetraalkoxy silanes, e.g., tetraethoxy sane, which is also referred to as ethyl orthosilicate, and such partially hydrolyzed silanes as well as hydroxy and amino containing di- and tricarboxylic acids, e.g., aspartic, citric, malic, and tartaric acid, and iminodiacetic acid, whereas oxalic acid is a moderately effective retarder. Preformed very water insoluble magnesium oxalate is only very weakly retarding. Organic chlorine or bromine containing materials that react with water or alcohols at about 25 degrees C at pH of about 5 to 9 to liberate chloride or bromide ions act as reactive accelerators.

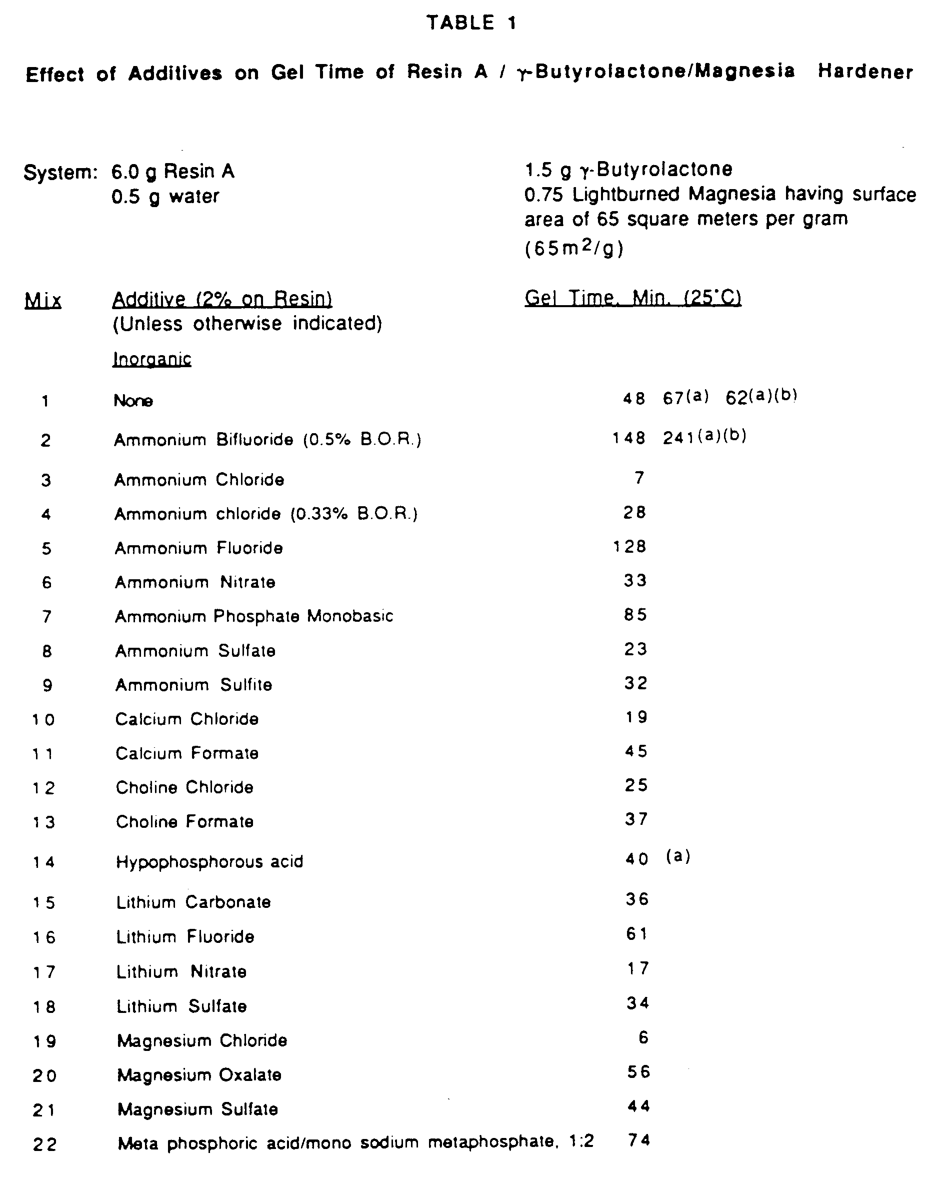

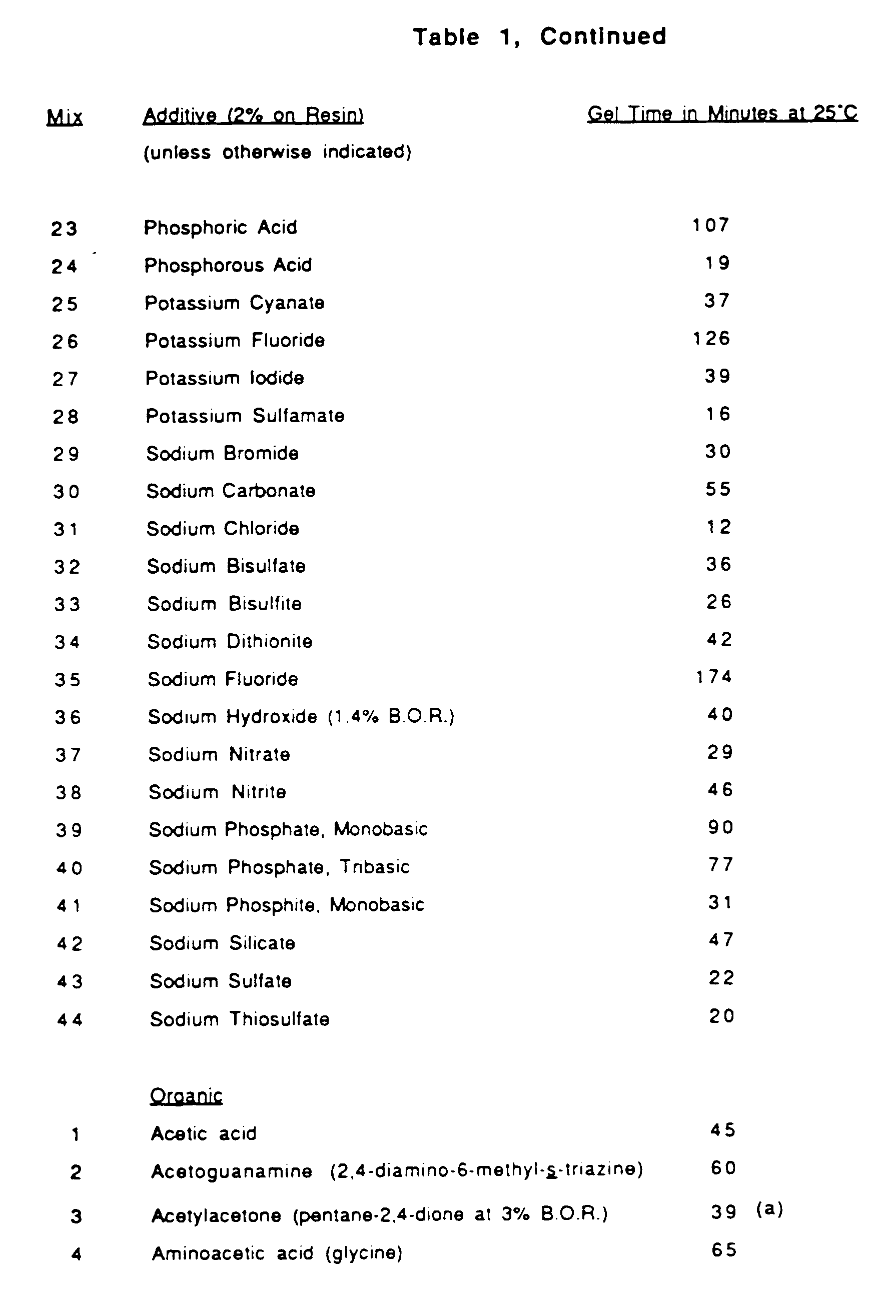

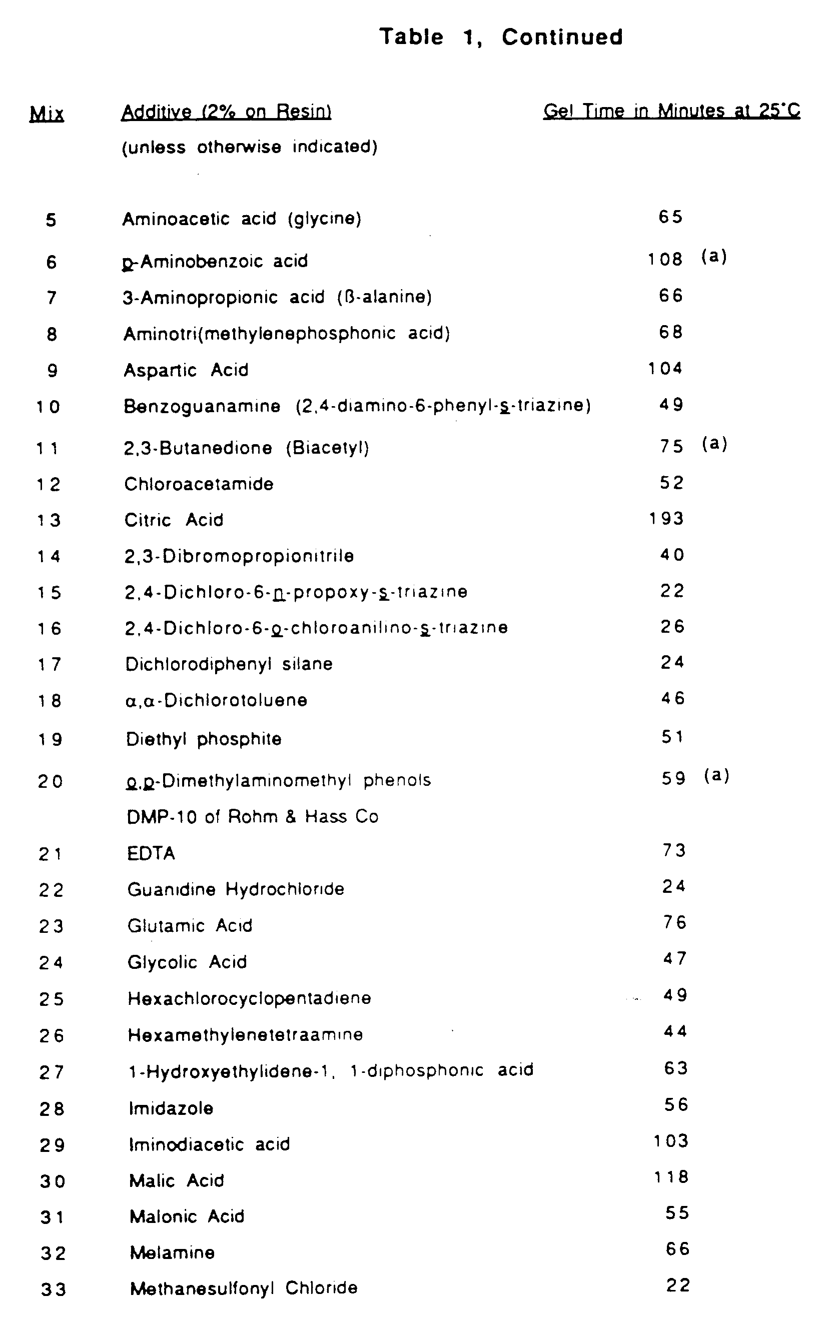

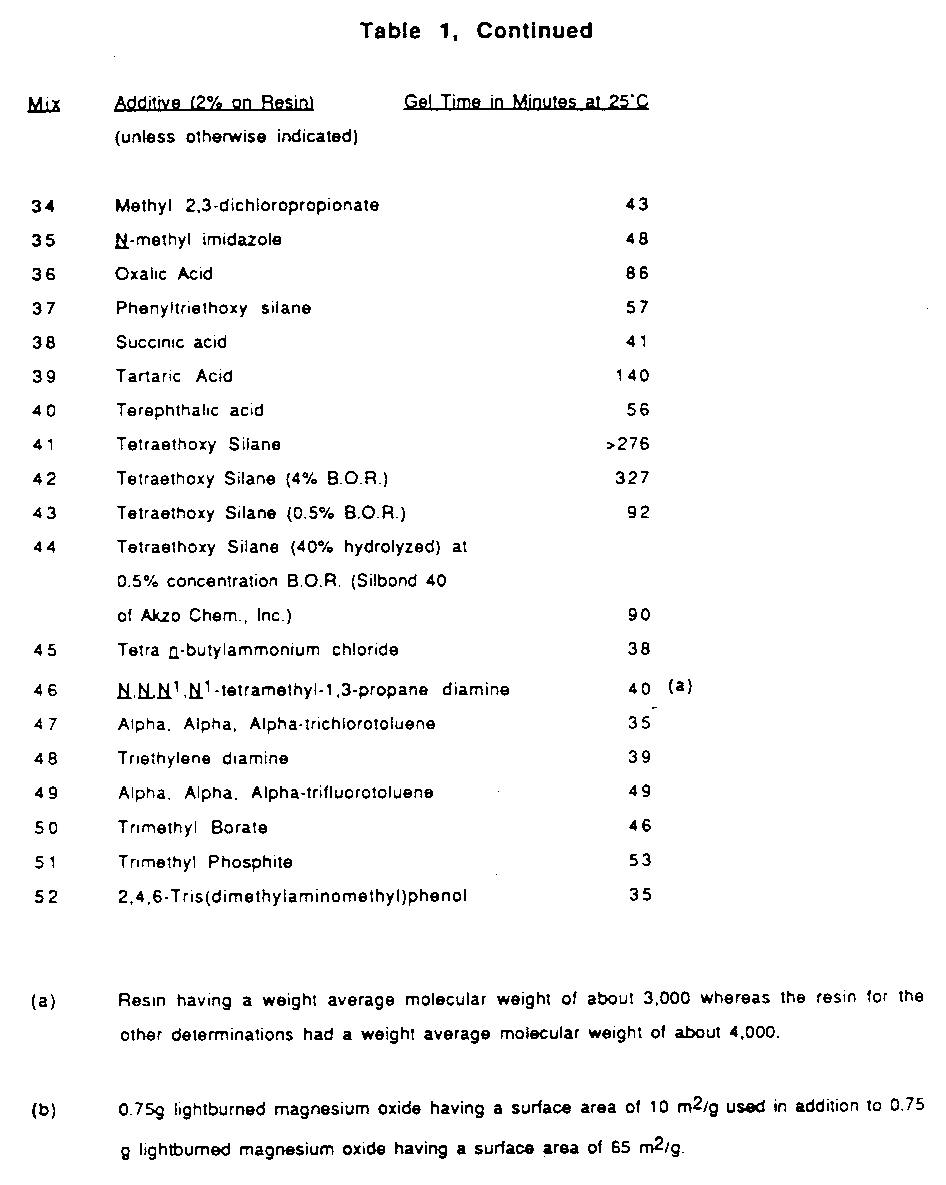

### EXAMPLES 2 AND 3

In these examples, tests were run to determine the effect of lightburned magnesia or magnesium hydroxide, esters, and additives on the compressive strength of polymer concrete. These examples were run in accordance with the Procedure For The Preparation and Testing of Polymer Concrete set forth hereinbefore.

For the polymer concrete data shown in Table 2 and 3, the compressive strengths were determined, unless specified otherwise, on room temperature (R.T.) cured specimens using Resin A, γ-butyrolactone as ester, light-burned magnesia or magnesium hydroxide as the alkali, and mixture of silica sands as aggregate.

It can be seen in Table 2 and Table 3 that:
(a) Fluoride retarder lowers R.T. strength after 24 hours, but this relative effect is more dramatic after 8 hours when compared to control. Lithium carbonate and calcium formate increase 1 day R.T. strength, but lithium fluoride (very low solubility) has no effect.
(b) Replacement of lightburned magnesia by a chemical equivalent of magnesium hydroxide leads to a dramatic decrease in compressive strength. However, magnesium hydroxide responds to accelerative and retardative effects. Chloride increases 24-hour R.T. compressive strength whereas fluoride decreases strength.
(c) Replacement of γ-butyrolactone ester by an equal weight of inert high boiling solvent (a glycol diether) leads to a dramatic reduction in 3 and 7 day R.T. strength. Four day immersion in 10% acetic acid, after a 3 day dry R.T. cure, leads to a strength decrease relative to a 7-day dry R.T. cure. With butyrolactone, an increase in strength is seen after the acetic acid treatment.
(d) Four day hot (90°C) water immersion preceded by 3 day dry R.T. cure of concretes prepared using γ-butyrolactone and lightburned magnesia leads to significantly higher strength than systems where inert solvent replaces ester or where magnesium hydroxide replaces magnesia.
(e) Sulfamates which are good accelerators show a negative effect on strength (8 or 24 hours) whereas moderate accelerator Li₂CO₃ shows a 24% strength increase after 24 hours.

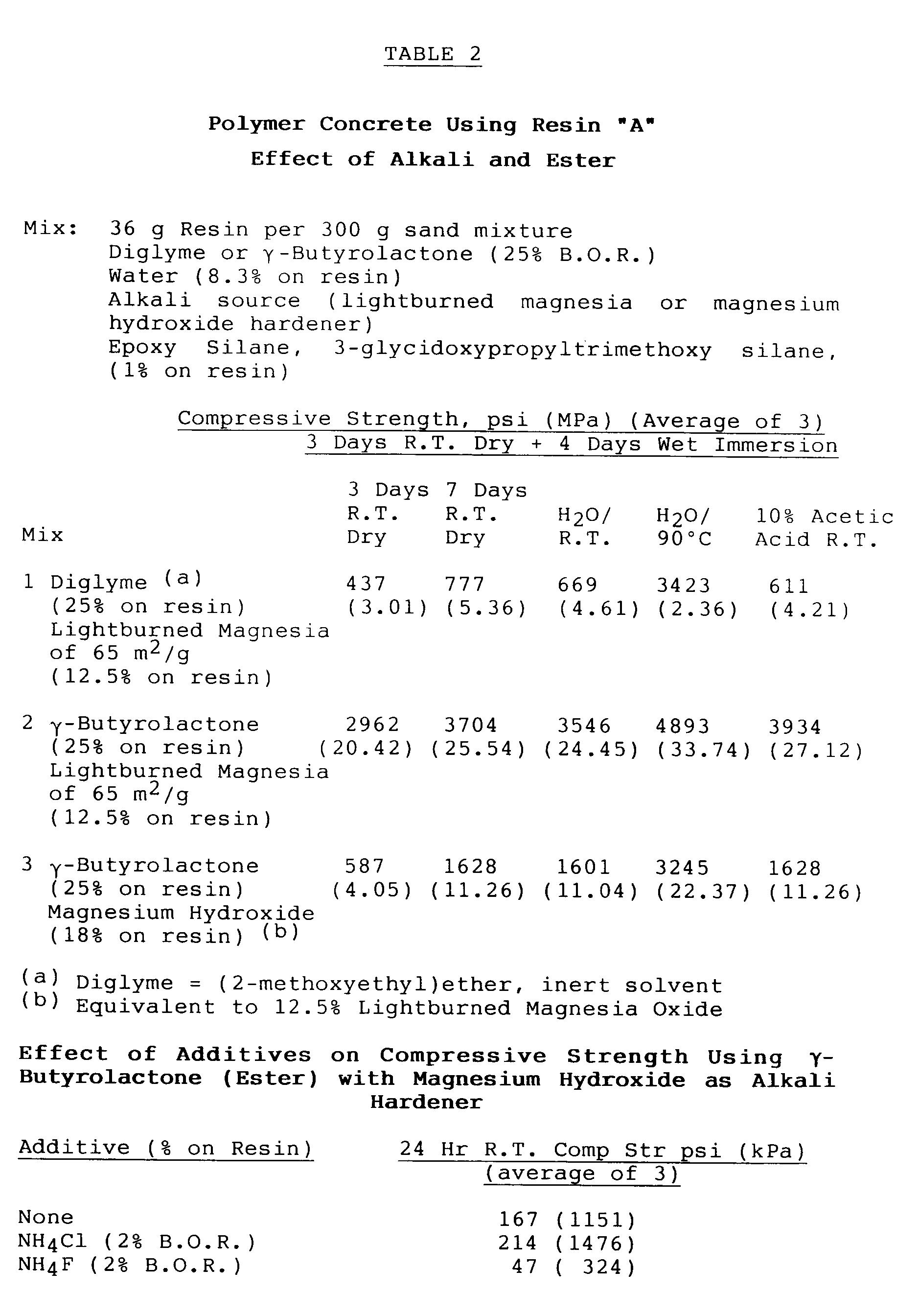

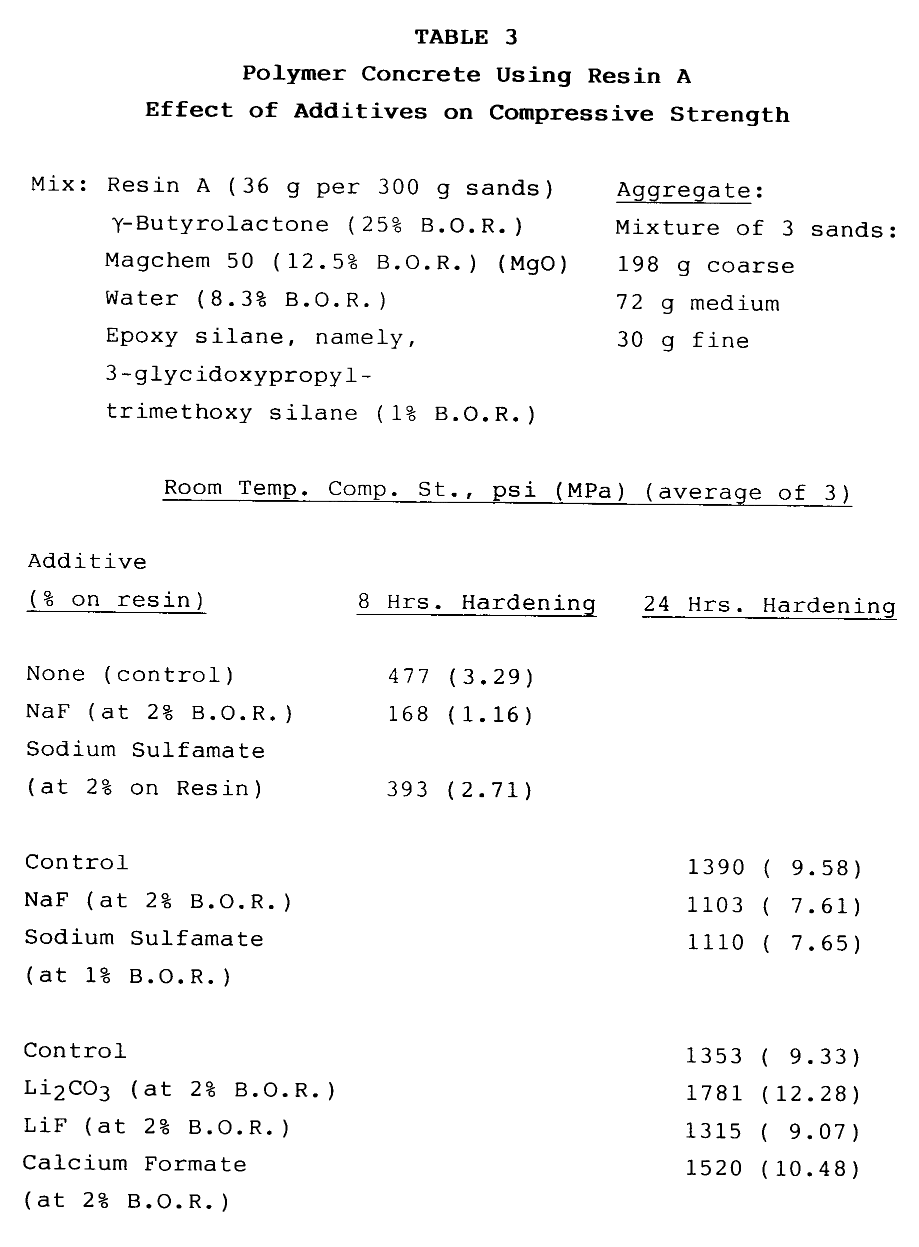

### EXAMPLE 4

In this example, tests were run to determine the effect of surface area of the lightburned magnesia hardener on gel time. The compositions tested were 6.0 g (grams) Resin A; 0.5 g water; 1.5 g of γ-butyrolactone and 0.75 g of magnesia hardener of different surface areas. The results are shown in Table 4. It can be seen from Table 4 that gel time is a function of magnesia surface area and concentration with the higher surface areas or concentrations decreasing the gel time.

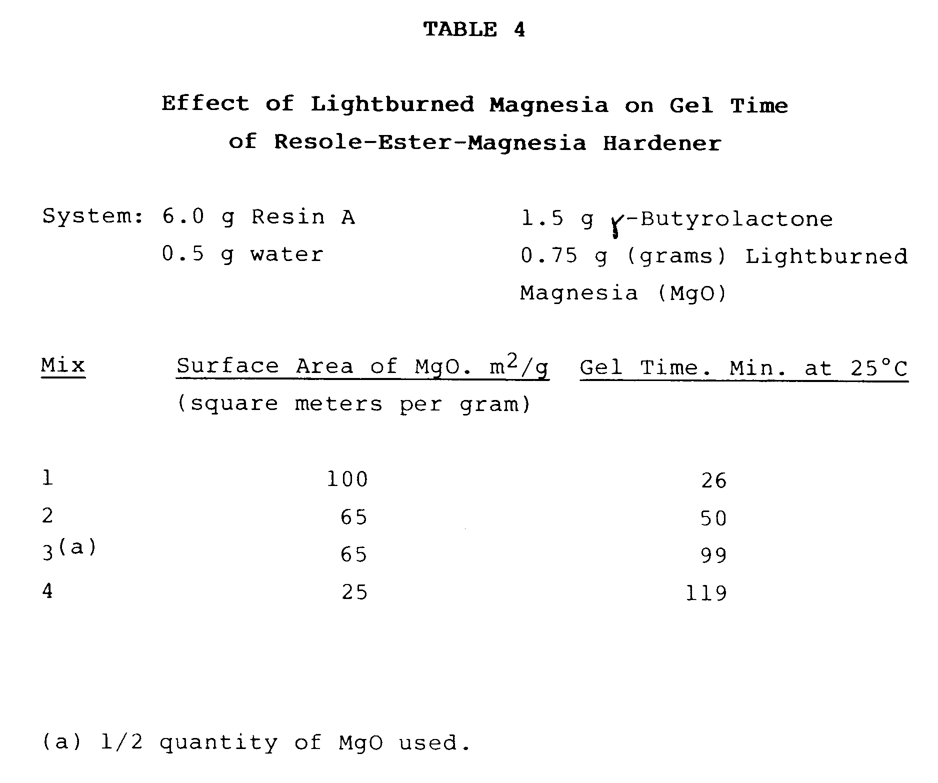

### EXAMPLE 5

This example was performed to show the effect of additives which were previously shown to be accelerators or retarders at the 25°C room temperature (R.T.) hardening on the solubilization of magnesium in the reaction mixture. The example was run in accordance with the "Procedure For Determination of Soluble Magnesium From Reaction Of Resin A & Magnesia Hardener With/Without Ester Hardener and With/Without Additive" which is set forth hereinabove. The results are shown in Table 5. The percentage readings of B.O.R. following the additive are percentages of the additive based on resin weight (B.O.R.). It can be seen from Table 5 that chloride increases magnesium solubilization and fluoride decreases solubilization in the reaction mixture. A similar effect is seen without ester in mixes 4-6 wherein the ester is replaced by inert solvent 2-methoxyethyl ether.

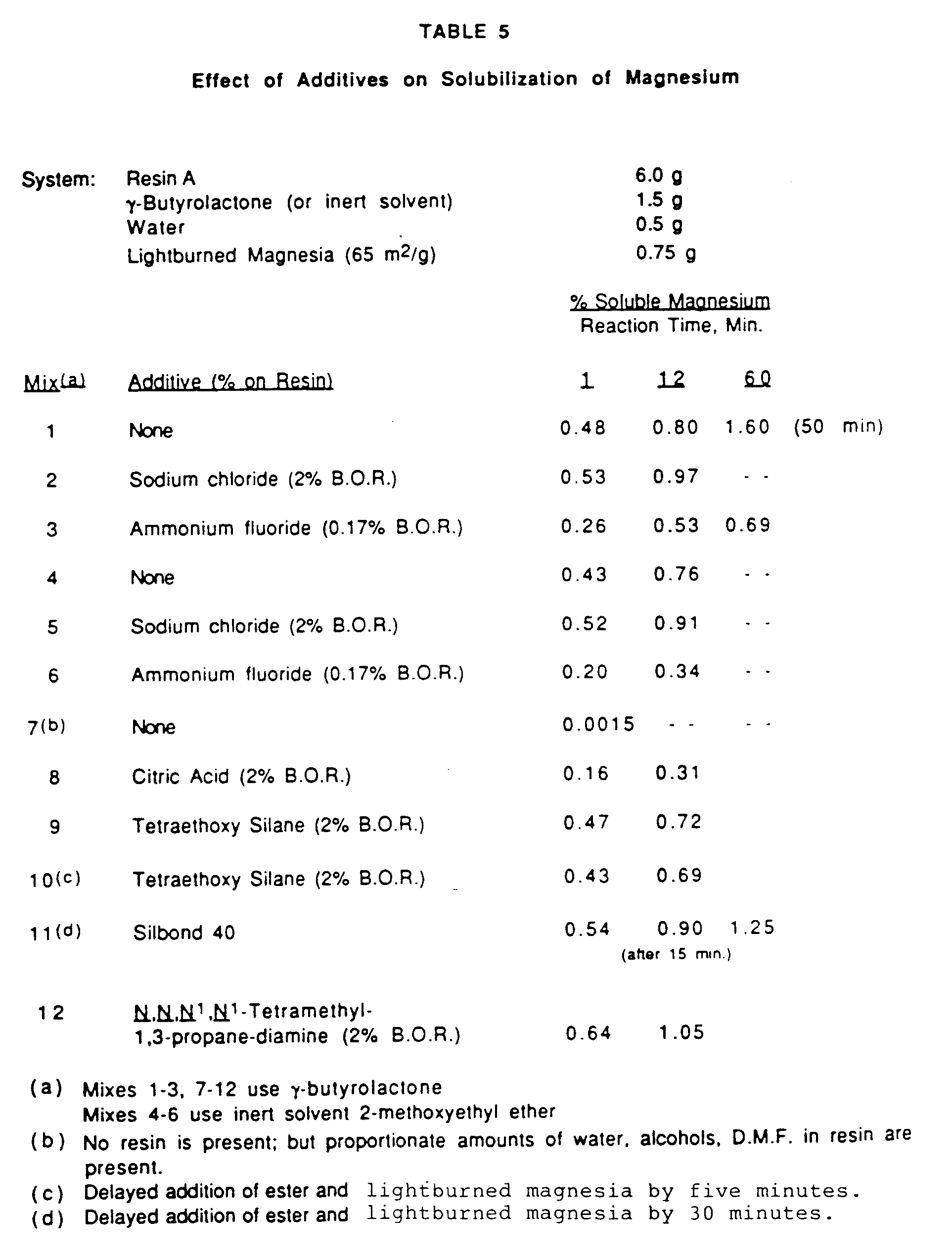

### EXAMPLE 6

Tests were performed to show the effect on gel time of various additives with certain esters. The gel time tests were run in accordance with the procedure set forth hereinbefore entitled "Procedure For Gel Determination." The test results set forth in Table 6 show accelerator or retarder activity of various additives at different temperatures and with different esters and resins.

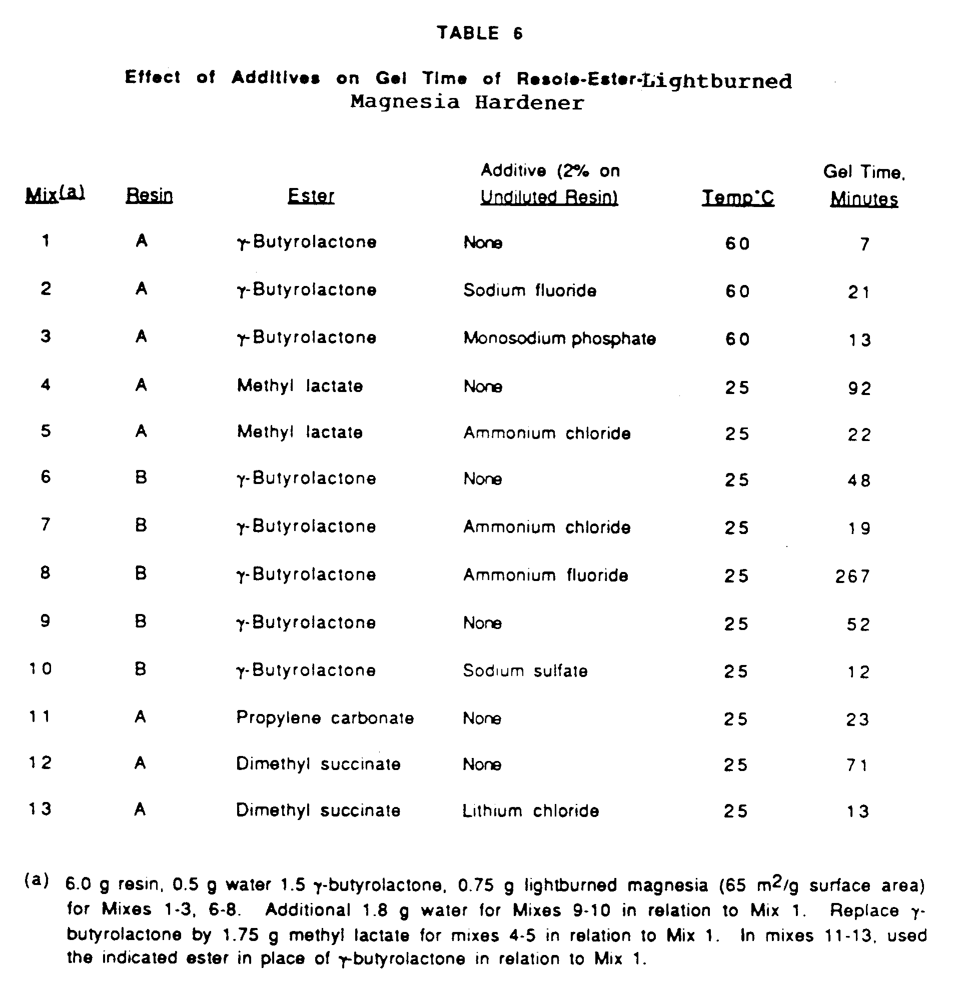

### EXAMPLE 7

This example was performed to determine the effect of lightburned magnesia/lime ratios and additives on gel times of a resole and ester. The results of this example are shown in Table 7. It can be seen that in Resin A, up to 33% of MgO hardener can be replaced by CaO with substantially no effect on gel time (mixes 1-4) but a problem results at a 1:1 ratio (mix 5). In contrast, Resin C (lower molecular weight and higher free phenol) cannot tolerate even a 20% replacement of MgO with CaO without significantly adversely affecting gel time (Mix 10 versus control Mix 8). These results run counter to the Gupta U.S. 4,794,051 patent cited earlier herein in Col 4, lines 45-53 and 34-37, it is stated that magnesium oxide or hydroxide is too slow a hardening agent and that it is perferable to use a mixture of calcium and magnesium alkalis at a ratio of 10:1 to 0.1 to 10. Furthermore, it should be pointed out that the Gupta compositions remain thermoplastic "at about 20°C to 70°C for 24 to 100 hours or longer" (Col 60, line 23 to Gupta) whereas the mixtures of phenolic resole resin and hardener or hardeners of this invention without retarder, harden in less than 24 hours.

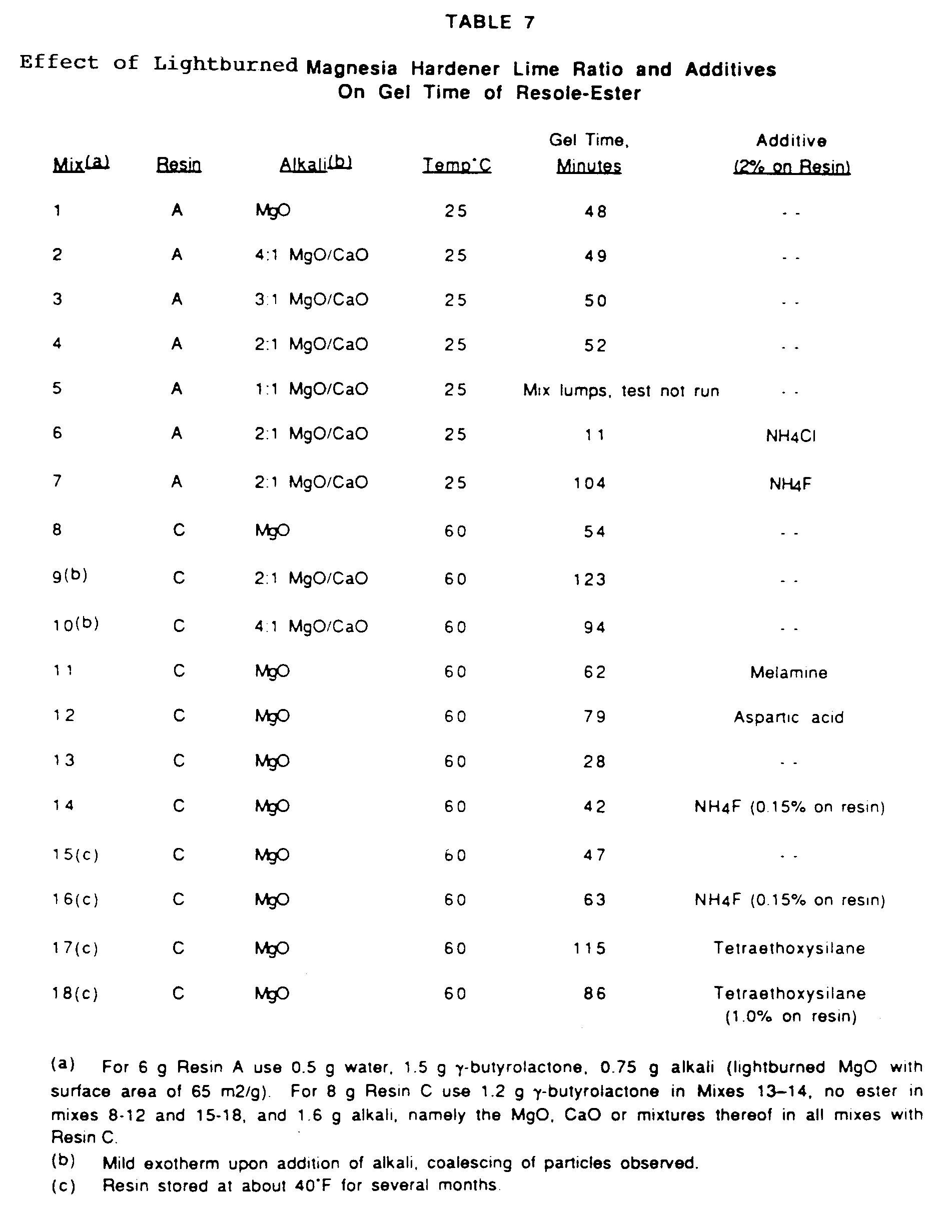

### EXAMPLE 8

This example was performed to show the effect of ester hardener on 100°C (centigrade) gel time of Resin D with lightburned magnesia as the alkali. The results of this experiment are shown in Table 8. It can be seen from Table 8 that increased cure occurs by use of both ester and magnesium oxide (Mix 4, 60 min.) either of which is faster curing than resole without ester or MgO (Mix 1, 96 minutes). One percent of NaF, a strong retarder at room temperatures, shows little effect at 100°C. This is particularly significant because it allows for increased room temperature stability or open work time with little effect on thermal cure.

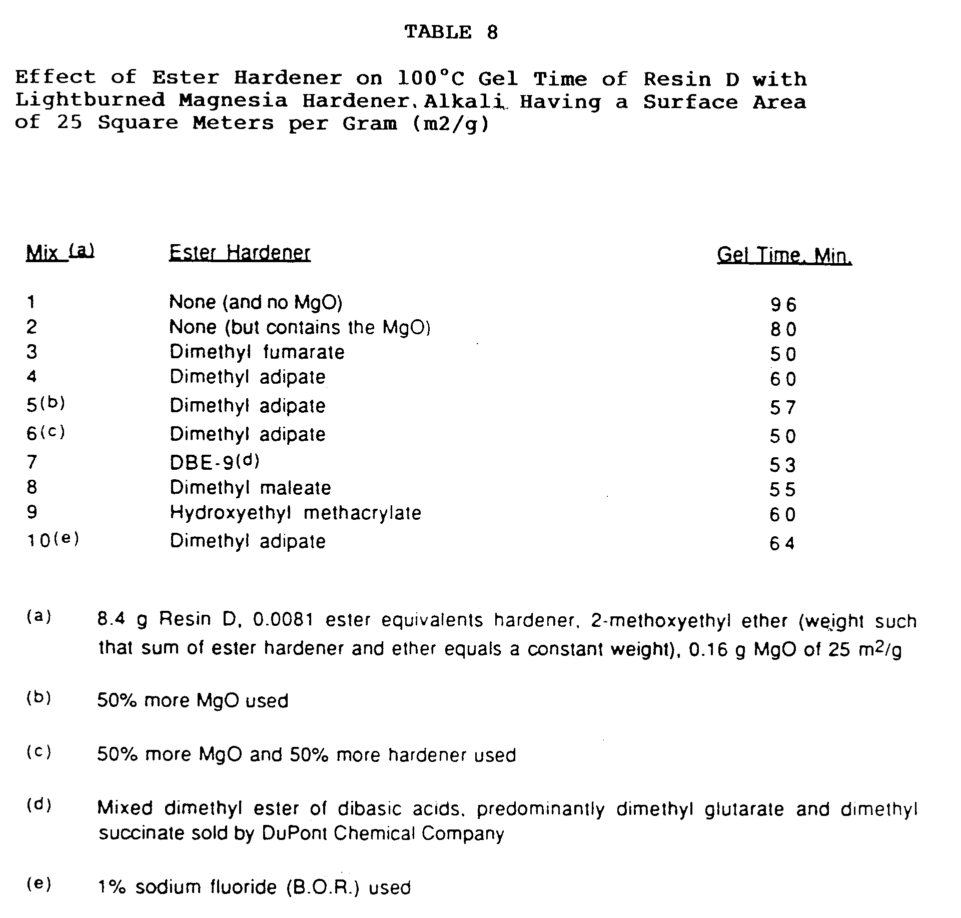

### EXAMPLE 9

This example was performed to show the effect of additives on gel times of Resin E which is a highly alkaline phenolic resole resin having a pH of about 13. The compositions of this example did not contain a magnesium hardening agent. The results of this example are shown in Table 9. Normally, with Resin E, the ethyl lactate induces hardening of the resin as shown by the gelation of Mix 1. However, all of the additives, including the chloride, which is an accelerator with the magnesium hardeners, acted as retarders or had no effect.

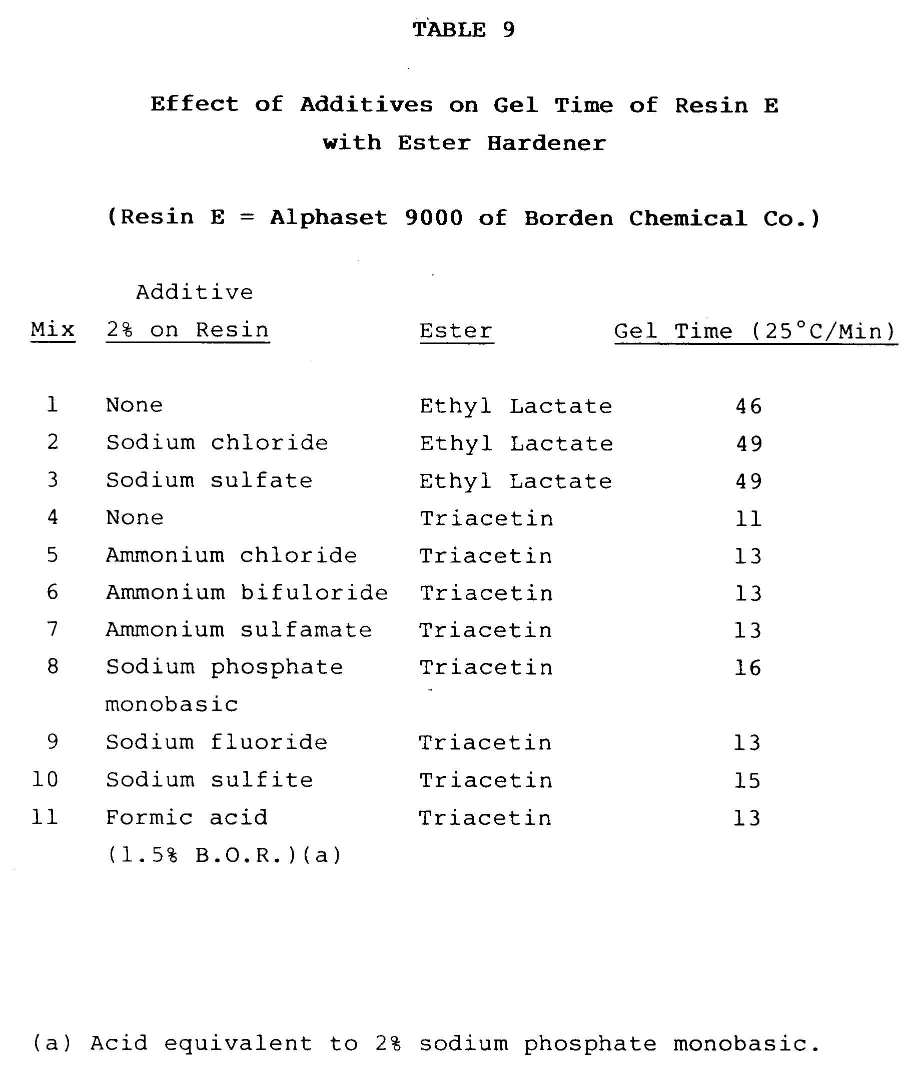

### EXAMPLE 10

This example was performed to determine the effect on viscosity and gelation, with and without a retarder, for a formulation of resin, ester, and magnesium hardener which could be used as part of a coated abrasives formulation. The formulation for the control composition was a mixture of: 20g of Resin D; 1.6g of DBE-9 (8% based on resin weight); and 0.4g of lightburned magnesium oxide having a surface area of 25 square meters per gram (2% based on resin weight). The test sample was a mixture of the same ingredients together with 0.06g of 33% ammonium bifluoride (0.1% B.O.R.). The change in viscosity over various periods of time was recorded and is shown in Table 10. The results from Table 10 clearly show the benefit of a retarder to give R.T. (room temperature) stability. The figures in parenthesis in Table 10 show percent viscosity increase relative to zero hour.

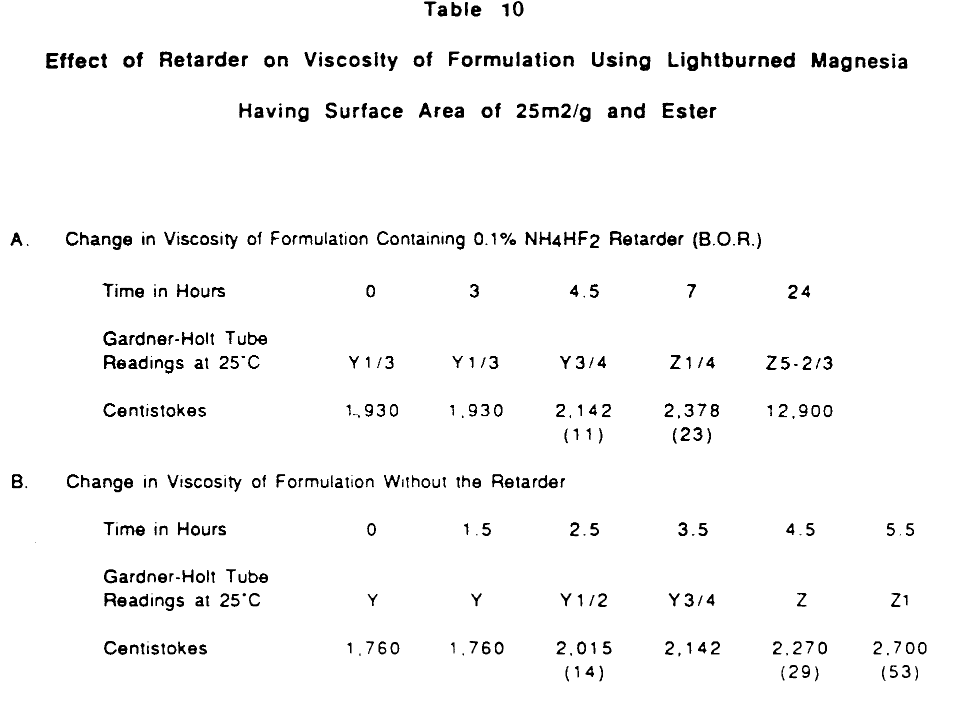

### EXAMPLE 11

This example was performed to show the effect of using a mixture of lightburned magnesium oxide hardeners of different surface areas. To a solution of 8.0 g Resin A, 0.67 g water, and 2.0 g γ-butyrolactone, there was added 1.0 g lightburned magnesium having a surface area of 65 m²/g. The mixture was strongly agitated for 1 minute and then 5.0 g of the mixture was transferred to each of two small cylindrical plastic vials (22 mm wide) and capped and allowed to stand at 72°F +/- (22°C ± 1°C) for 4 days. The hardened mass was removed from the vials and weighed. The hardened masses were designated as cylinders No 1 and No 2. These were then heated for 2 hours at 105°C, weighed and then heated for another 2 hours 135°C and reweighed. A similar procedure was followed as above except that an additional 1.0 g of lightburned magnesia having a surface area of 10 square meters per gram was added to the same quantity of the various ingredients used to prepare cylinders No 1 and No 2 for a total magnesia of 2.0 g per 8 g of Resin A and the samples designated as cylinders No 3 and No 4. The results are shown in Table 11 wherein the compressive failure was measured on a Tinius Olsen tensile test machine. It can be seen from Table 11 that samples with additional magnesia lose less weight and have higher crush strengths than samples with 50% less magnesia. The effect on gel time was minimal, as can be seen in Table 1, Mix 1, in that the mixture of magnesias had a gel time of 62 minutes for samples No 3 and No 4 as compared to 67 minutes for the samples No 1 and No 2. Following the same procedure as in this example, various retarders such as ammonium fluoride, sodium bifluoride, tetraethoxy silane, and aspartic acid can be added to such compositions containing mixed surface area magnesium to obtain higher strength while extending the gel time in binder, raw batch, and other compositions of this invention. One of the tests in Mix 2 of Table 1 shows such extension of gel time.

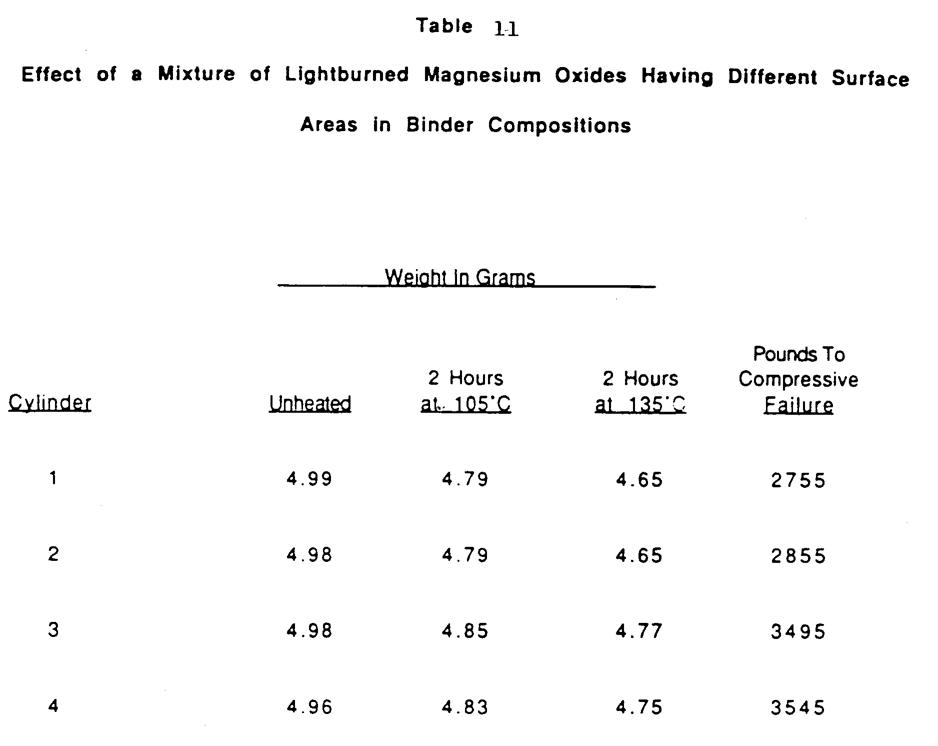

### EXAMPLE 12

This example was performed to show the effect of using an air detraining agent on a polymer concrete composition prepared from silica sand aggregate, Resin A, gamma-butyrolactone, lightburned magnesium oxide having a surface area of 65 m²/g and ammonium bifluoride retarder. Compressive strength specimens were prepared in accordance with the hereinbefore described procedure entitled "Procedure For The Preparation And Testing of Polymer Concrete For Compressive Strength" and tensile specimens were prepared in accordance with the hereinbefore described procedure entitled "Procedure For The Preparation and Testing of Polymer Concrete For Tensile Strength" except that a smaller mix was used and mixing was done manually.

Polymer concretes were prepared with and without SAG-10, a silicone antifoam agent as the detraining agent. SAG-10 is a 10% dimethylpolysiloxane emulsion which is marketed by Union Carbide Corporation. The sand aggregate used in this example was a mixture of three different sands consisting of 198 parts of coarse sand, 72 parts of medium sand, and 30 parts of fine sand. Enhancement of strength by the use of SAG-10 is clearly shown by the results of Table 12.

Air detraining agents such as antifoamers, e.g., dimethylpolysiloxane and the like, can be employed in an amount sufficient to increase the strength of the composition. Such quantities can vary over a broad range such as from about 0.005% to 0.1% based on the weight of resin and preferably from about 0.01% to 0.05% based on the weight of resin.

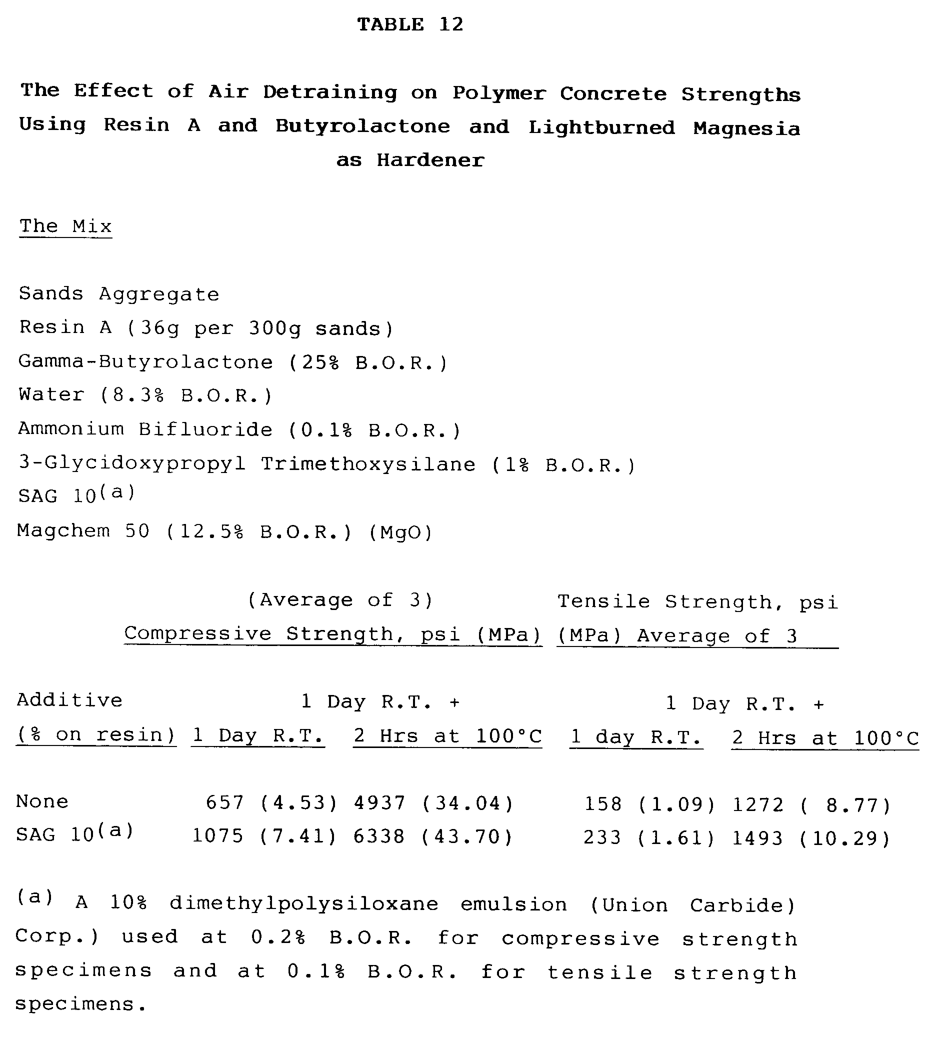

### EXAMPLE 13

### Phenolic Resole Properties

Phenolic Resole Resin F, or simple Resin F, is a phenol formaldehyde resole resin prepared by reacting phenol (P) with 50% formaldehyde (F) at a F/P molar ratio of 1.25 using sodium hydroxide as catalyst to prepare a resin intermediate. This resin intermediate is formulated with acetic acid, ethanol, methanol and N,N-dimethylformamide (DMF) to provide Resin F which, when fresh, had: a viscosity at 25°C of 1700 centistokes, (approximately 2050 cps (2.05 Pa s) at 25°C) for the first batch and 1930 centistokes at 25°C (about 2300 cps (2.3 Pa s) at 25°C) for the second batch; 7% free phenol; 10% lower alkyl alcohols; 12% water; 4% DMF; a pH of 5.9, and a weight average molecular weight of about 2670 for the first batch and about 3,000 for the second.

### Gel Tests

In these tests, various additives were tested at the concentration indicated in parenthesis adjacent to the name of the additive in the following Table 13, based on resin weight (B.O.R.), for their effect on the rate of hardening of the phenolic resole resin in the presence of both magnesium oxide hardener and the ester hardener at 25°C. The rate of hardening was determined by measuring time of gelation in accordance with the hereinabove procedure entitled "Procedure For Gel Determination". The resin employed was Resin F. The ester was γ-butyrolactone, and the magnesium hardener was Mag Chem 50. The controls of Table 13 were the composition without additive. Differences in control (Mixes 1, 4, 13, 16 and 21) gel times are due to either different plant batch intermediates used to formulate Resin F and/or different cold storage times of the resin before use. The tests are grouped so that: Mixes 1-3 used the same identical resin as control Mix 1 which had a weight average molecular weight of 3000 and a viscosity of 1930 centistokes at 25°C; Mixes 4-12 used the same identical resin as control Mix 4 which had a weight average molecular weight of 2600 and a viscosity of 1700 centistokes at 25°C; Mixes 13-15 used the same identical resin as control Mix 13 which was the same as that of Mix 4 except that Mix 13 had been placed in cold storage for about 2 months; Mixes 16 to 20 used the same identical resin as control Mix 16 which was the same as that of Mix 4; whereas Mixes 21-24 used the identical resin as control Mix 21 which is Resin F as in Mix 4 but after 3 months cold storage.

Results in Table 13, below, show that: sulfanilic acid is a very good retarder; glyoxal; 2,6-diethylaniline (at 6.5% B.O.R.), catechol and salicylic acid are good retarders; and 2-chlorophenol, salicylamide, and azelaic acid are modest retarders. Interestingly, azelaic acid which is a linear C₉ diacid is a retarder whereas adipic acid, a linear C₆ diacid, if anything, acts as a modest accelerator. A number of the other additives function as marginal retarders.

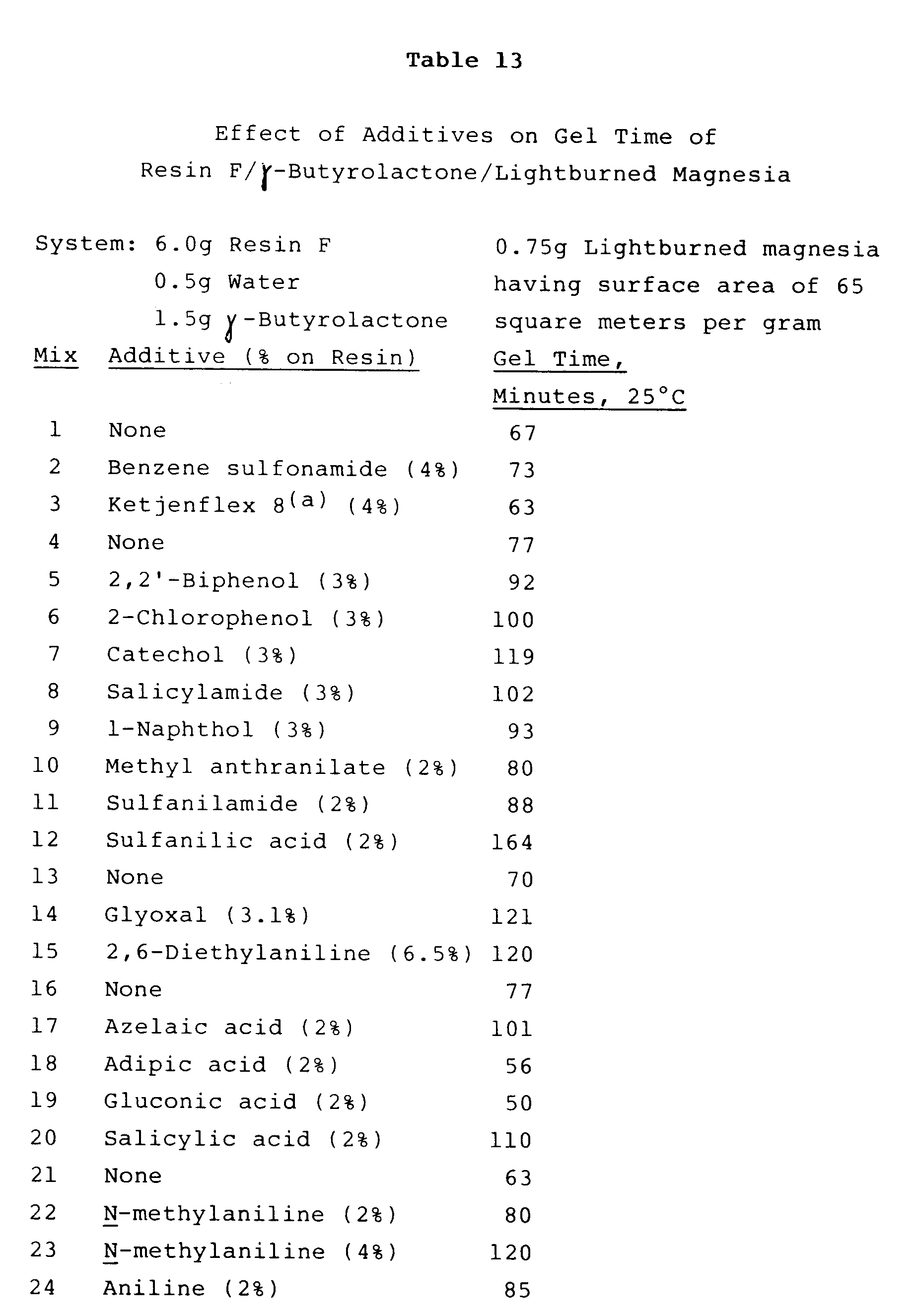

In the above Table 13: (a) is a trademark for a mixture of o and p-N-ethyl p-toluene sulfonamides of Akzo Chemical.

Similar results as those shown in Table 13 can be obtained by substituting the same quantity of other esters in place of that used in Table 13, e.g., by the use of caprolactam, ethylene carbonate, methyl lactate, glycerol triacetate, and the like.

### Gel Tests 2

Using the procedures and compositions of the above "Gel Tests" and Table 13, but omitting the ester so that the sole hardener is the lightburned magnesia, such compositions will show retardation of hardening with the retarder additives such as sulfanilic acid, catechol, glyoxal, salicylic acid and 2,6-diethylaniline. Similar results can be obtained by using magnesium hydroxide with an ester functional hardening agent.

In order to increase the strength of the hardened compositions, the compositions should be prepared by: adding the lightburned magnesia last in the mixture to be hardened; and generally diluting the resin with water, e.g., in the case of Resin F adding about 10% of water by weight of the resin. Further strength of the hardened composition is increased when thermal cure is initiated at a temperature below 100° such as 80°C.

## Claims

1. A method for retarding the hardening of a mixture of a phenolic resole resin and a magnesium hardening agent selected from the group consisting of lightburned magnesium oxide having a surface area of at least 10 m²/g and magnesium hydroxide which comprises mixing said resin and said hardening agent with a hardening retarder compound which decreases the solubility of magnesium in the resin.

2. A method for retarding the hardening of a mixture of phenolic resole resin and a magnesium hardening agent selected from the group consisting of lightburned magnesium oxide having a surface area of at least 10 m²/g and magnesium hydroxide which comprises mixing said resin and said hardening agent with a hardening retarder compound selected from
a compounds which provide a fluoride, bifluoride, citrate, tartrate, aspartate, oxalate, phosphate, glutamate, malate, iminodiacetate, iminodipropionate, aminoacetate, aminopropionate, or aminobenzoate anion; and
b a tetraalkoxy silane having from 1 to 3 carbon atoms in each alkoxy group; and a partially hydrolyzed tetraalkoxy silane having from 1 to 3 carbon atoms in each alkoxy group.

3. A method for retarding the hardening of a mixture of phenolic resole resin and a magnesium hardening agent selected from the group consisting of lightburned magnesium oxide having a surface area of at least 10 m²/g and magnesium hydroxide which comprises mixing said resin and said hardening agent with a hardening retarder compound selected from aniline, a substituted aniline having up to one N-alkyl group and up to 2 alkyl groups on the aromatic ring wherein each alkyl group has from 1 to 3 carbon atoms, azelaic acid, catechol, glyoxal, salicylamide, salicylic acid, sulfanilic acid, m-aniline sulfonic acid and o-aniline sulfonic acid.

4. A method according to any one of claims 1 to 3, wherein the phenolic resole resin is the condensation product of phenol and formaldehyde.

5. A method according to any one of claims 1 to 4, wherein the magnesium hardening agent is lightburned magnesium oxide having a surface area of at least 25 square meters per gram.

6. A method according to any one of claims 1 to 5, wherein the mixture includes an ester functional hardening agent.

7. A method for preparing a phenolic resole resin composition having an extended work life which comprises mixing:
a a phenolic resole resin having a pH of from 4.5 to 9.5, a solids content of from 50% to 90% by weight of the resin, and a viscosity of from 100 to 4,000 cps (0.1 to 4 Pa s) at 25°C;
b from 2% to 40% by weight of the resin of a magnesium hardening agent selected from lightburned magnesium oxide having a surface area of at least 10 m²g and magnesium hydroxide; and
c from 0.05% to 5% by weight based on the weight of resin of a retarder which decreases the solubility of magnesium in the resin.

8. A method according to claim 7, wherein the resin has a pH of from 5 to 8.5, a molar ratio of from 1 to 2.2 moles of aldehyde for each mole of phenol, a viscosity of from 200 to 3,000 cps (0.2 to 3 Pa s) at 25°C and a solids content of from 50% to 80% based on the weight of resin; and the hardener is lightburned magnesium oxide having a surface area of at least 10 m²/g.

9. A method according to either claim 7 or claim 8, wherein the hardening retarder is selected from the group consisting of:
a a compound which provides a fluoride, bifluoride, citrate, tartrate, aspartate, oxalate, phosphate, glutamate, malate, iminodiacetate, iminodipropionate, aminoacetate, aminopropionate, or aminobenzoate anion;
b a tetraalkoxy silane having from 1 to 3 carbon atoms in each alkoxy group; and a partially hydrolyzed tetraalkoxy silane having from 1 to 3 carbon atoms in each alkoxy group; and
c melamine.

10. A method according to claim 9, wherein the compound which provides a fluoride, bifluoride, citrate, tartrate, aspartate, oxalate, phosphate, glutamate, malate, iminodiacetate, iminodipropionate, aminoacetate, aminopropionate or aminobenzoate anion provides a cation selected from hydrogen ion, an alkali metal ion, ammonium, and alkyl substituted ammonium having from 1 to 4 carbon atoms in each alkyl group.

11. A method according to claim 9, wherein the anion is fluoride and the composition contains calcium ions wherein the quantity of calcium ions available to react with fluoride ions is less than the available fluoride anions.

12. A method according to claim 9, wherein the anion is bifluoride and the composition contains calcium ions wherein the quantity of calcium ions available to react with fluoride ions is less than that of the available bifluoride ions.

13. A method for preparing a phenolic resole resin composition having an extended work life which comprises mixing:
a a phenolic resole resin having a pH of from 4.5 to 9.5, a solids content of from 50% to 90% by weight of the resin, and a viscosity of from 100 to 4,000 cps (0.1 to 4 Pa s) at 25°C;
b from 2% to 40% by weight of the resin of a magnesium hardening agent selected from lightburned magnesium oxide having a surface area of at least 10 m²g and magnesium hydroxide; and
c from 0.05% to 5% by weight based on the weight of resin of a retarder selected from aniline, a substituted aniline having up to one N-alkyl group and up to 2 alkyl groups on the aromatic ring wherein each alkyl group has from 1 to 3 carbons atoms, azelaic acid, catechol, glyoxal, salicylamide, salicylic acid, sulfanilic acid, m-aniline sulfonic acid and o-aniline sulfonic acid.

14. A method according to any one of claims 7 to 13, wherein from 5 to 40% by weight, based on the weight of the resin, of an ester functional hardening agent is also mixed with the other components.

15. A method according to claim 14, wherein the ester functional hardening agent is a lactone selected from beta-butyrolactone, gamma-butyrolactone, gamma-valerolactone, caprolactone, beta-propiolactone, beta-isobutyrolactone, beta-isopentyllactone, gamma-isopentyllactone and delta-pentyllactone, or is an organic carbonate selected from propylene carbonate, ethylene glycol carbonate, 1,2-butanediol carbonate, 1,3-butanediol carbonate, 1,2-pentanediol carbonate and 1,3-pentanediol carbonate, or is an ester selected from aliphatic carboxylic acid esters of alcohols having from 1 to 10 carbon atoms with acids of 1 to 10 carbon atoms, and phenolic esters.

16. A binder composition comprising a mixture of a phenolic resole resin, a magnesium hardening agent to harden the resin selected from magnesium hydroxide and lightburned magnesium oxide having a surface area of at least 10 m²/g and a retarder compound to decrease the solubility of magnesium in the resin.

17. A composition according to claim 16, wherein the magnesium hardening agent is lightburned magnesium oxide having a surface area of at least 10 m²/g.

18. A binder composition comprising a mixture of a phenolic resole resin, a magnesium hardening agent to harden the resin selected from magnesium hydroxide and lightburned magnesium oxide having a surface area of at least 10 m²/g and a retarder compound selected from aniline, a substituted aniline having up to one N-alkyl group and up to 2 alkyl groups on the aromatic ring wherein each alkyl group has from 1 to 3 carbon atoms, azelaic acid, catechol, glyoxal, salicylamide, salicylic acid, sulfanilic acid, m-aniline sulfonic acid and o-aniline sulfonic acid.

19. A composition according to any one of claims 16 to 18, which also includes an ester functional hardening agent.

20. A composition according to claim 19, wherein the ester functional hardening agent is a lactone selected from beta-butyrolactone, gamma-butyrolactone, gamma-valerolactone, caprolactone, beta-propiolactone, beta-isobutyrolactone, beta-isopentyllactone, gamma-isopentyllactone and delta-pentyllactone, or is an organic carbonate selected from propylene carbonate, ethylene glycol carbonate, 1,2-butanediol carbonate, 1,3-butanediol carbonate, 1,2-pentanediol carbonate and 1,3-penanediol carbonate, or is an ester selected from aliphatic carboxylic acid esters of alcohols having from 1 to 10 carbon atoms with acids of 1 to 10 carbon acids and phenolic esters.

21. A composition according to claim 19 or claim 20, wherein the ester functional hardening agent is present in an amount of from 5 to 40% by weight based on the weight of the resin.

22. A composition according to any one of claims 16 to 21, wherein the phenolic resole resin is the condensation product of phenol and formaldehyde.

23. A composition according to any one of claims 16 to 22, wherein the phenolic resole resin has a pH of from 4.5 to 9.5, a resin solids content of from 50% to 90% by weight of the resin and a viscosity of from 100 to 4,000 cps (0.1 to 4 Pa s) at 25°C.

24. A binder composition comprising a mixture of a phenolic resole resin, a magnesium hardening agent to harden the resin selected from magnesium hydroxide and lightburned magnesium oxide having a surface area of at least 10 m²/g and a retarder compound selected from the group consisting of:
a compounds which provide a fluoride, bifluoride, citrate, tartrate, aspartate, oxalate, phosphate, glutamate, malate, iminodiacetate, iminodipropionate, aminoacetate, aminopropionate, or aminobenzoate anion; and
b a tetraalkoxy silane having from 1 to 3 carbon atoms in each alkoxy group; and a partially hydrolyzed tetraalkoxy silane having from 1 to 3 carbon atoms in each alkoxy group.

25. A composition according to any one of claims 16 to 24, wherein the retarder compound is present in an amount of from 0.05% to 5% by weight of the resin.

26. A binder composition according to claim 18 which comprises a mixture of:
a a phenolic resole resin having a pH of from 5 to 9, a solids content of from 50% to 80% by weight of the resin and a viscosity of from 250 to 3,000 cps (0.25 to 3 Pa s) at 25°C;
b lightburned magnesium oxide, in an amount of from 5 to 20% by weight of the resin, having a surface area of from 25 to 100 square meters per gram;
c from 0.5 to 5% by weight of the resin of a retarder selected from aniline, a substituted aniline having up to one N-alkyl group and up to 2 alkyl groups on the aromatic ring wherein each alkyl group has from 1 to 3 carbon atoms, azelaic acid, catechol, glyoxal, salicylamide, salicylic acid, sulfanilic acid, m-aniline sulfonic acid and o-aniline sulfonic acid; and
d from 5 to 40% by weight of the resin of an ester functional hardening agent selected from a lactone, an organic carbonate and a carboxylic acid ester.

27. A hardened binder composition, said binder in its fluid state comprising a mixture of:
a a phenolic resole resin having a pH of from 4.5 to 9.5, a resin solids content of from 50% to 90% by weight of the resin, and a viscosity of from 100 to 4,000 cps (0.1 to 4 Pa s) at 25°C;
b a lightburned magnesium oxide having a surface area of at least 10 m²/g in an amount sufficient to increase the rate of hardening of said resin;
c an ester functional hardening agent in an amount sufficient to increase the rate of hardening of said mixture; and
d a retarder compound in an amount sufficient to decrease the solubility of magnesium in the resin.

28. A hardened binder composition, said binder in its fluid state comprising a mixture of:
a a phenolic resole resin having a pH of from 4.5 to 9.5, a resin solids content of from 50% to 90% by weight of the resin, and a viscosity of from 100 to 4,000 cps (0.1 to 4 Pa s) at 25°C;
b a lightburned magnesium oxide having a surface area of at least 10 m²/g in an amount sufficient to increase the rate of hardening of said resin;
c an ester functional hardening agent in an amount sufficient to increase the rate of hardening of said mixture; and
d a retarder compound selected from the group consisting of:
a compounds which provide a fluoride, bifluoride, citrate, tartrate, aspartate, oxalate, phosphate, glutamate, malate, iminodiacetate, iminodipropionate, aminoacetate, aminoproprionate, or aminobenzoate anion; and
b a tetraalkoxy silane having from 1 to 3 carbon atoms in each alkoxy group; a partially hydrolyzed tetraalkoxy silane having from 1 to 3 carbon atoms in each alkoxy group.

29. A hardened binder composition, said binder in its fluid state comprising a mixture of:
a a phenolic resole resin having a pH of from 4.5 to 9.5, a resin solids content of from 50% to 90% by weight of the resin, and a viscosity of from 100 to 4,000 cps (0.1 to 4 Pa s) at 25°C;
b a lightburned magnesium oxide having a surface area of at least 10 m²/g in an amount sufficient to increase the rate of hardening of said resin;
c an ester functional hardening agent in an amount sufficient to increase the rate of hardening of said mixture; and
d a retarder compound selected from aniline, a substituted aniline having up to one N-alkyl group and up to 2 alkyl groups on the aromatic ring wherein each alkyl group has from 1 to 3 carbon atoms, azelaic acid, catechol, glyoxal, salicylamide, salicylic acid, sulfanilic acid, m-aniline sulfonic acid and o-aniline sulfonic acid.

30. A composition according to any one of claims 27 to 29, wherein the resin is prepared by condensing phenol and formaldehyde.

31. A thermally cured binder composition, said binder in its fluid state comprising a mixture of:
a a phenolic resole resin having a pH of from 4.5 to 9.5, a resin solids content of from 50% to 90% by weight of the resin, and a viscosity of from 100 to 4,000 cps (0.1 to 4 Pa s) at 25°C;
b a lightburned magnesium oxide having a surface area of at least 10 m²/g in an amount sufficient to increase the rate of hardening of said resin;
c an ester functional hardening agent in an amount sufficient to increase the rate of hardening of said mixture; and
d a retarder compound in an amount sufficient to decrease the solubility of magnesium in the resin.

32. A thermally cured binder composition, said binder in its fluid state comprising a mixture of:
a a phenolic resole resin having a pH of from 4.5 to 9.5, a resin solids content of from 50% to 90% by weight of the resin, and a viscosity of from 100 to 4,000 cps (0.1 to 4 Pa s) at 25°C;
b a lightburned magnesium oxide having a surface area of at least 10 m²/g in an amount sufficient to increase the rate of hardening of said resin;
c an ester functional hardening agent in an amount sufficient to increase the rate of hardening of said mixture; and
d a retarder compound selected from the group consisting of:
i compounds which provide a fluoride, bifluoride, citrate, tartrate, aspartate, oxalate, phosphate, glutamate, malate, iminodiacetate, iminodipropionate, aminoacetate, aminopropionate, or aminobenzoate anion; and
ii a tetraalkoxy silane having from 1 to 3 carbon atoms in each alkoxy group; and a partially hydrolyzed tetraalkoxy silane having from 1 to 3 carbon atoms in each alkoxy group.

33. A thermally cured binder composition, said binder in its fluid state comprising a mixture of:
a a phenolic resole resin having a pH of from 4.5 to 9.5, a resin solids content of from 50% to 90% by weight of the resin, and a viscosity of from 100 to 4,000 cps (0.1 to 4 Pa s) at 25°C;
b a lightburned magnesium oxide having a surface area of at least 10 m²/g in an amount sufficient to increase the rate of hardening of said resin;
c an ester functional hardening agent in an amount sufficient to increase the rate of hardening of said mixture; and
d a retarder selected from aniline, a substituted aniline having up to one N-alkyl group and up to 2 alkyl groups on the aromatic ring wherein each alkyl group has from 1 to 3 carbon atoms, azelaic acid, catechol, glyoxal, salicylamide, salicylic acid, sulfanilic acid, m-aniline sulfonic acid and o-aniline sulfonic acid.

34. A method of making a raw batch composition which method comprises mixing an aggregate material with an amount of the binder composition of any one of claims 16 to 26 sufficient to bind said aggregate on hardening.

35. A method according to claim 34, wherein the aggregate is selected from alumina, silica and mixtures thereof.

36. A method according to claim 34 or claim 35, wherein the mixture also includes an organofunctional silane in an amount sufficient to improve adhesion between the resin and the aggregate.

37. A method for binding abrasive particles to a backing material which comprises:
a) coating a backing material with a binder comprising a mixture of a phenolic resole resin, lightburned magnesium oxide having a surface area of at least 10 m²/g in a quantity sufficient to increase the rate of hardening of said resin, and a retarder compound in an amount sufficient to decrease the solubility of magnesium in the resin; and
b) placing abrasive particles on said coating to produce a loaded backing material.

38. A method according to claim 37, wherein the loaded backing material is heated at a temperature of from 176° F to 212° F (80° - 100 °C ) for a time sufficient to provide a partially cured coating which is not tacky to the touch.

39. A method according to either claim 37 or claim 38 wherein the retarder compound is selected from the group consisting of:
a compounds which provide a fluoride, bifluoride, citrate, tartrate, aspartate, oxalate, phosphate, glutamate, malate, iminodiacetate, iminodipropionate, aminoacetate, aminopropionate, or aminobenzoate anion; and
b a tetraalkoxy silane having from 1 to 3 carbon atoms in each alkoxy group; a partially hydrolyzed tetraalkoxy silane having from 1 to 3 carbon atoms in each alkoxy group; and melamine.

40. A method for binding abrasive particles to a backing material which comprises:
a) coating a backing material with a binder comprising a mixture of a phenolic resole resin, lightburned magnesium oxide having a surface area of at least 10 m²/g in a quantity sufficient to increase the rate of hardening of said resin, and a retarder compound selected from aniline, a substituted aniline having up to one N-alkyl group and up to 2 alkyl groups on the aromatic ring wherein each alkyl group has from 1 to 3 carbon atoms, azelaic acid, catechol, glyoxal, salicylamide, salicylic acid, sulfanilic acid, m-aniline sulfonic acid and o-aniline sulfonic acid; and
b) placing abrasive particles on said coating to produce a loaded backing material.

41. A method according to any one of claims 37 to 40, wherein the resin is the condensation product of phenol and formaldehyde.

42. A method according to any one of claims 37 to 41, where in the mixture also contains an ester functional hardening agent in an amount sufficient to increase the rate of hardening of the mixture.

43. A method for making a coated abrasive which comprises:
a) coating a backing material with a binder comprising a mixture of: (1) a phenolic resole resin, (2) lightburned magnesium oxide having a surface area of at least 10 m²/g in a quantity sufficient to increase the rate of hardening of said resin, (3) a retarder compound in an amount sufficient to decrease the solubility of the magnesium in the resin, and (4) an ester functional hardening agent in an amount sufficient to increase the rate of hardening of said mixture;
b) placing abrasive particles on said coating to produce a loaded backing material;
c) heating the loaded backing material at a temperature of 170°F to 212°F (76° - 100°C) for a time sufficient to provide a partially cured coating which is not tacky to the touch;
d) applying a second coating over said partially cured coating, said second coating comprising a binder set forth in paragraph "a)" above and up to 100% by weight of filler based on the weight of resin; and
e) curing the resin at a temperature of 176°F to 266°F (80° - 130°C).

44. A method according to claim 43, wherein the retarder compound is selected from the group consisting of:
i) compounds which provide a fluoride, bifluoride, citrate, tartrate, aspartate, oxalate, phosphate, glutamate, malate, iminodiacetate, iminodipropionate, aminoacetate, aminopropionate, or aminobenzoate anion; and
ii) a tetraalkoxy silane having from 1 to 3 carbon atoms in each alkoxy group; and a partially hydrolyzed tetraalkoxy silane having from 1 to 3 carbon atoms in each alkoxy group.

45. A method for making a coated abrasive which comprises:
a) coating a backing material with a binder comprising a mixture of: (1) a phenolic resole resin, (2) lightburned magnesium oxide having a surface area of at least 10 m²/g in a quantity sufficient to increase the rate of hardening of said resin, (3) to retarder compound selected from aniline, a substituted aniline having up to one N-alkyl group and up to 2 alkyl groups on the aromatic ring wherein each alkyl group has from 1 to 3 carbon atoms, azelaic acid, catechol, glyoxal, salicylamide, salicylic acid, sulfanilic acid, m-aniline sulfonic acid and o-aniline sulfonic acid, and (4) an ester functional hardening agent in an amount sufficient to increase the rate of hardening of said mixture;
b) placing abrasive particles on said coating to produce a loaded backing material;
c) heating the loaded backing material at a temperature of 170°F to 212°F (76° - 100°C) for a time sufficient to provide a partially cured coating which is not tacky to the touch;
d) applying a second coating over said partially cured coating, said secoond coating comprising a binder set forth in paragraph "a)" above and up to 100% by weight of filler based on the weight of resin; and
e) curing the resin at a temperature of about 176°F to 266°F (80° - 130°C).

46. A method according to any one of claims 43 to 45, wherein the phenolic resole resin is the condensation product of phenol and formaldehyde wherein the molar ratio of phenol to formaldehyde is from 1:1 to 1:2.2, the resin has a pH of 5 to 9.5, a solids content of 50% to 80% by weight of said resin, a viscosity of 200 to 4,000 cps (0.2 to 4 Pa s) at 25°C, and a water content of from 5% to 20% by weight of the resin, the quantity of the magnesium oxide varies from 2% to 35% by weight of the resin and has a surface area of at least 10 square meters per gram, the quantity of ester functional hardening agent is from 10% to 25% by weight of the resin, and the quantity of retarder varies from 0.05% to 5% by weight of resin.

47. A method according to any one of claims 43 to 46, wherein the filler is calcium carbonate in a quantity of 50% to 90% by weight of the resin.

48. A method for making a binder composition which comprises mixing;
a a phenolic resole resin having a pH of 4.5 to 9.5, a resin solids content of 50% to 90% by weight of the resin, and a viscosity of 100 to 4,000 cps (0.1 to 4 Pa s) at 25°C.
b a lightburned magnesium oxide hardener having a surface area of at least 10 m²/g in an amount sufficient to increase the rate of hardening of said resin;
c an ester functional hardening agent in an amount sufficient to increase the rate of hardening of said composition;
d a retarder compound in an amount sufficient to decrease the solubility of magnesium in the resin; and
e a calcium containing compound selected from the group consisting of calcium oxide, calcium hydroxide, and calcined dolomite wherein the quantity of said calcium compound in the mixture is in a minor quantity relative to the magnesium oxide.

49. A method according to claim 48, wherein the quantity of calcium compound does not exceed about one-fourth the quantity of the magnesium oxide and the said retarder is a member selected from the group consisting of:
a) compounds which provide a fluoride, bifluoride, citrate, tartrate, aspartate, oxalate, phosphate, glutamate, malate, iminodiacetate, iminodipropionate, aminoacetate, aminopropionate, or aminobenzoate anion; and
b) a tetraalkoxy silane having from 1 to 3 carbon atoms in each alkoxy group; and a partially hydrolyzed tetraalkoxy silane having from 1 to 3 carbon atoms in each alkoxy group.

50. A method for making a binder composition which comprises mixing:
a) a phenolic resole resin having a pH of from 4.5 to 9.5, a solids content of 50% to 90% by weight of the resin, and a viscosity of 100 to 4,000 cps (0.1 to 4 Pa s) at 25°C;
b) a lightburned magnesium oxide hardener having a surface area of at least 10 m² /g in an amount sufficient to increase the rate of hardening of said resin;
c) an ester functional hardening agent in an amount sufficient to increase the rate of hardening of said composition;
d) a retarder compound selected from aniline, a substituted aniline having up to one N-alkyl group and up to 2 alkyl groups on the aromatic ring wherein each alkyl group has from 1 to 3 carbon atoms, azelaic acid, catechol, glyoxal, salicylamide, salicylic acid, sulfanilic acid, m-aniline sulfonic acid and o-aniline sulfonic acid; and
e) a calcium containing compound selected from the group consisting of calcium oxide, calcium hydroxide, and calinced dolomite wherein the quantity of said calcium compound in the mixture is in a minor quantity relative to the magnesium oxide.

51. A method for preparing a phenolic resole resin composition having an extended work life which comprises mixing:
a a phenolic resole resin having a pH of from 4.5 to 9.5, a solids content of 50% to 90% by weight of the resin, and a viscosity of 100 to 4,000 cps (0.1 to 4 Pa s) at 25°C;
b from 5% to 50% by weight of resin of lightburned magnesium oxide having different surface areas in a ratio of one part of said magnesium oxide by weight thereof having a surface area of at least 50 m²/g and 0.5 to 4 parts of said magnesium oxide having a surface area of from 10 to 25 m²/g; and
c from 0.05 to 5% by weight based on the weight of resin of a retarder compound which decreases the solubility of magnesium in the resin.

52. A method according to claim 50, wherein one part of the magnesium oxide has a surface area of at least 50 m²/g and 1 to 3 parts has a surface area of from 10 to 25 m²/g and wherein the said retarder compound is a member selected from the group consisting of:
1 a compound which provides a fluoride, bifluoride, citrate, tartrate, aspartate, oxalate, phosphate, glutamate, malate, iminodiacetate, iminodipropionate, aminoacetate, aminopropionate, and aminobenzoate anion;
2 a tetraalkoxy silane having from 1 to 3 carbon atoms in each alkoxy group; and a partially hydrolyzed tetraalkoxy silane having from 1 to 3 carbon atoms in each alkoxy group.

53. A method for preparing a phenolic resole resin composition having an extended work life which comprises mixing:
a) a phenolic resole resin having a pH of from 4.5 to 9.5, a solids content of 50% to 90% by weight of the resin, and a viscosity of 100 to 4,000 cps (0.1 to 4 Pa s) at 25°C;
b) from 5% to 50% by weight of resin of lightburned magnesium oxide having different surface areas in a ratio of one part of said magnesium oxide by weight thereof having a surface area of at least 50 m²/g and 1 to 3 parts of said magnesium oxide having a surface area of from 10 to 25 m²/g; and
c) from 0.05% to 5% by weight based on the weight of resin of a retarder compound selected from aniline, a substituted aniline having up to one N-alkyl group and up to 2 alkyl groups on the aromatic ring wherein each alkyl group has from 1 to 3 carbon atoms, azelaic acid, catechol, glyoxal, salicylamide, salicylic acid, sulfanilic acid, m-aniline sulfonic acid and o-aniline sulfonic acid.

## Patentansprüche

1. Verfahren zur Verzögerung der Aushärtung einer Mischung aus Phenol-Resolharz und einem Magnesium-Härtungsmittel, das aus der Gruppe ausgewählt ist, bestehend aus leichtgebranntem Magnesiumoxid mit einer Oberfläche von Wenigstens 10 m²/g und Magnesiumhydroxid, welches das Vermischen des Harzes und des Härtungsmittels mit einer die Härtung verzögernden Verbindung umfaßt, welche die Löslichkeit von Magnesium in dem Harz herabsetzt.

2. Verfahren zur Verzögerung der Aushärtung einer Mischung aus Phenol-Resolharz und einem Magnesium-Härtungsmittel, das aus der Gruppe ausgewählt ist, bestehend aus leichtgebranntem Magnesiumoxid mit einer Oberfläche von wenigstens 10 m²/g und Magnesiumhydroxid, welches das Vermischen des Harzes und des Härtungsmittels mit einer die Aushärtung verzögernden Verbindung umfaßt, welche ausgewählt ist aus
a) Verbindungen, welche ein Fluorid-, Difluorid-, Citrat-, Tartrat-, Aspartat-, Oxalat-, Phosphat-, Glutamat-, Maleat-, Iminodiacetat-, Iminodipropionat-, Aminoacetat-, Aminopropionat- oder Aminobenzoatanion liefern, und
b) einem Tetraalkoxysilan mit 1 bis 3 Kohlenstoffatomen in jeder Alkoxygruppe; und einem teilweise hydrolysierten Tetraalkoxysilan mit 1 bis 3 Kohlenstoffatomen in jeder Alkoxygruppe.

3. Verfahren zur Verzögerung der Aushärtung einer Mischung aus Phenol-Resolharz und einem Magnesium-Härtungsmittel, ausgewählt aus der Gruppe, bestehend aus leichtgebranntem Magnesiumoxid mit einer Oberfläche von wenigstens 10 m²/g und Magnesiumhydroxid, welches das Vermischen des Harzes und des Härtungsmittels mit einer die Aushärtung verzögernden Verbindung umfaßt, die ausgewählt ist aus Anilin, einem substituierten Anilin mit bis zu einer N-Alkylgruppe und bis zu zwei Alkylgruppen am aromatischen Ring, worin jede Alkylgruppe 1 bis 3 Kohlenstoffatome aufweist, Azelainsäure, Catechol, Glyoxal, Salicylamid, Salicylsäure, Sulfanilsäure, m-Anilinsulfonsäure und o-Anilinsulfonsäure.

4. Verfahren nach einem der Ansprüche 1 bis 3, worin das Phenol-Resolharz das Kondensationsprodukt aus Phenol und Formaldehyd ist.

5. Verfahren nach einem der Ansprüche 1 bis 4, worin das Magnesium-Härtungsmittel leichgebranntes Magnesiumoxid mit einer Oberfläche von wenigstens 25 m²/g ist.

6. Verfahren nach einem der Ansprüche 1 bis 5, worin die Mischung ein Härtungsmittel mit Esterfunktion beinhaltet.

7. Verfahren zur Herstellung einer Phenol-Resolharzzusammensetzung mit verlängerter Lebensdauer, welches das Vermischen:
a) eines Phenol-Resolharzes mit einem pH-wert von 4,5 bis 9,5, einem Feststoffgehalt von 50 bis 90 Gew.-% des Harzes und einer Viskosität von 100 bis 4000 cps (0,1 bis 4 Pa s) bei 25°C,
b) von 2 bis 40 Gew.-% des Harzes eines Magnesium-Härtungsmittels, das aus leichtgebranntem Magnesiumoxid mit einer Oberfläche von wenigstens 10 m²/g und Magnesiumhydroxid ausgewählt ist, und
c) von 0,05 bis 5 Gew.-%, basierend auf dem Gewicht des Harzes, eines Verzögerers, welcher die Löslichkeit von Magnesium in dem Harz herabsetzt, umfaßt.

8. Verfahren nach Anspruch 7, worin das Harz einen pH-wert von 5 bis 8,5, ein molares Verhältnis von 1 bis 2,2 Mol Aldehyd für jedes Mol Phenol, eine Viskosität von 200 bis 3000 cps (0,2 bis 3 Pa s) bei 25°C und einen Feststoffgehalt von 50 bis 80%, basierend auf dem Gewicht des Harzes, aufweist und das Härtungsmittel leichtgebranntes Magnesiumoxid mit einer Oberfläche von wenigstens 10 m²/g ist.

9. Verfahren nach Anspruch 7 oder 8, worin der Härtungsverzögerer aus der Gruppe ausgewählt ist, bestehend aus:
a) einer Verbindung, welche ein Fluorid-, Difluorid-, Citrat-, Tartrat-, Aspartat-, Oxalat-, Phosphat-, Glutamat-, Maleat-, Iminodiacetat-, Iminodipropionat-, Aminoacetat-, Aminopropionat- oder Aminobenzoatanion liefert;
b) einem Tetraalkoxysilan mit 1 bis 3 Kohlenstoffatomen in jeder Alkoxygruppe und einem teilweise hydrolysierten Tetraalkoxysilan mit 1 bis 3 Kohlenstoffatomen in jeder Alkoxygruppe und
c) Melamin.

10. Verfahren nach Anspruch 9, worin die Verbindung, welche ein Fluorid-, Difluorid-, Citrat-, Tartrat-, Aspartat-, Oxalat-, Phosphat-, Glutamat-, Maleat-, Iminodiacetat-, Iminodipropionat-, Aminoacetat-, Aminopropionat- oder Aminobenzoatanion liefert, ein Kation, ausgewählt aus einem Wasserstoffion, einem Alkalimetallion, Ammonium- und alkyl-substituiertem Ammoniumion mit 1 bis 4 Kohlenstoffatomen in jeder Alkylgruppe liefert.

11. Verfahren nach Anspruch 9, worin das Anion Fluorid ist und die Zusammensetzung Calciumionen enthält, worin die Menge an zur Reaktion mit Fluoridionen verfügbaren Calciumionen geringer ist, als die verfügbaren Fluoridanionen.

12. Verfahren nach Anspruch 9, worin das Anion Difluorid ist und die Zusammensetzung Calciumionen enthält, worin die Menge der zur Reaktion mit Fluoridionen verfügbaren Calciumionen geringer ist, als die verfügbaren Difluoridionen.

13. Verfahren zur Herstellung einer Phenol-Resolharzzusammensetzung mit verlängerter Lebensdauer, welches das Vermischen:
a) eines Phenol-Resolharzes mit einem pH-Wert von 4,5 bis 9,5, einem Feststoffgehalt von 50 bis 90 Gew.-% des Harzes und einer Viskosität von 100 bis 4000 cps (0,1 bis 4 Pa s) bei 25°C;
b) von 2 bis 40 Gew.-% des Harzes eines Magnesium-Härtungsmittels, ausgewählt aus leichtgebranntem Magnesiumoxid mit einer Oberfläche von wenigstens 10 m²/g und Magnesiumhydroxid, und
c) von 0,05 bis 5 Gew.-%, basierend auf dem Gewicht des Harzes, eines Verzögerers, ausgewählt aus Anilin, einem substituierten Anilin mit bis zu einer N-Alkylgruppe und bis zu zwei Alkylgruppen am aromatischen Ring, worin jede Alkylgruppe 1 bis 3 Kohlenstoffatome umfaßt, Azelainsäure, Catechol, Glyoxal, Salicylamid, Salicylsäure, Sulfanilsäure, m-Anilinsulfonsäure und o-Anilinsulfonsäure, umfaßt.

14. Verfahren nach einem der Ansprüche 7 bis 13, worin 5 bis 40 Gew.-%, basierend auf dem Gewicht des Harzes, eines Härtungsmittels mit Esterfunktion ebenfalls mit den anderen Komponenten vermischt wird.

15. Verfahren nach Anspruch 14, worin das Härtungsmittel mit Esterfunktion ein Lacton ist, das aus β-Butyrolacton, γ-Butyrolacton, γ-Valerolacton, Caprolacton, β-Propiolacton, β-Isobutyrolacton, β-Isopentyllacton, γ-Isopentyllacton und δ-Pentyllacton ausgewählt ist, oder ein organisches Carbonat ist, das aus Propylencarbonat, Ethylenglycolcarbonat, 1,2-Butandiolcarbonat, 1,3-Butandiolcarbonat, 1,2-Pentandiolcarbonat und 1,3-Pentandiolcarbonat ausgewählt ist, oder ein Ester ist, der aus aliphatischen Carbonsäureestern aus Alkoholen mit 1 bis 10 Kohlenstoffatomen mit Säuren von 1 bis 10 Kohlenstoffatomen und Phenolestern ausgewählt ist.

16. Bindemittelzusammensetzung, umfassend eine Mischung eines Phenol-Resolharzes, eines Magnesium-Härtungsmittels zur Aushärtung des Harzes, ausgewählt aus Magnesiumhydroxid und leichtgebranntem Magnesiumoxid mit einer Oberfläche von wenigstens 10 m²/g, und eine Verzögererverbindung, um die Löslichkeit von Magnesium in dem Harz herabzusetzen.

17. Zusammensetzung nach Anspruch 16, worin das Magnesium-Härtungsmittel leichtgebranntes Magnesiumoxid mit einer Oberfläche von wenigstens 10 m²/g ist.

18. Bindemittelzusammensetzung, umfassend eine Mischung eines Phenol-Resolharzes, eines Magnesium-Härtungsmittels, um das Harz auszuhärten, ausgewählt aus Magnesiumhydroxid und leichtgebranntem Magnesiumoxid mit einer Oberfläche von wenigstens 10 m²/g, und eine Verzögererverbindung, ausgewählt aus Anilin, einem substituierten Anilin mit bis zu einer N-Alkylgruppe und bis zu zwei Alkylgruppen am aromatischen Ring, worin jede Alkylgruppe 1 bis 3 Kohlenstoffatome aufweist, Azelainsäure, Catechol, Glyoxal, Salicylamid, Salicylsäure, Sulfanilsäure, m-Anilinsulfonsäure und o-Anilinsulfonsäure.

19. Zusammensetzung nach einem der Ansprüche 16 bis 18, welche auch ein Härtungsmittel mit Esterfunktion beinhaltet.

20. Zusammensetzung nach Anspruch 19, worin das Härtungsmittel mit Esterfunktion ein Lacton ist, ausgewählt aus β-Butyrolacton, γ-Butyrolacton, γ-Valerolacton, Caprolacton, β-Propiolacton, β-Isobutyrolacton, β-Isopentyllacton, γ-Isopentyllacton und δ-Pentyllacton, oder ein organisches Carbonat ist, ausgewählt aus Propylencarbonat, Ethylenglycolcarbonat, 1,2-Butandiolcarbonat, 1,3-Butandiolcarbonat, 1,2-Pentandiolcarbonat und 1,3-Pentandiolcarbonat, oder ein Ester ist, ausgewählt aus aliphatischen Carbonsäureestern von Alkoholen mit 1 bis 10 Kohlenstoffatomen mit Säuren von 1 bis 10 Kohlenstoffatomen und Phenolestern.

21. Zusammensetzung nach Anspruch 19 oder 20, worin das Härtungsmittel mit Esterfunktion in einer Menge von 5 bis 40 Gew.-%, basierend auf dem Gewicht des Harzes, anwesend ist.

22. Zusammensetzung nach einem der Ansprüche 16 bis 21, worin das Phenol-Resolharz das Kondensationsprodukt aus Phenol und Formaldehyd ist.

23. Zusammensetzung nach einem der Ansprüche 16 bis 22, worin das Phenol-Resolharz einen pH-Wert von 4,5 bis 9,5, einen Harz-Feststoffgehalt von 50 bis 90 Gew.-% des Harzes und eine Viskosität von 100 bis 4000 cps (0,1 bis 4 Pa s) bei 25°C besitzt.

24. Bindemittelzusammensetzung, umfassend eine Mischung eines Phenol-Resolharzes, eines Magnesium-Härtungsmittels, um das Harz auszuhärten, ausgewählt aus Magnesiumhydroxid und leichtgebranntem Magnesiumoxid mit einer Oberfläche von wenigstens 10 m²/g, und eine die Aushärtung verzögernde Verbindung, ausgewählt aus der Gruppe, bestehend aus:
a) Verbindungen, welche ein Fluorid-, Difluorid-, Citrat-, Tartrat-, Aspartat-, Oxalat-, Phosphat-, Glutamat-, Maleat-, Iminodiacetat-, Iminodipropionat-, Aminoacetat-, Aminopropionat- oder Aminobenzoatanion liefern, und
b) einem Tetraalkoxysilan mit 1 bis 3 Kohlenstoffatomen in jeder Alkoxygruppe und einem teilweise hydrolysierten Tetraalkoxysilan mit 1 bis 3 Kohlenstoffatomen in jeder Alkoxygruppe.

25. Zusammensetzung nach einem der Ansprüche 16 bis 24, worin die Verzögererverbindung in einer Menge von 0,05 bis 5 Gew.-% des Harzes anwesend ist.

26. Bindemittelzusammensetzung nach Anspruch 18, welche eine Mischung aus
a) einem Phenol-Resolharz mit einem pH-Wert von 5 bis 9, einem Feststoffgehalt von 50 bis 80 Gew.-% des Harzes und einer Viskosität von 250 bis 3000 cps (0,25 bis 3 Pa s) bei 25°C,
b) leichtgebranntem Magnesiumoxid in einer Menge von 5 bis 20 Gew.-% des Harzes mit einer Oberfläche von 25 bis 100 m²/g,
c) 0,5 bis 5 Gew.-% des Harzes eines Verzögerers, ausgewählt aus Anilin, einem substituierten Anilin mit bis zu einer N-Alkylgruppe und bis zu zwei Alkylgruppen am aromatischen Ring, worin jede Alkylgruppe von 1 bis 3 Kohlenstoffatome besitzt, Azelainsäure, Catechol, Glyoxal, Salicylamid, Salicylsäure, Sulfanilsäure, m-Anilinsulfonsäure und o-Anilinsulfonsäure, und
d) von 5 bis 40 Gew.-% des Harzes eines Härtungsmittels mit Esterfunktion, ausgewählt aus Lacton, einem organischen Carbonat und einem Carbonsäureester, umfaßt.

27. Bindemittelzusammensetzung, wobei das Bindemittel in seiner fluiden Form eine Mischung umfaßt, aus:
a) einem Phenol-Resolharz mit einem pH-Wert von 4,5 bis 9,5, einem Feststoffgehalt von 50 bis 90 Gew.-% des Harzes und einer Viskosität von 100 bis 4000 cps (0,1 bis 4 Pa s) bei 25°C,
b) einem leichtgebrannten Magnesiumoxid mit einer Oberfläche von wenigstens 10 m²/g in einer Menge, die ausreichend ist, um die Geschwindigkeit der Aushärtung des Harzes zu erhöhen,
c) einem Härtungsmittel mit Esterfunktion in einer Menge, die ausreicht, um die Geschwindigkeit der Aushärtung der Mischung zu erhöhen, und
d) einer Verzögererverbindung in einer Menge, die ausreicht, um die Löslichkeit von Magnesium in dem Harz herabzusetzen.

28. Ausgehärtete Bindemittelzusammensetzung, wobei das Bindemittel in seiner fluiden Form eine Mischung umfaßt, aus:
a) einem Phenol-Resolharz mit einem pH-Wert von 4,5 bis 9,5, einem Harzfeststoffgehalt von 50 bis 90 Gew.-% des Harzes und einer Viskosität von 100 bis 4000 cps (0,1 bis 4 Pa s) bei 25°C,
b) einem leichtgebrannten Magnesiumoxid mit einer Oberfläche von wenigstens 10 m²/g in einer Menge, die ausreichend ist, um die Geschwindigkeit der Aushärtung des Harzes zu erhöhen,
c) einem Härtungsmittel mit Esterfunktion in einer Menge, die ausreicht, um die Geschwindigkeit der Aushärtung der Mischung zu erhöhen, und
d) einer Verzögererverbindung, die aus der Gruppe ausgewahlt ist, bestehend aus:
a) Verbindungen, welche ein Fluorid-, Difluorid-, Citrat-, Tartrat-, Aspartat-, Oxalat-, Phosphat-, Glutamat-, Maleat-, Iminodiacetat-, Iminodipropionat-, Aminoacetat-, Aminopropionat- oder Aminobenzoatanion liefern, und
b) einem Tetraalkoxysilan mit 1 bis 3 Kohlenstoffatomen in jeder Alkoxygruppe, einem teilweise hydrolysierten Tetraalkoxysilan mit 1 bis 3 Kohlenstoffatomen in jeder Alkoxygruppe.

29. Ausgehärtete Bindemittelzusammensetzung, wobei das Bindemittel in seiner fluiden Form eine Mischung umfaßt, aus:
a) einem Phenol-Resolharz mit einem pH-Wert von 4,5 bis 9,5, einem Harzfeststoffgehalt von 50 bis 90 Gew.-% des Harzes und einer Viskosität von 100 bis 4000 cps (0,1 bis 4 Pa s) bei 25°C,
b) einem leichtgebrannten Magnesiumoxid mit einer Oberfläche von wenigstens 10 m²/g in einer Menge, die ausreicht, um die Geschwindigkeit der Aushärtung des Harzes zu erhöhen,
c) einem Härtungsmittel mit Esterfunktion in einer Menge, die ausreicht, um die Geschwindigkeit der Aushärtung der Mischung zu erhöhen, und
d) einer Verzögererverbindung, ausgewählt aus Anilin, einem substituierten Anilin mit bis zu einer N-Alkylgruppe und bis zu zwei Alkylgruppen am aromatischen Ring, worin jede Alkylgruppe 1 bis 3 Kohlenstoffatome besitzt, Azelainsäure, Catechol, Glyoxal, Salicylamid, Salicylsäure, Sulfanilsäure, m-Anilinsulfonsäure und o-Anilinsulfonsäure.

30. Zusammensetzung nach einem der Ansprüche 27 bis 29, worin das Harz durch Kondensation von Phenol und Formaldehyd hergestellt ist.

31. Thermisch ausgehärtete Bindemittelzusammensetzung, wobei das Bindemittel in seiner fluiden Form eine Mischung umfaßt, aus:
a) einem Phenol-Resolharz mit einem pH-Wert von 4,5 bis 9,5, einem Harzfeststoffgehalt von 50 bis 90 Gew.-% des Harzes und einer Viskosität von 100 bis 4000 cps (0,1 bis 4 Pa s) bei 25°C,
b) einem leichtgebrannten Magnesiumoxid mit einer Oberfläche von wenigstens 10 m²/g in einer Menge, die ausreicht, um die Geschwindigkeit der Aushärtung des Harzes zu erhöhen,
c) einem Härtungsmittel mit Esterfunktion in einer Menge, die ausreicht, um die Geschwindigkeit der Aushärtung der Mischung zu erhöhen, und
d) einer Verzögererverbindung in einer Menge, die ausreicht, um die Löslichkeit von Magnesium in dem Harz herabzusetzen.

32. Thermisch ausgehärtete Bindemittelzusammensetzung, wobei das Bindemittel in seiner fluiden Form eine Mischung umfaßt, aus:
a) einem Phenol-Resolharz mit einem pH-Wert von 4,5 bis 9,5, einem Harzfeststoffgehalt von 50 bis 90 Gew.-% des Harzes und einer Viskosität von 100 bis 4000 cps (0,1 bis 4 Pa s) bei 25°C,
b) einem leichtgebrannten Magnesiumoxid mit einer Oberfläche von wenigstens 10 m²/g in einer Menge, die ausreicht, um die Geschwindigkeit der Aushärtung des Harzes zu erhöhen,
c) einem Härtungsmittel mit Esterfunktion in einer Menge, die ausreicht, um die Geschwindigkeit der Aushärtung der Mischung zu erhöhen, und
d) einer Verzögererverbindung, ausgewählt aus der Gruppe, bestehend aus:
i) Verbindungen, welche ein Fluorid-, Difluorid-, Citrat-, Tartrat-, Aspartat-, Oxalat-, Phosphat-, Glutamat-, Maleat-, Iminodiacetat-, Iminodipropionat-, Aminoacetat-, Aminopropionat- oder Aminobenzoatanion liefern, und
ii) einem Tetraalkoxysilan mit 1 bis 3 Kohlenstoffatomen in jeder Alkoxygruppe, einem teilweise hydrolysierten Tetraalkoxysilan mit 1 bis 3 Kohlenstoffatomen in jeder Alkoxygruppe.

33. Thermisch ausgehärtete Bindemittelzusammensetzung, wobei das Bindemittel in seiner fluiden Form eine Mischung umfaßt, aus:
a) einem Phenol-Resolharz mit einem pH-Wert von 4,5 bis 9,5, einem Harzfeststoffgehalt von 50 bis 90 Gew.-% des Harzes und einer Viskosität von 100 bis 4000 cps (0,1 bis 4 Pa s) bei 25°C,
b) einem leichtgebrannten Magnesiumoxid mit einer Oberfläche von wenigstens 10 m²/g in einer Menge, die ausreicht, um die Geschwindigkeit der Aushärtung des Harzes zu erhöhen,
c) einem Härtungsmittel mit Esterfunktion in einer Menge, die ausreicht, um die Geschwindigkeit der Aushärtung der Mischung zu erhöhen, und
d) einem Verzögerer, ausgewählt aus Anilin, einem substituierten Anilin mit bis zu einer N-Alkylgruppe und bis zu zwei Alkylgruppen am aromatischen Ring, worin jede Alkylgruppe 1 bis 3 Kohlenstoffatome besitzt, Azelainsäure, Catechol, Glyoxal, Salicylamid, Salicylsäure, Sulfanilsäure, m-Anilinsulfonsäure und o-Anilinsulfonsäure.

34. Verfahren zur Herstellung einer Rohbeschickungszusammensetzung, welches Verfahren das Vermischen eines Zuschlagstoffmateriales mit einer Menge der Bindemittelzusammensetzung nach einem der Ansprüche 16 bis 26 umfaßt, die ausreichend ist, um den Zuschlagsstoff beim Aushärten zu binden.

35. Verfahren nach Anspruch 34, worin der Zuschlagsstoff aus Aluminiumoxid, Siliciumdioxid und Mischungen davon ausgewählt ist.

36. Verfahren nach Anspruch 34 oder 35, worin die Mischung auch ein organofunktionelles Silan in einer Menge beinhaltet, die ausreicht, um die Adhäsion zwischen dem Harz und dem Zuschlagsstoff zu verbessern.

37. Verfahren zum Binden von Schleifteilchen auf einem Trägermaterial, welches umfaßt:
a) Beschichten eines Trägermaterials mit einem Bindemittel, welches eine Mischung aus einem Phenol-Resolharz, leichtgebranntem Magnesiumoxid mit einer Oberfläche von wenigstens 10 m²/g in einer Menge, die ausreicht, um die Aushärtungsgeschwindigkeit des Harzes zu erhöhen, und einer Verzögererverbindung in einer Menge, die ausreicht, um die Löslichkeit von Magnesiumoxid in dem Harz herabzusetzen, umfaßt und
b) Aufbringen von Schleifteilchen auf die Beschichtung, um ein beladenes Trägermaterial zu erzeugen.

38. Verfahren nach Anspruch 37, worin das beladene Trägermaterial bei einer Temperatur von 176°F bis 212°F (80°C bis 100°C) während einer Zeitdauer erwärmt wird, die ausreicht, um eine teilweise ausgehärtete Beschichtung zu liefern, die im Kontakt nicht klebrig ist.

39. Verfahren nach Anspruch 37 oder 38, worin die Verzögererverbindung aus der Gruppe ausgewählt ist, bestehend aus:
a) Verbindungen, welche ein Fluorid-, Difluorid-, Citrat-, Tartrat-, Aspartat-, Oxalat-, Phosphat-, Glutamat-, Maleat-, Iminodiacetat-, Iminodipropionat-, Aminoacetat-, Aminopropionat- oder Aminobenzoatanion liefern, und
b) einem Tetraalkoxysilan mit 1 bis 3 Kohlenstoffatomen in jeder Alkoxygruppe, einem teilweise hydrolysierten Tetraalkoxysilan mit 1 bis 3 Kohlenstoffatomen in jeder Alkoxygruppe.

40. Verfahren zum Binden von Schleifteilchen auf einem Trägermaterial, welches umfaßt:
a) Beschichten eines Trägermaterials mit einem Bindemittel, welches eine Mischung aus einem Phenol-Resolharz, leichtgebranntem Magnesiumoxid mit einer Oberfläche von wenigstens 10 m²/g in einer Menge, die ausreicht, um die Aushärtungsgeschwindigkeit des Harzes zu erhöhen, und einer Verzögererverbindung umfaßt, die ausgewählt ist aus Anilin, einem substituierten Anilin mit bis zu einer N-Alkylgruppe und bis zu zwei Alkylgruppen am aromatischen Ring, worin jede Alkylgruppe 1 bis 3 Kohlenstoffatome aufweist, Azelainsäure, Catechol, Glyoxal, Salicylamid, Salicylsäure, Sulfanilsäure, m-Anilinsulfonsäure und o-Anilinsulfonsäure, und
b) Aufbringen von Schleifteilchen auf die Beschichtung, um ein beladenes Trägermaterial zu erzeugen.

41. Verfahren nach einem der Ansprüche 37 bis 40, worin das Harz das Kondensationsprodukt aus Phenol und Formaldehyd ist.

42. Verfahren nach einem der Ansprüche 37 bis 41, worin die Mischung auch ein Härtungsmittel mit Esterfunktion enthält, in einer Menge, die ausreicht, um die Aushärtungsgeschwindigkeit der Mischung zu erhöhen.

43. Verfahren zur Herstellung eines beschichteten Schleifmateriales, welches umfaßt:
a) Beschichten eines Trägermaterials mit einem Bindemittel, welches eine Mischung aus: (1) einem Phenol-Resolharz, (2) leichtgebranntem Magnesiumoxid mit einer Oberfläche von wenigstens 10 m²/g in einer Menge, die ausreicht, um die Aushärtungsgeschwindigkeit des Harzes zu erhöhen, (3) einer Verzögererverbindung in einer Menge, die ausreicht, um die Löslichkeit von Magnesium in dem Harz herabzusetzen und (4) einem Aushärtungsmittel mit Esterfunktion in einer Menge, die ausreicht, um die Aushärtungsgeschwindigkeit der Mischung zu erhöhen, umfaßt;
b) Aufbringen von Schleifteilchen auf die Beschichtung, um ein beladenes Trägermaterial zu erzeugen;
c) Erhitzen des beladenen Trägermaterials bei einer Temperatur von 170°F bis 212°F (76°C bis 100°C) für eine Zeitdauer, die ausreicht, um eine teilweise ausgehärtete Beschichtung zu liefern, die im Kontakt nicht klebrig ist;
d) Aufbringen einer zweiten Beschichtung über der teilweise ausgehärteten Beschichtung, wobei die zweite Beschichtung ein Bindemittel umfaßt, das in Paragraph "a)" oben angegeben ist und bis zu 100 Gew.-% Füllstoff, basierend auf dem Gewicht des Harzes, umfaßt, und
e) Aushärten des Harzes bei einer Temperatur von 176°F bis 266°F (80°C bis 130°C).

44. Verfahren nach Anspruch 43, worin die Verzögererverbindung aus der Gruppe ausgewählt ist, bestehend aus:
i) Verbindungen, welche ein Fluorid-, Difluorid-, Citrat-, Tartrat-, Aspartat-, Oxalat-, Phosphat-, Glutamat-, Maleat-, Iminodiacetat-, Iminodipropionat-, Aminoacetat-, Aminopropionat- oder Aminobenzoatanion liefern, und
ii) einem Tetraalkoxysilan mit 1 bis 3 Kohlenstoffatomen in jeder Alkoxygruppe und einem teilweise hydrolysierten Tetraalkoxysilan mit 1 bis 3 Kohlenstoffatomen in jeder Alkoxygruppe.

45. Verfahren zur Herstellung eines beschichteten Schleifmittels, welches umfaßt:
a) Beschichten eines Trägermaterials mit einem Bindemittel, welches eine Mischung umfaßt, aus: (1) einem Phenol-Resolharz, (2) leichtgebranntem Magnesiumoxid mit einer Oberfläche von wenigstens 10 m²/g in einer Menge, die ausreicht, um die Aushärtungsgeschwindigkeit des Harzes zu erhöhen, (3) einer Verzögererverbindung, ausgewählt aus Anilin, einem substituierten Anilin mit bis zu einer N-Alkylgruppe und bis zu zwei Alkylgruppen am aromatischen Ring, worin jede Alkylgruppe 1 bis 3 Kohlenstoffatome aufweist, Azelainsäure, Catechol, Glyoxal, Salicylamid, Salicylsäure, Sulfanilsäure, m-Anilinsulfonsäure und o-Anilinsulfonsäure, und (4) einem Härtungsmittel mit Esterfunktion in einer Menge, die ausreicht, um die Aushärtungsgeschwindigkeit der Mischung zu erhöhen;
b) Aufbringen von Schleifteilchen auf die Beschichtung, um ein beladenes Trägermaterial zu erzeugen;
c) Erhitzen des beladenen Trägermateriales bei einer Temperatur von 170°F bis 212°F (76°C bis 100°C) für eine Zeitdauer, die ausreicht, um eine teilweise ausgehärtete Beschichtung zu liefern, welche im Kontakt nicht klebrig ist;
d) Auftragen einer zweiten Beschichtung über die teilweise ausgehärtete Beschichtung, wobei die zweite Beschichtung ein Bindemittel, das in Paragraph "a)" oben angegeben ist und bis zu 100 Gew.-% Füllstoff, basierend auf dem Gewicht des Harzes, umfaßt, und
e) Aushärten des Harzes bei einer Temperatur von 176°F bis 266°F (80°C bis 130°C).

46. Verfahren nach einem der Ansprüche 43 bis 45, worin das Phenol-Resolharz das Kondensationsprodukt von Phenol und Formaldehyd ist, wobei das Molverhältnis von Phenol zu Formaldehyd 1:1 bis 1:2,2 beträgt, das Harz einen pH-Wert von 5 bis 9,5 aufweist, einen Feststoffgehalt von 50 bis 80 Gew.-% des Harzes, eine Viskosität von 200 bis 4000 cps (0,2 bis 4 Pa s) bei 25°C, einen Wassergehalt von 5 bis 20 Gew.-% des Harzes, die Menge an Magnesiumoxid von 2 bis 35 Gew.-%, bezogen auf das Harz, variiert und eine Oberfläche von wenigstens 10 m²/g besitzt, die Menge des Härtungsmittels mit Esterfunktion 10 bis 25 Gew.-% des Harzes beträgt und die Menge des Verzögerers von 0,05 bis 5 Gew.-% des Harzes variiert.

47. Verfahren nach einem der Ansprüche 43 bis 46, worin der Füllstoff Calciumcarbonat in einer Menge von 50 bis 90 Gew.-% des Harzes ist.

48. Verfahren zur Herstellung einer Bindemittelzusammensetzung, welches das Vermischen
a) eines Phenol-Resolharzes mit einem pH-Wert von 4,5 bis 9,5, einem Harzfeststoffgehalt von 50 bis 90 Gew.-% des Harzes und einer Viskosität von 100 bis 4000 cps (0,1 bis 4 Pa s) bei 25°C;
b) eines leichtgebraunten Magnesiumoxid-Härtemittels mit einer Oberfläche von wenigstens 10 m²/g in einer Menge, die ausreicht, um die Aushärtungsgeschwindigkeit des Harzes zu erhöhen;
c) eines Härtungsmittels mit Esterfunktion in einer Menge, die ausreicht, um die Aushärtungsgeschwindigkeit der Zusammensetzung zu erhöhen;
d) einer Verzögererverbindung in einer Menge, die ausreicht, um die Löslichkeit von Magnesiumoxid in dem Harz herabzusetzen, und
e) einer Calcium enthaltenden Verbindung, die aus der Gruppe ausgewählt ist, bestehend aus Calciumoxid, Calciumhydroxid und kalziniertem Dolomit, worin die Menge der Calciumverbindung in der Mischung in geringerer Menge relativ zum Magnesiumoxid vorliegt, umfaßt.

49. Verfahren nach Anspruch 48, worin die Menge an Calciumverbindung etwa ein Viertel der Menge an Magnesiumoxid nicht übersteigt und der Verzögerer ein Mitglied ist, das ausgewählt ist aus der Gruppe, bestehend aus:
a) Verbindungen, welche ein Fluorid-, Difluorid-, Citrat-, Tartrat-, Aspartat-, Oxalat-, Phosphat-, Glutamat-, Maleat-, Iminodiacetat-, Iminodipropionat-, Aminoacetat-, Aminopropionat- oder Aminobenzoatanion liefern, und
b) einem Tetraalkoxysilan mit 1 bis 3 Kohlenstoffatomen in jeder Alkoxygruppe und einem teilweise hydrolysierten Tetraalkoxysilan mit 1 bis 3 Kohlenstoffatomen in jeder Alkoxygruppe.

50. Verfahren zur Herstellung einer Bindemittelzusammensetzung, welches das Vermischen:
a) eines Phenol-Resolharzes mit einem pH-Wert von 4,5 bis 9,5, einem Feststoffgehalt von 50 bis 90 Gew.-% des Harzes und einer Viskosität von 100 bis 4000 cps (0,1 bis 4 Pa s) bei 25°C;
b) eines leichtgebrannten Magnesiumoxid-Härtemittels mit einer Oberfläche von wenigstens 10 m²/g in einer Menge, die ausreicht, um die Aushärtungsgeschwindigkeit des Harzes zu erhöhen;
c) eines Härtungsmittels mit Esterfunktion in einer Menge, die ausreicht, um die Aushärtungsgeschwindigkeit der Zusammensetzung zu erhöhen;
d) einer Verzögererverbindung, ausgewählt aus Anilin, einem substituierten Anilin mit bis zu einer N-Alkylgruppe und bis zu zwei Alkylgruppen am aromatischen Ring, worin jede Alkylgruppe 1 bis 3 Kohlenstoffatome besitzt, Azelainsäure, Catechol, Glyoxal, Salicylamid, Salicylsäure, Sulfanilsäure, m-Anilinsulfonsäure und o-Anilinsulfonsäure, und
e) einer Calcium enthaltenden Verbindung, ausgewählt aus der Gruppe, bestehend aus Calciumoxid, Calciumhydroxid und kalziniertem Dolomit, worin die Menge der Calciumverbindung in der Mischung in einer geringeren Menge relativ zum Magnesiumoxid vorliegt, umfaßt.

51. Verfahren zur Herstellung einer Phenol-Resolharzzusammensetzung mit verlängerter Lebensdauer, welches das Vermischen
a) eines Phenol-Resolharzes mit einem pH-Wert von 4,5 bis 9,5, einem Harzfeststoffgehalt von 50 bis 90 Gew.-% des Harzes und einer Viskosität von 100 bis 4000 cps (0,1 bis 4 Pa s) bei 25°C;
b) von 5 bis 50 Gew.-%, bezogen auf das Harz, leichtgebranntes Magnesiumoxid mit verschiedenen Oberflächen in einem Gewichtsverhältnis eines Teils des Magnesiumoxides mit einer Oberfläche von wenigstens 50 m²/g und 0,5 bis 4 Teile des Magnesiumoxides mit einer Oberfläche von 10 bis 25 m²/g und
c) von 0,05 bis 5 Gew.-%, basierend auf dem Gewicht des Harzes, einer Verzögererverbindung, welche die Löslichkeit von Magnesium in dem Harz herabsetzt, umfaßt.

52. Verfahren nach Anspruch 50, worin ein Teil des Magnesiumoxides eine Oberfläche von wenigstens 50 m²/g und 1 bis 3 Teile eine Oberfläche von 10 bis 25 m²/g aufweisen, und worin die Verzögererverbindung ein Mitglied ist, das aus der Gruppe ausgewählt ist, bestehend aus:
1) einer Verbindung, welche Fluorid-, Difluorid-, Citrat-, Tartrat-, Aspartat-, Oxalat-, Phosphat-, Glutamat-, Maleat-, Iminodiacetat-, Iminodipropionat-, Aminoacetat-, Aminopropionat- und Aminobenzoatanion liefert;
2) einem Tetraalkoxysilan mit 1 bis 3 Kohlenstoffatomen in jeder Alkoxygruppe und ein teilweise hydrolysiertes Tetraalkoxysilan mit 1 bis 3 Kohlenstoffatomen in jeder Alkoxygruppe.

53. Verfahren zur Herstellung einer Phenol-Resolharzzusammensetzung mit verlängerter Lebensdauer, welches das Vermischen:
a) eines Phenol-Resolharzes mit einem pH-Wert von 4,5 bis 9,5, einem Feststoffgehalt von 50 bis 90 Gew.-% des Harzes und einer Viskosität von 100 bis 4000 cps (0,1 bis 4 Pa s) bei 25°C;
b) von 5 bis 50 Gew.-% des Harzes leichtgebranntes Magnesiumoxid mit verschiedenen Oberflächen in einem Gewichtsverhältnis von einem Teil des Magnesiumoxides mit einer Oberfläche von wenigstens 50 m²/g und 1 bis 3 Teilen des Magnesiumoxides mit einer Oberfläche von 10 bis 25 m²/g und
c) von 0,05 bis 5 Gew.-%, basierend auf dem Gewicht des Harzes, einer Verzögererverbindung, ausgewählt aus Anilin, einem substituierten Anilin mit bis zu einer N-Alkylgruppe und bis zu zwei Alkylgruppen am aromatischen Ring, worin jede Alkylgruppe 1 bis 3 Kohlenstoffatome besitzt, Azelainsäure, Catechol, Glyoxal, Salicylamid, Salicylsäure, Sulfanilsäure, m-Anilinsulfonsäure und o-Anilinsulfonsäure, umfaßt.

## Revendications

1. Procédé pour retarder le durcissement d'un mélange d'une résine phénolique de type résol et d'un agent de durcissement à base de magnésium, choisi dans l'ensemble consistant en de l'oxyde de magnésium légèrement calciné, ayant une surface spécifique valant au moins 10 m²/g et de l'hydroxyde de magnésium, qui comprend le mélangeage de ladite résine et dudit agent durcisseur avec un composé retardateur du durcissement et qui diminue la solubilité du magnésium dans la résine.

2. Procédé pour retarder le durcissement d'un mélange d'une résine phénolique de type résol et d'un durcisseur à base de magnésium, choisi dans l'ensemble consistant en de l'oxyde de magnésium légèrement calciné, ayant une surface spécifique d'au moins 10 m²/g, et de l'oxyde de magnésium, qui comprend le mélangeage de ladite résine et dudit agent durcisseur avec un composé retardateur du durcissement et qui est choisi parmi :
a) des composés fournissant un anion fluorure, bifluorure, citrate, tartrate, aspartate, oxalate, phosphate, glutamate, malate, imino diacétate, imino diproprionate, amino acétate, aminopropionate ou aminobenzoate; et
b) un tétraalcoxy silane ayant 1 à 3 atomes de carbone dans chaque groupe alcoxy; et un tétraalcoxy silane, partiellement hydrolysé et composé 1 à 3 atomes de carbone dans chaque groupe alcoxy.

3. Procédé pour retarder le durcissement d'un mélange d'une résine phénolique de type résol et d'un agent de durcissement à base de magnésium, choisi dans l'ensemble consistant en de l'oxyde de magnésium légèrement calciné, ayant une surface spécifique valant au moins 10 m²/g, et de l'oxyde de magnésium, qui comprend le mélangeage de ladite résine et dudit agent durcisseur avec un composé retardateur du durcissement et qui est choisi parmi l'aniline, une aniline substituée comportant jusqu'à un groupe N-alkyle et jusqu'à deux groupes alkyles sur le noyau aromatique, chaque groupe alkyle ayant 1 à 3 atomes de carbone, l'acide azélaïque, le catéchol, le glyoxal, le salicylamide, l'acide salicylique, l'acide sulfanilique, l'acide m-aniline sulfonique et l'acide o-aniline sulfonique.

4. Procédé selon l'une quelconque des revendications 1 à 3, dans lequel la résine phénolique de type résol est le produit de condensation du phénol et du formaldéhyde.

5. Procédé selon l'une quelconque des revendications 1 à 4, dans lequel l'agent durcisseur à base de magnésium est de l'oxyde de magnésium légèrement calciné ayant une surface spécifique valant 25 mètres carré par gramme.

6. Procédé selon l'une quelconque des revendications 1 à 5, dans lequel le mélange comprend un agent durcisseur comportant un groupe ester fonctionnel.

7. Procédé pour préparer une composition de résine phénolique de type résol ayant une durée étendue de possibilité de mise en oeuvre ou de travail, le procédé comprenant le mélangeage :
a) d'une résine phénolique de type résol ayant un pH de 4,5 à 9,5, une teneur en des solides de 50 % à 90 % en poids de la résine, et une viscosité de 0,1 à 4 Pa.s (100 à 4 000 cP) à 25°C;
b) de 2 % à 40 % en poids, par rapport à la résine, d'un agent durcisseur à base de magnésium, choisi parmi de l'oxyde de magnésium légèrement calciné ayant une surface spécifique valant au moins 10 m²/g et de l'hydroxyde de magnésium; et
c) de 0,05 à 5 % en poids, sur la base du poids de la résine, d'un retardateur qui diminue la solubilité du magnésium dans la résine.

8. Procédé selon la revendication 7, dans lequel la résine a un pH de 5 à 8,5, un rapport molaire de 1 à 2,2 moles d'aldéhyde pour chaque mole du phénol, une viscosité de 0,2 à 3 Pa.s (200 à 3000 cP) à 25°C et une teneur en des solides de 50 à 80 % sur la base du poids de la résine; et le durcisseur est de l'oxyde de magnésium légèrement calciné ayant une surface spécifique valant au moins 10 m²/g.

9. Procédé selon l'une des revendications 7 ou 8, dans lequel le retardateur du durcissement est choisi dans l'ensemble consistant en :
a) un composé qui fournit un anion fluorure, difluorure, citrate, tartrate, aspartate, oxalate, phosphate, glutamate, malate, iminodiacètate, iminodipropionate, amino acétate, amino propionate ou amino benzoate;
b) un tétraalcoxy silane ayant 1 à 3 atomes de carbone dans chaque groupe alcoxy; et un tétraalcoxy silane partiellement hydrolysé, ayant 1 à 3 atomes de carbone dans chaque groupe alcoxy; et
c) la mélamine.

10. Procédé selon la revendication 9, dans lequel le composé qui fournit un anion fluorure, bifluorure, citrate, tartrate, aspartate, oxalate, phosphate, glutamate, malate, imino diacétate, imino diproprionate, amino acétate, amino propionate ou amino benzoate fournit un cation choisi par l'ion hydrogène, un ion de métal alcalin, un ion ammonium et ammonium à substituant(s) alkyle(s) comportant 1 à 4 atomes de carbone dans chaque groupe alkyle.

11. Procédé selon la revendication 9, dans lequel l'anion est un anion fluorure et la composition contient des ions calcium, la quantité des ions calcium disponibles pour réagir avec les ions fluorures étant inférieure à la quantité des anions fluorures disponibles.

12. Procédé selon la revendication 9, dans lequel l'anion est un anion bifluorure, et la composition contient des ions calcium, la quantité des ions calcium disponibles pour réagir avec les ions fluorures étant inférieure à celle des ions bifluorures disponibles.

13. Procédé pour préparer une composition phénolique de type résol, ayant une durée étendue de travail ou de possibilité de mise en oeuvre, qui comprend le mélangeage :
a) d'une résine phénolique de type résol, ayant un pH de 4,5 à 9,5, une teneur des solides de 50 % à 90 % du poids de la résine et une viscosité de 0,1 à 4 Pa.s (100 à 4 000 cP) à 25°C;
b) de 2 % à 40 % du poids de la résine d'un agent durcisseur à base de magnésium, choisi parmi de l'oxyde de magnésium légèrement calciné, ayant une surface spécifique valant au moins 10 m²/g , et l'hydroxyde de magnésium; et
c) de 0,05 % à 5 % en poids, sur la base du poids de la résine, d'un retardateur choisi parmi l'aniline, une aniline substituée comportant jusqu'à un groupe N-alkyle et jusqu'à deux groupes alkyles sur le noyau aromatique, chaque groupe alkyle ayant 1 à 3 atomes de carbone, l'acide azélaïque, le catéchol, le glyoxal, le salicylamide, l'acide salicylique, l'acide sulfanilique, l'acide m-aniline sulfonique et l'acide o-aniline sulfonique.

14. Procédé selon l'une quelconque des revendications 7 à 13, dans lequel on mélange également aux autres constituants de 5 à 40 % en poids, sur la base du poids de la résine, d'un agent durcisseur comportant un groupe ester fonctionnel.

15. Procédé selon la revendication 14, dans lequel l'agent durcisseur comportant un groupe ester fonctionnel est une lactone choisie parmi la β-butyrolactone, la gamma butyrolactone, la gamma-valérolactone, la caprolactone, la béta-propiolactone, la béta-isobutyrolactone, la béta-pentyllactone, la gamma-isopentyllactone et la delta-(pentyllactone) ou est un carbonate organique choisi parmi du carbonate de propylène, du carbonate d'éthylène glycol, du carbonate de 1,2-butane diol, du carbonate de 1,3-butane diol, du carbonate de 1,2-pentanediol et du carbonate de 1,3-pentanediol, ou bien il s'agit d'un ester choisi parmi des esters d'acides carboxyliques aliphatiques dérivant d'alcools ayant 1 à 10 atomes de carbone avec des acides ayant 1 à 10 atomes de carbone, et des esters phénoliques.

16. Composition de liant comprenant un mélange d'une résine phénolique du type résol, d'un agent de durcissement à base de magnésium pour durcir la résine, cet agent étant choisi parmi l'hydroxyde de magnésium et de l'oxyde de magnésium légèrement calciné ayant une surface spécifique valant au moins 10 m²/g et un retardateur destiné à diminuer la solubilité du magnésium dans la résine.

17. Composition selon la revendication 16, dans laquelle le durcisseur à base de magnésium est de l'oxyde de magnésium légèrement calciné ayant une surface spécifique valant au moins 10 m²/g.

18. Composition de liant comprenant un mélange d'une résine phénolique de type résol, d'un durcisseur à base de magnésium, destiné à durcir la résine et choisi parmi l'hydroxyde de magnésium et de l'oxyde de magnésium légèrement calciné ayant une surface spécifique valant au moins 10 m²/g, et d'un composé retardateur choisi parmi l'aniline, une aniline substituée ayant jusqu'à un groupe N-alkyle et ayant jusqu'à deux groupes alkyles fixés sur le noyau aromatique, chaque groupe alkyle comportant 1 à 3 atomes de carbone, l'acide azélaïque, le catéchol, le glyoxal, le salicylamide, l'acide salicylique, l'acide sulfanilique, l'acide m-aniline sulfonique et l'acide o-aniline sulfonique.

19. Composition selon l'une quelconque des revendications 16 à 18, qui comprend également un durcisseur mettant en oeuvre un groupe ester fonctionnel.

20. Composition selon la revendication 19, dans laquelle le durcisseur mettant en oeuvre un groupe fonctionnel ester est une lactone choisie parmi la β-butyrolactone, la gamma-butyrolactone, la gamma-valérolactone, la caprolactone, la béta-propiolactone, la béta-isobutyrolactone, la béta-isopentyllactone, la gamma-isopentyllactone et la delta-pentyllactone, ou bien il s'agit d'un carbonate organique choisi parmi le carbonate de propylène, le carbonate d'éthylène glycol, le carbonate de 1,2-butanediol, le carbonate de 1,3-butanediol, le carbonate de 1,2-pentanediol, et le carbonate de 1,3-pentanediol, ou bien il s'agit d'un ester choisi parmi des esters d'acides carboxyliques aliphatiques dérivant d'alcools ayant 1 à 10 atomes de carbone avec des acides ayant 1 à 10 atomes de carbone, et des esters phénoliques.

21. Composition selon la revendication 19 ou 20, dans laquelle l'agent durcisseur mettant en oeuvre un groupe ester fonctionnel est présent en une quantité de 5 à 40 % en poids, sur la base du poids de la résine.

22. Composition selon l'une quelconque des revendications 16 à 21, dans laquelle la résine phénolique de type résol est le produit de condensation du phénol et du formaldéhyde.

23. Composition selon l'une quelconque des revendications 16 à 22, dans laquelle la résine phénolique de type résol a un pH de 4,5 à 9,5, une teneur en des solides de la résine de 50 % à 90 % du poids de la résine et une viscosité de 0,1 à 4 Pa.s (100 à 4 000 cP) à 25°C.

24. Composition de liant, comprenant un mélange d'une résine phénolique de type résol, d'un durcisseur à base de magnésium destiné à durcir la résine et choisi parmi l'hydroxyde de magnésium et de l'oxyde de magnésium légèrement calciné ayant une surface spécifique valant au moins 10 m²/g et d'un retardateur choisi dans l'ensemble consistant en :
a) des composés qui fournissent un ion fluorure, bifluorure, citrate, tartrate, aspartate, oxalate, phosphate, glutamate, malate, iminodiacétate, iminodipropionate, amino acétate, amino propionate ou amino benzoate; et
b) un tétraalcoxy silane ayant 1 à 3 atomes de carbone dans chaque groupe alcoxy et un tétraalcoxy silane partiellement hydrolysé, comportant 1 à 3 atomes de carbone dans chaque groupe alcoxy.

25. Composition selon l'une quelconque des revendications 7 à 24, dans laquelle le retardateur est présent en une quantité de 0,05 à 5 % du poids de la résine.

26. Composition de liant selon la revendication 18, qui comprend un mélange de :
a) une résine phénolique de type résol, ayant un pH de 5 à 9, une teneur en des solides de 50 % à 80 % du poids de la résine et une viscosité de 0,25 à 3 Pa.s (250 à 3 000 cP) à 25°C;
b) de l'oxyde de magnésium légèrement calciné, présent en une quantité de 5 à 20 % du poids de la résine, et ayant une surface spécifique de 25 à 100 mètres carrés par gramme;
c) de 0,5 à 5 % , par rapport au poids de la résine, d'un retardateur choisi parmi l'aniline, une aniline substituée ayant jusqu'à un groupe N-alkyle et ayant jusqu'à deux groupes alkyles fixés sur le noyau aromatique, chaque groupe alkyle ayant 1 à 3 atomes de carbone, l'acide azélaïque, le catéchol, le dioxal, le salicylamide, l'acide salicylique, l'acide sulfanilique, l'acide m-aniline sulfonique et l'acide o-aniline sulfonique; et
d) de 5 à 40 % , par rapport au poids de la résine, d'un durcisseur mettant en oeuvre un groupe ester fonctionnel et qui est choisi palmi une lactone, un carbonate organique et un ester d'acide carboxylique.

27. Composition de liant durci, ledit liant étant constitué par, ou comprenant, à son état fluide un mélange de:
a) une résine phénolique de type résol, ayant un pH de 4,5 à 9,5, une teneur en des solides de la résine de 50 % à 90 % du poids de la résine, et une viscosité de 0,1 à 4 Pa.S (100 à 4000 cP) à 25°C;
b) un oxyde de magnésium légèrement calciné, ayant une surface spécifique valant au moins 10 m²/g et présent en une quantité suffisante pour augmenter la vitesse de durcissement de ladite résine;
c) un durcisseur mettant en oeuvre un groupe ester fonctionnel, cet agent étant présent en une quantité suffisante pour augmenter la vitesse de durcissement dudit mélange; et
d) un retardateur, composé présent en une quantité suffisante pour diminuer la solubilité du magnésium dans la résine.

28. Composition de liant durci, ledit liant étant constitué par, ou comprenant, à l'état fluide un mélange de :
a) une résine phénolique de type résol, ayant un pH de 4,5 à 9,5, une teneur en des solides de la résine de 50 % à 90 % du poids de la résine, et une viscosité de 0,1 à 4 Pa.s (100 à 4 000 cP) à 25°C;
b) un oxyde de magnésium légèrement calciné, ayant une surface spécifique valant au moins 10 m²/g et présent en une quantité suffisante pour augmenter la vitesse de durcissement de ladite résine;
c) un durcisseur mettant en oeuvre un groupe ester fonctionnel, cet agent étant présent en une quantité suffisante pour augmenter la vitesse de durcissement dudit mélange;
d) un retardateur, choisi dans l'ensemble consistant en:
a) des composés qui fournissent un anion fluorure, bifluorure, citrate, tartrate, aspartate, oxalate, phosphate, glutamate, malate, imino diacétate, iminodipropionate, amino acétate, amino propionate ou amino benzoate; et
b) un tétraalcoxy silane, ayant 1 à 3 atomes de carbone dans chaque groupe alcoxy; un tétraalcoxy silane partiellement hydrolysé, ayant 1 à 3 atomes de carbone dans chaque groupe alcoxy.

29. Composition de liant durci, ledit liant étant constitué par, ou comprenant, à son état fluide un mélange de:
a) une résine phénolique de type résol ayant un pH de 4,5 à 9,5, une teneur en des solides de la résine de 50 % à 90% du poids de la résine, et une viscosité de 0,1 à 4 Pa.S (100 à 4 000 cP) à 25°C;
b) un oxyde de magnésium légèrement calciné, ayant une surface spécifique valant au moins 10 m²/g, présent en une quantité suffisante pour augmenter la vitesse de durcissement de ladite résine;
c) un durcisseur mettant en oeuvre un groupe ester fonctionnel, cet agent étant présent en une quantité suffisante pour augmenter la vitesse de durcissement dudit mélange; et
d) un retardateur, composé choisi parmi l'aniline, une aniline substituée ayant jusqu'à un groupe N-alkyle et ayant jusqu'à deux groupes alkyles sur le noyau aromatique, chaque groupe alkyle ayant 1 à 3 atomes de carbone, l'acide azélaïque, le catéchol, le glyoxal, le salicylamide, l'acide salicylique, l'acide sulfanylique, l'acide m-aniline sulfonique et l'acide o-aniline sulfonique.

30. Composition selon l'une quelconque des revendications 27 à 29, dans laquelle la résine est préparée par condensation du phénol et du formaldéhyde.

31. Composition de liant thermiquement durci, ledit liant étant constitué par, ou comprenant, à son état fluide un mélange de :
a) une résine phénolique de type résol ayant un pH de 4,5 à 9,5, une teneur en des solides de la résine de 50 % à 90 % du poids de la résine, et une viscosité de 0,1 à 4 Pa.S (100 à 4 000 cP) à 25°C.
b) un oxyde de magnésium légèrement calciné, ayant une surface spécifique valant au moins 10 m²/g, présent en une quantité suffisante pour augmenter la vitesse de durcissement de ladite résine;
c) un agent de durcissement mettant en oeuvre un groupe fonctionnel ester, cet agent étant présent en une quantité suffisante pour augmenter la vitesse de durcissement dudit mélange; et
d) un retardateur, composé présent en une quantité suffisante pour diminuer la solubilité du magnésium dans la résine.

32. Composition de liant thermiquement durci, ledit liant étant constitué par, ou comprenant, à son état fluide un mélange de :
a) une résine phénolique de type résol ayant un pH de 4,5 à 9,5, ayant une teneur en des solides de la résine de 50 % à 90 % du poids de la résine, et ayant une viscosité de 0,1 à 4 Pa.S (100 à 4 000 cP) à 25°C.
b) un oxyde de magnésium légèrement calciné, ayant une surface spécifique valant au moins 10 m²/g, présent en une quantité suffisante pour augmenter la vitesse de durcissement de ladite résine;
c) un agent de durcissement mettant en jeu un groupe ester fonctionnel, cet agent étant présent en une quantité suffisante pour augmenter la vitesse de durcissement dudit mélange; et
d) un retardateur, composé choisi dans l'ensemble formé par:
i) des composés qui fournissent un ion fluorure, bifluorure, citrate, tartrate, aspartate, oxalate, phosphate, glutamate, malate, iminodiacétate, iminodipropionate, aminoacétate, aminopropionate ou aminobenzoate; et
ii) un tétraalcoxy silane ayant 1 à 3 atomes de carbone dans chaque groupe alcoxy; et un tétraalcoxy silane partiellement hydrolysé, ayant 1 à 3 atomes de carbone dans chaque groupe alcoxy.

33. Composition de liant thermiquement durci, ledit liant étant constitué par, ou comprenant, à son état fluide un mélange de :
a) une résine phénolique de type résol, ayant un pH de 4,5 à 9,5, une teneur en des solides de la résine de 50 % à 90 % du poids de la résine, et une viscosité de 0,1 à 4 Pa.s (de 100 à 4000 cP) à 25°C.
b) un oxyde de magnésium légèrement calciné, ayant une surface spécifique valant au moins 10 m²/g, présent en une quantité suffisante pour augmenter la vitesse de durcissement de la dite résine;
c) un agent de durcissement mettant en jeu un groupe ester fonctionnel, cet agent étant présent en une quantité suffisante pour augmenter la vitesse de durcissement dudit mélange; et
d) un retardateur, choisi parmi l'aniline, une aniline substituée ayant jusqu'à un groupe N-alkyle et jusqu'à deux groupes alkyles sur le noyau aromatique, chaque groupe alkyle comportant 1 à 3 atomes de carbone, l'acide azélaïque, le catéchol, le glyoxal, le salicylamide, l'acide salicylique, l'acide sulfanilique, l'acide m-aniline sulfonique et l'acide o-aniline sulfonique.

34. Procédé de préparation d'une composition obtenue en lots bruts, ce procédé comprenant le mélangeage d'une matière d'agrégat avec une quantité de la composition de liant selon l'une quelconque des revendications 16 à 26 suffisante pour lier ledit agrégat alors du durcissement.

35. Procédé selon la revendication 34, dans lequel l'agrégat est choisi parmi de l'alumine, de la silice et leurs mélanges.

36. Procédé selon la revendication 34 ou 35, dans lequel le mélange comprend également un silane à groupes organiques fonctionnels, présent en une quantité suffisante pour améliorer l'adhérence entre la résine et l'agrégat.

37. Procédé pour lier des particules abrasives à une matière de support, qui comprend :
a) le revêtement d'une matière de support par un liant comprenant un mélange d'une résine phénolique de type résol, d'oxyde de magnésium légèrement calciné ayant une surface spécifique valant au moins 10 m²/g, présent en une quantité suffisante pour augmenter la vitesse de durcissement de ladite résine, et d'un retardateur, composé présent en une quantité suffisante pour diminuer la solubilité du magnésium dans la résine; et
b) le placement de particules abrasives sur ledit revêtement pour produire une matière de support chargée.

38. Procédé selon la revendication 37, dans lequel la matière de support chargée est chauffée à une température de 80°C à 100°C (176°F à 212°F) pendant une période de temps suffisante pour donner un revêtement partiellement durci qui n'est pas collant au toucher.

39. Procédé selon l'une des revendications 37 ou 38, dans lequel le composé retardateur est choisi dans l'ensemble consistant en :
a) des composés qui fournissent un anion fluorure, bifluorure, citrate, tartrate, aspartate, oxalate, phosphate, glutamate, malate, iminodiacétate, iminodipropionate, amino acétate, aminopropionate ou aminobenzoate; et
b) un tétraalcoxy silane ayant 1 à 3 atomes de carbone dans chaque groupe alcoxy; un tétraalcoxy silane partiellement hydrolysé et comportant 1 à 3 atomes de carbone dans chaque groupe alcoxy; et de la mélamine.

40. Procédé pour lier des particules abrasives à une matière de support, ce procédé comprenant :
a) le revêtement d'une matière de support par un liant comprenant un mélange d'une résine phénolique de type résol, d'oxyde de magnésium légèrement calciné ayant une surface spécifique valant au moins 10 m²/g, présent en une quantité suffisante pour élever la vitesse de durcissement de ladite résine, et d'un retardateur, composé choisi parmi l'aniline, une aniline substituée comportant jusqu'à un groupe N-alkyle et jusqu'à deux groupes alkyles sur le noyau aromatique, chaque groupe alkyle ayant 1 à 3 atomes de carbone, l'acide azélaïque, le catéchol, le glyoxal , le salicylamide, l'acide salicylique, l'acide sulfanilique, l'acide m-aniline sulfonique et l'acide o-aniline sulfonique; et
b) le placement de particules sur ledit revêtement pour produire une matière de revêtement chargée.

41. Procédé selon l'une quelconque des revendications 37 à 40, dans lequel la résine est le produit de la condensation du phénol et du formaldéhyde.

42. Procédé selon l'une quelconque des revendications 37 à 41, dans lequel le mélange contient également un agent de durcissement mettant en oeuvre un groupe ester fonctionnel, cet agent étant présent en une quantité suffisante pour élever la vitesse de durcissement du mélange.

43. Procédé pour produire un abrasif revêtu, qui comprend :
a) le revêtement d'une matière de support par un liant comprenant un mélange de (1) une résine phénolique de type résol, (2) de l'oxyde de magnésium légèrement calciné ayant une surface spécifique valant au 10 m²/g, cet oxyde étant présent en une quantité suffisante pour élever la vitesse de durcissement de ladite résine; (3) un retardateur, composé présent en une quantité suffisante pour diminuer la solubilité du magnésium dans la résine; et (4) un agent de durcissement, mettant en oeuvre un groupe ester fonctionnel et présent en une quantité suffisante pour élever la vitesse de durcissement dudit mélange;
b) le placement de particules abrasives sur ledit revêtement pour produire une matière de revêtement chargée.
c) le chauffage de la matière de support chargée, à une température de 76°C à 100°C (170°F à 212 °F) pendant une période de temps suffisante pour donner un revêtement partiellement durci qui n'est pas collant au toucher;
d) application d'un second revêtement, par-dessus ledit revêtement partiellement durci, ce second revêtement comprenant un liant indiqué au paragraphe "a)" ci-dessus et jusqu'à 100 % en poids d'une charge, sur la base du poids de la résine; et
e) le durcissement de la résine à une température de 80° à 130°C (176°F à 266°F).

44. Procédé selon la revendication 43, dans lequel le composé retardateur est choisi dans l'ensemble consistant en :
i) des composés qui fournissent un anion fluorure, bifluorure, citrate, tartrate, aspartate, oxalate, phosphate, glutamate, malate, iminodiacétate, iminodipropionate, aminoacétate, aminopropionate ou aminobenzoate; et
ii) un tétraalcoxy silane, ayant 1 à 3 atomes de carbone dans chaque groupe alcoxy; et un tétraalcoxy silane partiellement hydrolysé, ayant 1 à 3 atomes de carbone dans chaque groupe alcoxy.

45. Procédé pour préparer un abrasif revêtu, qui comprend :
a) le revêtement d'une matière de support avec un liant comprenant un mélange de (1) une résine phénolique de type résol, (2) de l'oxyde de magnésium légèrement calciné ayant une surface spécifique valant au moins 10 m²/g, cet oxyde étant présent en une quantité suffisante pour élever la vitesse de durcissement de ladite résine, (3) un retardateur, composé choisi parmi l'aniline, une aniline substituée ayant jusqu'à un groupe N-alkyle et jusqu'à deux groupes alkyles sur le noyau aromatique, chaque groupe alkyle ayant 1 à 3 atomes de carbone, l'acide azélaïque, le catéchol, le glyoxal, le salicylamide, l'acide salicylique, l'acide sulfanilique, l'acide m-aniline sulfonique et l'acide o-aniline, sulfonique et (4) un agent de durcissement mettant en oeuvre un groupe ester fonctionnel, cet agent étant présent en une quantité suffisante pour élever la vitesse de durcissement dudit mélange;
b) le placement de particules abrasives sur ledit revêtement pour produire une matière de support chargée;
c) la soumission de la matière de support chargée à un chauffage effectué à une température de 76° à 100°C (170°F à 212 °F) pendant une période de temps suffisante pour donner un revêtement partiellement durci qui n'est pas collant au toucher;
d) l'application d'un second revêtement, par-dessus ledit revêtement partiellement durci, ce second revêtement comprenant un liant tel qu'indiqué au paragraphe "a)" ci-dessus et jusqu'à 100 % en poids d'une charge, sur la base du poids de la résine; et
e) le durcissement de la résine à une température d'environ 80° à 130°C (176°F à 266°F).

46. Procédé selon l'une quelconque des revendications 43 à 45, dans lequel la résine phénolique de type résol est le produit de la condensation du phénol et de du formaldéhyde, le rapport molaire du phénol au formaldéhyde se situant entre 1:1 et 1:2,2; la résine a un pH de 5 à 9,5, une teneur en des solides de 50 % à 80 % du poids de ladite résine, une viscosité de 0,2 à 4 Pa.s (200 à 4 000 cP) à 25°C, et une teneur en eau de 5 % à 20 % du poids de la résine, la quantité de l'oxyde de magnésium va de 2 % à 35 % du poids de la résine et cet oxyde a une surface spécifique valant au moins 10 m²/g, la quantité de l'agent de durcissement mettant en oeuvre un groupe ester fonctionnel se situe entre 10 % et 25 % du poids de la résine, et la quantité du retardateur varie entre 0,05 % et 5 % du poids de la résine.

47. Procédé selon l'une quelconque des revendications 43 à 46, dans lequel la charge est du carbonate de calcium présent en une quantité de 50 % à 90 % du poids de la résine.

48. Procédé pour produire une composition de liant, qui comprend le mélangeage :
a) d'une résine phénolique de type résol, ayant un pH de 4,5 à 9,5, une teneur en des solides de la résine de 50 % à 90 % du poids de la résine, et une viscosité de 0,1 à 4 Pa.s (100 à 4 000 cP) à 25°C;
b) un durcisseur à base d'un oxyde de magnésium légèrement calciné, ce durcisseur ayant une surface spécifique valant au moins 10 m²/g et étant présent en une quantité suffisante pour augmenter la vitesse de durcissement de ladite résine;
c) un agent de durcisement mettant en oeuvre un groupe ester fonctionnel, cet agent étant présent en une quantité suffisante pour élever la vitesse de durcissement de ladite composition;
d) un retardateur, composé présent en une quantité suffisante pour diminuer la solubilité du magnésium dans la résine; et
e) un composé contenant du calcium, et qui est choisi dans l'ensemble consistant en de l'oxyde de calcium, de l'hydroxyde de calcium et de la dolomite calcinée, la quantité dudit composé de calcium dans le mélange étant une quantité mineure par rapport à l'oxyde de magnésium.

49. Procédé selon la revendication 48, dans lequel la quantité du composé de calcium n'excède pas environ un quart de la quantité de l'oxyde de magnésium, et ledit retardateur est choisi dans l'ensemble consistant en :
a) des composés qui fournissent un anion fluorure, bifluorure, citrate, tartrate, aspartate, oxalate, phosphate, glutamate, malate, imino diacétate, imino dipropionate, amino acétate, amino propionate ou amino benzoate; et
b) un tétraalcoxy silane ayant 1 à 3 atomes de carbone dans chaque groupe alcoxy; et un tétraalcoxy silane partiellement hydrolysé, ayant 1 à 3 atomes de carbone dans chaque groupe alcoxy.

50. Procédé pour préparer une composition de liant, qui comprend le mélangeage :
a) d'une résine phénolique de type résol, ayant un pH de 4,5 à 9,5, une teneur en des solides de 50 % à 90 % du poids de la résine, et une viscosité de 0,1 à 4 Pa.s (100 à 4 000 Cp) à 25°C;
b) un durcisseur à base d'un oxyde de magnésium légèrement calciné ayant une surface spécifique valant au moins 10 m²/g, ce durcisseur étant présent en une quantité suffisante pour augmenter la vitesse de durcissement de ladite résine;
c) un agent de durcisseur mettant en oeuvre un groupe ester fonctionnel, cet agent étant présent en une quantité suffisante pour élever la vitesse de durcisement de ladite composition;
d) un retardateur, composé choisi parmi l'aniline, une aniline substituée ayant jusqu'à un groupe N-alkyle et jusqu'à deux groupes alkyles sur le noyau aromatique, chaque groupe alkyle comportant 1 à 3 atomes de carbone, l'acide azélaïque, le catéchol, le glyoxal, le salicylamide, l'acide salicylique, l'acide sulfanilique, l'acide m-aniline sulfonique et l'acide o-aniline sulfonique; et
e) un composé contenant du calcium, composé choisi dans l'ensemble consistant en l'oxyde de calcium, l'hydroxyde de calcium et de la dolomite calcinée, la quantité de ce composé de calcium dans le mélange étant une quantité mineure par rapport à l'oxyde de magnésium.

51. Procédé pour préparer une composition de résine phénolique de type résol et une durée étendue de travail ou de mise en oeuvre possibles, ce procédé comprenant le mélangeage :
a) d'une résine phénolique de type résol, ayant un pH de 4,5 à 9,5, une teneur en des solides de 50 % à 90 % du poids de la résine, et une viscosité de 0,1 à 4 Pa.s (100 à 4 000 cP) à 25°C;
b) de 5 % à 50 %, du poids de la résine, d'oxyde de magnésium légèrement calciné ayant différentes surfaces spécifiques, selon un rapport d'une partie de cet oxyde de magnésium ayant une surface spécifique valant au moins 50 m²/g de 0,5 pour 4 parties de cet oxyde de magnésium ayant une surface spécifique de 10 à 25 m²/g; et
c) de 0,05 à 5 % en poids, sur la base du poids de la résine, d'un composé retardateur, qui diminue la solubilité du magnésium dans la résine.

52. Procédé selon la revendication 50, dans lequel une partie de l'oxyde de magnésium a une surface spécifique valant au moins 50 m²/g et une à trois parties a ou ont une surface spécifique valant de 10 à 25 m²/g, et ledit retardateur est un composé choisi dans l'ensemble consistant en :
1) un composé qui fournit un anion fluorure, bifluorure, citrate, tartrate, aspartate, oxalate, phosphate, glutamate, malate, imino diacétate, imino dipropionate, amino acétate, aminopropionate et aminobenzoate;
2) un tétraalcoxy silane ayant 1 à 3 atomes de carbone dans chaque groupe alcoxy; et un tétraalacoxy silane partiellement hydrolysé, ayant 1 à 3 atomes de carbone dans chaque groupe alcoxy.

53. Procédé pour préparer une composition de résine phénolique de type résol ayant une durée étendue de travail ou de mise en oeuvre possibles, le procédé comprenant le mélangeage :
a) d'une résine phénolique de type résol, ayant un pH de 4,5 à 9,5, une teneur en des solides de 50 % à 90 % du poids de la résine, et une viscosité de 0,1 à 4 Pa.s (100 à 4 000 cP) à 25°C;
b) de 5 % à 50 %, par rapport au poids de la résine, d'oxyde de magnésium légèrement calciné ayant différentes surfaces spécifiques, selon un rapport d'une partie en poids dudit oxyde de magnésium ayant une surface spécifique valant au moins 50 m²/g et de 1 à 3 parties dudit oxyde de magnésium ayant une surface spécifique valant 10 à 25 m²/g; et
c) de 0,05 % à 5 % en poids, par rapport au poids de la résine, d'un retardateur, composé choisi parmi l'aniline, une aniline substituée ayant jusqu'à un groupe N-alkyle et ayant jusqu'à deux groupes alkyles sur le noyau aromatique, chaque groupe alkyle comportant 1 à 3 atomes de carbone, l'acide azélaïque, le catéchol, le glyoxal, le salicylamide, l'acide salicylique, l'acide sulfanilique, l'acide m-aniline sulfonique et l'acide o-aniline sulfonique.
